(19) Europäisches Patentamt
European Patent Office
Office européen des brevets

(11) **EP 4 629 480 A1**

(12) **EUROPEAN PATENT APPLICATION**
published in accordance with Art. 153(4) EPC

(43) Date of publication:
08.10.2025 Bulletin 2025/41

(21) Application number: 23897488.5

(22) Date of filing: 14.11.2023

(51) International Patent Classification (IPC):
*H02J 50/60* (2016.01) *H02J 50/12* (2016.01)
*H02J 50/80* (2016.01)

(52) Cooperative Patent Classification (CPC):
**H02J 50/12; H02J 50/60; H02J 50/80**

(86) International application number:
**PCT/JP2023/040995**

(87) International publication number:
**WO 2024/116837 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 JP 2022191548**

(71) Applicant: **CANON KABUSHIKI KAISHA
Tokyo 146-8501 (JP)**

(72) Inventor: **SHIMURA Hajime
Tokyo 146-8501 (JP)**

(74) Representative: **Canon Europe Limited
European Intellectual Property Group
4 Roundwood Avenue
Stockley Park
Uxbridge UB11 1AF (GB)**

(54) **POWER-TRANSMITTING DEVICE, POWER-RECEIVING DEVICE, WIRELESS POWER TRANSFER SYSTEM, METHOD FOR CONTROLLING POWER-TRANSMITTING DEVICE, AND STORAGE MEDIUM**

(57) **In** order to execute power transmission control and power reception control on the basis of a plurality of state detection results related to a power transmitting apparatus and a power receiving apparatus, a wireless power transfer system comprises a power transmitting apparatus 100 and a power receiving apparatus 200. The power transmitting apparatus 100 wirelessly transfers power to the power receiving apparatus 200 by using a power transmitting antenna. The power transmitting apparatus 100 executes a calibration process that is based on measurement of a physical quantity and executes state detection using a measurement value. The power transmitting apparatus 100 determines whether to request execution of the calibration process again, using information acquired when the measurement process is executed through first state detection and information acquired when the measurement process is executed through second state detection later than the first state detection, and reports the determined information to the power receiving apparatus 200.

FIG. 16

## Description

[Technical Field]

The present disclosure relates to a power transmitting apparatus, a power receiving apparatus, a wireless power transfer system, a method for controlling a power transmitting apparatus, and a storage medium.

[Background Art]

In a wireless power transfer system, a power transmitting apparatus is capable of wirelessly transmitting power to a power receiving apparatus placed on a charging stand or the like. When it is determined that an abnormal state has occurred, a power transmitting apparatus or a power receiving apparatus executes control in which deterioration of power transmission efficiency, generation of heat, and the like are prevented from occurring.

Patent Document 1 discloses a process for detecting a foreign object which has entered between a power transmitting coil and a power receiving coil and a process for detecting a positional deviation between the power transmitting coil and the power receiving coil.

[Citation List]

[Patent Document]

[Patent Document 1]

[Patent Document 1] Japanese Patent Laid-Open No. 2017-38509

[Summary of Invention]

[Technical Problem]

In the technique in the related art, a method for determining, by a power transmitting apparatus, appropriate control on the basis of a plurality of state detection results and reporting a plurality of pieces of information regarding the control to a power receiving apparatus is not established.

An object of the present disclosure is to provide a technique which is capable of executing power transmission control and power reception control that are based on a plurality of state detection results related to a power transmitting apparatus and a power receiving apparatus.

[Solution to Problem]

A power transmitting apparatus of the present disclosure includes a power transmitting means for wirelessly transferring power to a power receiving apparatus using a power transmitting antenna, a communication means for communicating with the power receiving apparatus, a detection means for executing a measurement process for a physical quantity related to the power transmitting apparatus and for executing state detection of the power transmitting apparatus; and a control means for controlling the power transmitting means and for executing control related to the measurement process. The control means executes, in a case where the power receiving apparatus determines to request the power transmitting apparatus to execute a measurement process again from information acquired when first state detection that is based on the measurement process is executed and information acquired when second state detection that is based on the measurement process which is executed after the measurement process is executed, using the communication means, control to transmit to the power receiving apparatus of a signal including information regarding state detection results related to the first or second state detection and a signal including information related to a request to execute the measurement process again..

[Advantageous Effects of Invention]

According to the present disclosure, it is possible to provide a technique which is capable of executing power transmission control and power reception control that are based on a plurality of state detection results related to a power transmitting apparatus and a power receiving apparatus.

[Brief Description of Drawings]

FIG. 1 is a diagram showing an example of a configuration of a wireless power transfer system.
FIG. 2 is a diagram showing an example of a configuration of a power transmitting apparatus.
FIG. 3 is a diagram showing an example of a configuration of a power receiving apparatus.
FIG. 4 is an explanatory diagram for explaining an example of a threshold value setting method in state detection using a Power Loss method.
FIGS. 5A and 5B are explanatory diagrams of a Q value measurement method.
FIG. 6 is a block diagram showing an example of a functional configuration of a control unit of a power transmitting apparatus.
FIG. 7 is a flowchart for explaining an example of a process of the power transmitting apparatus.
FIG. 8 is a flowchart for explaining an example of a process of a power receiving apparatus.
FIG. 9 is an explanatory diagram of state detection through a waveform decay method.
FIG. 10 is a diagram showing an example of a process for wirelessly transferring power.
FIG. 11 is an explanatory diagram showing an example of a threshold value setting method in state detection through a waveform decay method.

FIGS. 12(A) and 12(B) are explanatory diagrams showing examples of coupling-state-indicator measurement methods of a power transmitting antenna and a power receiving antenna.

FIG. 13 is an explanatory diagram showing an example of a threshold value setting method in state detection through a coupling-state-indicator measurement method.

FIG. 14 is a flowchart for explaining an example of a process of a power transmitting apparatus in a second embodiment.

FIG. 15 is a flowchart for explaining an example of a process of a power receiving apparatus in the second embodiment.

FIG. 16 is a sequence diagram for explaining an example of a process of the power transmitting apparatus and the power receiving apparatus.

FIG. 17 is a flowchart for explaining an example of a process of a power transmitting apparatus in a third embodiment.

FIG. 18 is a flowchart for explaining an example of processing following FIG. 17.

FIG. 19 is a sequence diagram for explaining an example of a process of the power transmitting apparatus and the power receiving apparatus in the third embodiment.

[Description of Embodiments]

The present disclosure will be described in detail below with reference to the accompanying drawings. In the embodiment, a wireless charging system to which the wireless power transfer system is applied is shown. As an example, wireless power transfer that is based on a standard established by Wireless Power Consortium that is a standardization organization for wireless charging (hereinafter referred to as a "WPC standard") will be explained.

[First embodiment]

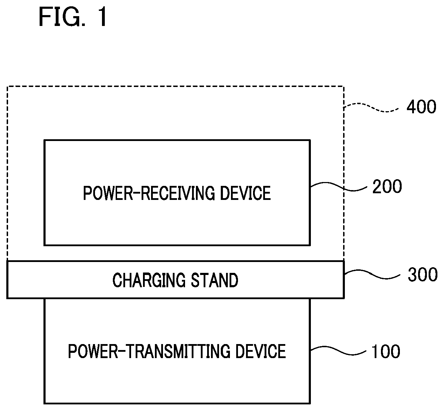

An embodiment will be described with reference to FIGS. 1 to 13. FIG. 1 is a diagram showing an example of a configuration of a wireless charging system.

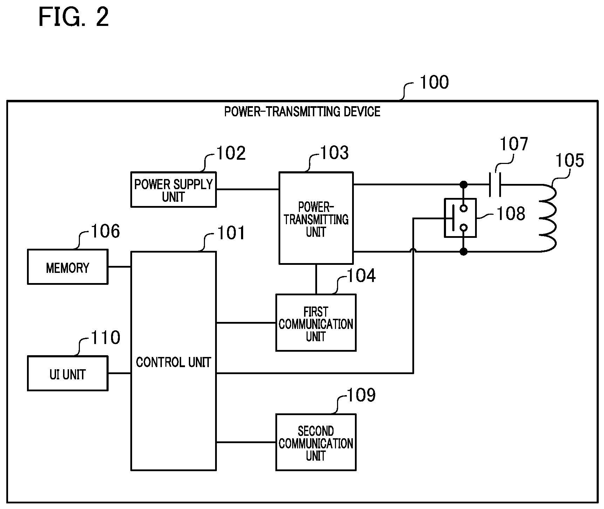

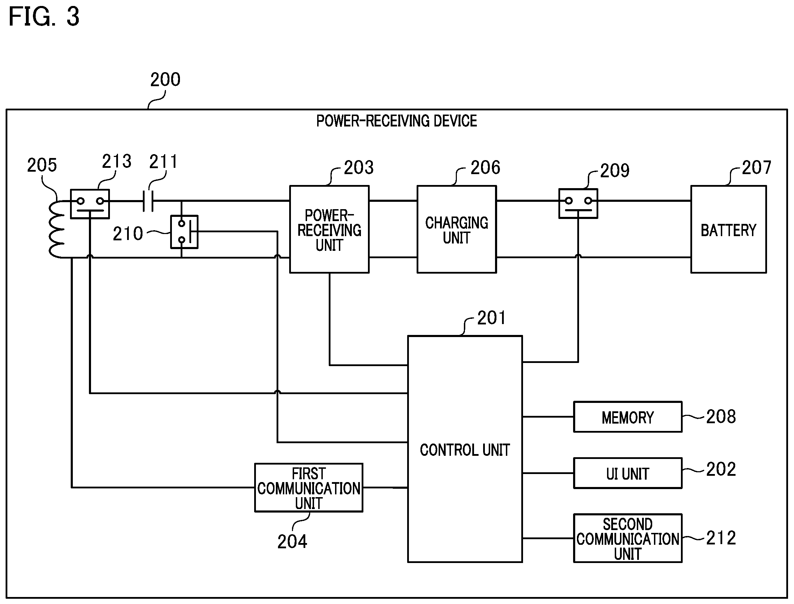

The system includes a power transmitting apparatus 100, a power receiving apparatus 200, and a charging stand 300. In the following description, for simplicity of notation, the power receiving apparatus 200 may be referred to as a "RX" and the power transmitting apparatus 100 may be referred to as a "TX" in some cases. The detailed configuration of the TX and the RX will be described later with reference to FIGS. 2 and 3.

The RX is an electronic device which receives power from the TX and charges a built-in battery thereof while being placed on the charging stand 300. The TX is an electronic device which wirelessly transmits power to the RX placed on the charging stand 300.

Since the charging stand 300 constitutes a part of the TX, hereinafter, when the RX is "placed on the charging stand 300," it may be said that the RX is "placed on the TX" in some cases. A spatial range in which the RX can receive power from the TX is shown diagrammatically by the range of a dotted line frame 400 in FIG. 1.

The RX and the TX may have a function of executing an application other than the wireless charging function. For example, the RX is a smartphone and the TX is an accessory device for charging the battery of the RX. Here, the present invention is not limited to this example.

An example of a configuration of the power transmitting apparatus 100 will be described below with reference to FIG. 2. FIG. 2 is a functional block diagram showing an example of a configuration of the power transmitting apparatus 100 (TX). The TX includes a control unit 101, a power supply unit 102, a power-transmitting unit 103, a first communication unit 104, a power transmitting antenna (power transmitting coil) 105, a memory 106, a resonant capacitor 107, a switch unit 108, a second communication unit 109, and a user interface unit 110.

Hereinafter, the user interface is abbreviated as a "UI." Although each functional block element is referred to as a separate entity in FIG. 2, any plurality of functional block elements may be implemented in the same chip.

The control unit 101 controls the entire TX by executing a control program stored in the memory 106. Furthermore, the control unit 101 executes power transmission control including communication for device authentication in the TX.

Furthermore, the control unit 101 can execute control to execute applications other than wireless power transfer. The control unit 101 includes one or more processors such as a central processing unit (CPU) or a microprocessor unit (MPU).

Alternatively, the control unit 101 may be configured of hardware such as an application specific integrated circuit (ASIC).

In addition, the control unit 101 may be configured to include an array circuit such as a field programmable gate array (FPGA) compiled to execute a predetermined process. The control unit 101 can execute a process for storing information to be stored in the memory 106 in the course of execution of various processes and a time measurement process using a timer (not shown).

The power supply unit 102 supplies power to each of the functional block elements. The power supply unit 102 includes, for example, a power supply connection circuit to a commercial power source and a battery. The battery is charged with power supplied from the commercial power source.

The power-transmitting unit 103 converts direct current (DC) power or alternating current (AC) power input from the power supply unit 102 into AC power in a frequency band used for wirelessly transferring power and inputs the AC power to the power transmitting antenna 105, thereby generating electromagnetic waves for reception by the RX.

For example, the power-transmitting unit 103 includes an inverter and converts the DC voltage supplied by the power supply unit 102 into an AC voltage using a switching circuit with a half-bridge or full-bridge configuration. The power-transmitting unit 103 includes a plurality of field effect transistors (FETs) which form a bridge and a gate driver which controls the ON/OFF of the plurality of FETs.

The power-transmitting unit 103 controls an intensity of electromagnetic waves (transmitted power) to be output by adjusting a voltage (power-transmitting voltage) or a current (power-transmitting current) or both the voltage and the current input to the power transmitting antenna 105.

An intensity of the electromagnetic waves (an intensity of the transmitted power) is controlled using an amount of the power-transmitting voltage or the power-transmitting current. Alternatively, the power-transmitting unit 103 controls the intensity of electromagnetic waves (transmitted power) to be output by adjusting a voltage or a current or both the voltage and the current input to the inverter possessed by the power-transmitting unit 103. The voltage input to the inverter is hereinafter referred to as an "inverter input voltage."

In addition, the current input to the inverter is hereinafter referred to as an "inverter input current." The intensity of the electromagnetic waves is controlled using the amount of the inverter input voltage or the inverter input current. Alternatively, the power-transmitting unit 103 controls the intensity of the electromagnetic waves (transmitted power) to be output by adjusting a voltage or a current or both the voltage and the current output from the inverter possessed by the power-transmitting unit 103.

A voltage output from the inverter is hereinafter referred to as an "inverter output voltage." Furthermore, a current output from the inverter is hereinafter referred to as an "inverter output current." The intensity of the electromagnetic waves is controlled using the amount of the inverter output voltage or the inverter output current.

The power-transmitting unit 103 executes output control of the power of the AC frequency electromagnetic waves on the basis of an instruction signal from the control unit 101 such as starting or stopping of transmitting power using the power transmitting antenna 105 or controlling the intensity of the electromagnetic waves to be output.

Also, it is assumed that the power-transmitting unit 103 has a power supply capacity sufficient to output 15 watts (W) of power to a charging unit (reference numeral 206 in FIG. 3) of the power receiving apparatus 200 which complies with the WPC standard.

The first communication unit 104 is connected to the control unit 101 and the power-transmitting unit 103 and executes communication for power transmission control that is based on the WPC standard between the first communication unit 104 and the RX. The first communication unit 104 executes frequency shift keying of the electromagnetic waves output from the power transmitting antenna 105 and transmits information to the RX to execute communication.

In addition, the first communication unit 104 demodulates the electromagnetic waves modulated by the RX and transmitted from the power transmitting antenna 105 to acquire the information transmitted by the RX. The communication using the first communication unit 104 is executed by superimposing a communication signal on the electromagnetic waves transmitted from the power transmitting antenna 105.

The memory 106 can store information regarding the states of the TX and the RX in addition to a control program. The information regarding the states of the TX and the RX includes a transmitted power value, a received power value, and the like.

The information regarding the state of the TX is acquired using the control unit 101. The information regarding the state of the RX is acquired using an RX control unit (reference numeral 201 in FIG. 3) and can be received using the first communication unit 104 or the second communication unit 109 which will be described later.

The switch unit 108 is connected in parallel to a series circuit of the resonant capacitor 107 and the power transmitting antenna 105. The control unit 101 transmits a control signal to the switch unit 108 to execute ON/OFF control thereof.

The power transmitting antenna 105 is connected to the resonant capacitor 107. When the switch unit 108 is turned on and short-circuited using a control signal from the control unit 101, the power transmitting antenna 105 and the resonant capacitor 107 form a series resonant circuit and resonate at a specific frequency fA.

At this time, a current flows through a closed circuit formed of the power transmitting antenna 105, the resonant capacitor 107, and the switch unit 108. On the other hand, if the switch unit 108 is turned off using a control signal from the control unit 101 and the circuit is in an open state, power is supplied from the power-transmitting unit 103 to the power transmitting antenna 105 and the resonant capacitor 107.

The second communication unit 109 is connected to the control unit 101 and executes communication between the second communication unit 109 and the RX using a standard different from the WPC standard. For example, the second communication unit 109 communicates with the RX (second communication unit 212 in FIG. 3) using an antenna different from the power transmitting antenna 105.

A wireless local area network (LAN), Bluetooth (registered trademark) Low Energy (BLE), and near field communication (NFC) are provided as examples.

A frequency band used when power is transmitted from the power transmitting antenna 105 is different from a frequency band used by the second communication unit 109 for communication.

With regard to communication between the TX and the RX, the TX may selectively use any one of a plurality of communication standards to communicate with the RX. A communication form in which a plurality of communications which will be shown below are selectively utilized is possible.

- Communication that is based on a first standard (WPC standard) executed between the first communication unit 104 of the TX and the first communication unit 204 of the RX (FIG. 3).
- Communication that is based on a second standard (standard other than the WPC standard) executed between the second communication unit 109 of the TX and the second communication unit 212 of the RX (FIG. 3).

A user interface (UI) unit 110 is connected to the control unit 101 and executes various outputs to a user. The various outputs include screen display, blinking or color changes of light emitting diodes (LEDs), audio output through a speaker, vibrations of the TX main body, and the like. The UI unit 110 is realized using a liquid crystal panel, a speaker, a vibration motor, or the like.

An example of a configuration of the power receiving apparatus 200 will be described below with reference to FIG. 3. FIG. 3 is a block diagram showing an example of a configuration of the power receiving apparatus 200 (RX). The RX has a control unit 201, a UI unit 202, a power-receiving unit 203, a first communication unit 204, a power receiving antenna 205, a charging unit 206, a battery 207, and a memory 208.

The RX further includes a first switch unit 209, a second switch unit 210, a resonant capacitor 211, the second communication unit 212, and a third switch unit 213. Although the embodiment shows an example in which the functional block elements in FIG. 3 are individual elements, a plurality of the functional block elements may be realized as one hardware module.

The control unit 201 controls each of the functional block elements of the RX by executing a control program stored in the memory 208. Furthermore, the control unit 201 can execute control for executing applications other than wireless power transfer.

The control unit 201 includes one or more processors such as a CPU or a MPU. In addition, the control unit 201 can control the entire RX (for example, the entire smartphone) in cooperation with an operating system (OS) that it is running.

Alternatively, the control unit 201 may be configured of hardware such as an ASIC or may include an array circuit such as an FPGA compiled to execute a predetermined process. The control unit 201 stores information to be stored in the course of execution of various processes in the memory 208 and is also capable of executing a time measurement process using a timer (not shown).

The UI unit 202 is connected to the control unit 201 and executes various outputs to the user. The various outputs include screen display, blinking or color changes of an LED, audio output through a speaker, vibrations of the RX main body, and the like. The UI unit 202 is realized using a liquid crystal panel, a speaker, a vibration motor, or the like.

The power-receiving unit 203 receives, via the power receiving antenna (power receiving coil) 205, AC power (AC voltage and AC current) generated through electromagnetic induction that is based on electromagnetic waves radiated from the power transmitting antenna 105 of the TX.

Also, the power-receiving unit 203 converts AC power into a direct current (DC) or AC power of a predetermined frequency and supplies power to the charging unit 206. The charging unit 206 charges the battery 207 with electricity. The power-receiving unit 203 includes a rectifier unit (rectifier, rectifier circuit) and a voltage control unit required for supplying power to a load in RX.

The rectifier unit converts an AC voltage and an AC current received from the power transmitting antenna 105 via the power receiving antenna 205 into a DC voltage and a DC current. This DC voltage is hereinafter referred to as a "rectifier unit output voltage."

Also, this DC current is hereinafter referred to as a "rectifier unit output current." The voltage control unit converts a level of the rectifier unit output voltage to a predetermined level. The predetermined level is a DC voltage level at which the control unit 201, the charging unit 206, or the like can operate.

The power-receiving unit 203 supplies power for charging from the charging unit 206 to the battery 207. It is assumed that the power-receiving unit 203 has a power supplying capacity sufficient to output 15 watts of power to the charging unit 206.

The first communication unit 204 executes communication for power reception control that is based on the WPC standard between the first communication unit 204 and the first communication unit 104 possessed by the TX. The first communication unit 204 is connected to the power receiving antenna 205 and the control unit 201 and demodulates the electromagnetic waves input from the power receiving antenna 205 to acquire information transmitted from the TX.

The first communication unit 204 subjects the input electromagnetic waves to load modulation or amplitude modulation and superimposes a signal related to information to be transmitted to the TX on the electromagnetic waves, thereby executing communication between the first communication unit 204 and the TX.

The memory 208 stores information regarding the states of the TX and the RX or the like in addition to the control program. The information regarding the state of the RX is acquired using the control unit 201. The information regarding the state of the TX is acquired using the control unit 101 of the TX and can be received using the first communication unit 204 or the second communication unit 212.

The second communication unit 212 is connected to the control unit 201 and executes communication between the second communication unit 212 and the TX using a standard different from the WPC standard. For example, the second communication unit 212 communicates with the TX (second communication unit 109 in FIG. 2) using an antenna different from the power receiving antenna 205.

Standards other than the WPC standard are as described above, and with regard to communication between a TX and an RX, the RX can selectively use any one of a plurality of communication standards to execute communication between the RX and the TX.

A frequency band used when receiving power using the power receiving antenna 205 is different from a frequency band used for communication by the second communication unit 212.

The first switch unit 209 is provided between the charging unit 206 and the battery 207 and is controlled using the control unit 201. The first switch unit 209 has a function of controlling whether the power received by the power-receiving unit 203 is to be supplied to the battery 207 and a function of controlling an amount of a load.

When the first switch unit 209 is turned off using the control unit 201 so that the circuit is in an open state, the power received by the power-receiving unit 203 is not supplied to the battery 207. When the first switch unit 209 is turned on using the control unit 201 so that the circuit is short-circuited, the power received by the power-receiving unit 203 is supplied to the battery 207.

Although the first switch unit 209 is disposed between the charging unit 206 and the battery 207 in the example of FIG. 3, the first switch unit 209 may be disposed between the power-receiving unit 203 and the charging unit 206.

Alternatively, the first switch unit 209 may be disposed between the power-receiving unit 203 and a closed circuit formed by the power receiving antenna 205, the resonant capacitor 211, and the second switch unit 210. In this case, the first switch unit 209 has a function of controlling whether the power received by the power receiving antenna 205 is supplied to the power-receiving unit 203.

In addition, although the first switch unit 209 is referred to as one functional block element in the example of FIG. 3, the first switch unit 209 can be realized as a part of the charging unit 206 or the power-receiving unit 203.

Furthermore, the first switch unit 209 is not limited to a configuration in which it is inserted in series between the charging unit 206 and the battery 207 and may be inserted in parallel between the charging unit 206 and the battery 207.

In this case, when the first switch unit 209 is turned off using the control unit 201 so that the circuit is in an open state, the power received by the power-receiving unit 203 is supplied to the battery 207. When the first switch unit 209 is turned on using the control unit 201 so that the circuit is short-circuited, the power received by the power-receiving unit 203 is not supplied to the battery 207.

On an input side of the power-receiving unit 203, the second switch unit 210 is connected in parallel to the resonant capacitor 211. The resonant capacitor 211 is connected to the power receiving antenna 205 via the third switch unit 213.

The second switch unit 210 and the third switch unit 213 are controlled using the control unit 201. The third switch unit 213 has a function of controlling whether a terminal of the power receiving antenna 205 is in an open state.

When the third switch unit 213 is turned off using the control unit 201, the terminal of the power receiving antenna 205 is in an open state. When the third switch unit 213 is turned on using the control unit 201, the power receiving antenna 205 is connected to the power-receiving unit 203 via the resonant capacitor 211.

When the third switch unit 213 is turned on and the second switch unit 210 is turned on using the control unit 201 so that the circuit is short-circuited, the power receiving antenna 205 and the resonant capacitor 211 form a series resonant circuit and resonate at a specific frequency fB.

A current flows through a closed circuit formed by the power receiving antenna 205, the resonant capacitor 211, and the second switch unit 210 and a current does not flow through the power-receiving unit 203. Furthermore, if the second switch unit 210 is turned off and the circuit is in an open state, the power received by the power receiving antenna 205 and the resonant capacitor 211 is supplied to the power-receiving unit 203.

The present invention is not limited to the example of FIG. 3 and the second switch unit 210 may be disposed between the power receiving antenna 205 and the resonant capacitor 211. When the third switch unit 213 is turned on and the second switch unit 210 is turned on, the terminal of the power receiving antenna 205 is short-circuited. Furthermore, the third switch unit 213 may be disposed between the resonant capacitor 211 and the power-receiving unit 203.

In the system, wireless power transfer that is based on the WPC standard is executed between the power transmitting antenna 105 and the power receiving antenna 205. In the WPC standard, an amount of power guaranteed when the power receiving apparatus 200 receives power from the power transmitting apparatus 100 is specified by an power called Guaranteed Load Power (hereinafter referred to as "GP").

A value of the GP is expressed as a GP value or a GP. For example, the GP indicates a power value which guarantees an output of the power receiving apparatus 200 to a load even if the coupling between the power receiving antenna 205 and the power transmitting antenna 105 is weakened and the power transmission efficiency is reduced due to a change in a positional relationship between the power receiving apparatus 200 and the power transmitting apparatus 100.

The load of the power receiving apparatus 200 is the charging unit 206, the battery 207, or the like in FIG. 3 and the GP value corresponds to an amount of power guaranteed to be output from the power-receiving unit 203. Alternatively, the GP value corresponds to an amount of power guaranteed to be output from the rectifier unit possessed by the power-receiving unit 203.

For example, assuming that the GP value is 5 (watts (W)) and the positional relationship between the power receiving antenna 205 and the power transmitting antenna 105 changes. In this case, even if the power transmission efficiency is reduced, the power transmitting apparatus 100 executes power transmission control to be able to output 5 watts to the load of the power receiving apparatus 200.

Also, the GP is determined through negotiation executed between the power transmitting apparatus 100 and the power receiving apparatus 200. The embodiment can be applied not only to the GP but also to a configuration in which power is transferred and received at a power determined using a power transmitting apparatus and a power receiving apparatus negotiating with each other.

Also, it is assumed that, when power is transmitted from the power transmitting apparatus 100 to the power receiving apparatus 200, an object is present in the vicinity of the power transmitting apparatus 100. The object in this case is an object which can affect power transmission from the power transmitting apparatus 100 to the power receiving apparatus 200 and is a foreign object different from the power receiving apparatus 200. Electromagnetic waves used for power transmission can affect foreign objects, potentially causing them to heat up or even be destroyed.

Foreign objects in the present disclosure are, for example, paperclips and IC cards. A foreign object is an object which is neither a part of the power receiving apparatus or the product in which it is incorporated nor a part of the power transmitting apparatus or the product in which it is incorporated and which may generate heat when exposed to a power signal transmitted by a power transmitting antenna.

Power receiving apparatuss and objects which are an integral part of the product in which they are incorporated and power transmitting apparatuss and objects which are an integral part of the product in which they are incorporated are not foreign objects.

The WPC standard specifies a method for suppressing a temperature rise and destruction of a foreign object by stopping transmitting power when a foreign object is present. Specifically, the power transmitting apparatus 100 is capable of detecting the presence of a foreign object on the charging stand 300.

The Power Loss method is a method for detecting a foreign object based on the difference between the transmitted power in the power transmitting apparatus 100 and the received power in the power receiving apparatus 200. The Q value measurement method is a method for detecting a foreign object based on a change in the Quality Factor (Q-factor, quality coefficient, Q value) of the power transmitting antenna 105 (power transmitting coil) in the power transmitting apparatus 100.

Moreover, the Q value measurement method is a method for detecting a foreign object by detecting a change in the Quality Factor (Q-factor, quality coefficient, Q value) of a resonant circuit including the power transmitting antenna 105 (power transmitting coil) and the resonant capacitor 107 in the power transmitting apparatus 100.

Here, foreign objects detected by the power transmitting apparatus 100 are not limited to objects present on the charging stand 300. The power transmitting apparatus 100 is capable of detecting foreign objects located in the vicinity of the power transmitting apparatus 100.

For example, the power transmitting apparatus 100 can detect a foreign object located within a range to which power can be transmitted. Hereinafter, the quality factor of the power transmitting antenna 105 and the quality factor of the resonant circuit including the power transmitting antenna 105 and the resonant capacitor 107 will be referred to as a "quality factor related to the power transmitting antenna 105."

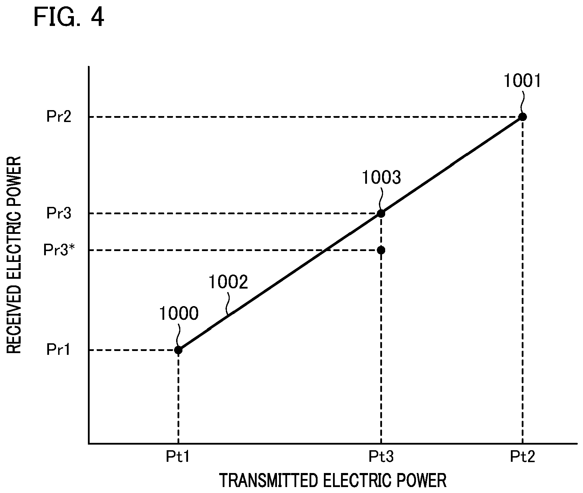

Foreign object detection that is based on the Power Loss method defined in the WPC standard will be described with reference to FIG. 4. In FIG. 4, the horizontal axis represents the transmitted power of the power transmitting apparatus 100 and the vertical axis represents the received power of the power receiving apparatus 200.

On a graph line indicated by a straight line segment 1002, a point 1000 corresponds to a first transmitted power value Pt1 and a first received power value Pr1 and a point 1001 corresponds to a second transmitted power value Pt2 and a second received power value Pr2. On the graph line, a point 1003 corresponds to a third transmitted power value Pt3 and a third received power value Pr3. The foreign object to be detected is a conductive metal piece or the like.

First, the power transmitting apparatus 100 transmits power to the power receiving apparatus 200 at the first transmitted power value Pt1 and the power receiving apparatus 200 receives power at the first received power value Pr1. Hereinafter, this state will be referred to as a "Light Load state (light load state)."

The power transmitting apparatus 100 stores the first transmitted power value Pt1. At this time, the power receiving apparatus 200 executes load control so that the power received is the minimum power. Alternatively, the power receiving apparatus 200 executes load control so that the power received is power within a predetermined range which has been determined in advance or is power which is equal to or less than a threshold value.

Here, in "power within a predetermined range which has been determined in advance" or "power which is equal to or less than a threshold value," the "power" refers to power that is approximately 10% of the Reference Power which will be described below.

Furthermore, the power receiving apparatus 200 may disconnect a load from the power receiving antenna 205 so that the power received is not supplied to the load (such as the charging unit 206 and the battery 207 in FIG. 3). Alternatively, the power receiving apparatus 200 may control the load so that a predetermined power is supplied to the load.

These can be realized by controlling the first switch unit 209. Subsequently, the power receiving apparatus 200 reports the first received power value Pr1 to the power transmitting apparatus 100. The power transmitting apparatus 100 receives a signal related to the first received power value Pr1 from the power receiving apparatus 200 and calculates the power loss between the power transmitting apparatus 100 and the power receiving apparatus 200.

The power loss at this time is Pt1-Pr1 (=Ploss1). A calibration point (hereinafter abbreviated as a "CP") 1000 indicating the correspondence between the Pt1 and the Pr1 can be generated.

Subsequently, the power transmitting apparatus 100 changes the transmitted power value to the second transmitted power value Pt2 and transmits power to the power receiving apparatus 200 and the power receiving apparatus 200 receives power at the second received power value Pr2. Hereinafter, this state will be referred to as a "connected load state (load connected state)."

The power transmitting apparatus 100 stores the second transmitted power value Pt2. At this time, the power receiving apparatus 200 executes load control so that the power received is the maximum power. Here, the "maximum power" is power of a value close to the Reference Power which will be described later.

Alternatively, the power receiving apparatus 200 executes load control so that the power received is power within a predetermined range which has been determined in advance or is power which is equal to or greater than a threshold value. For example, the power receiving apparatus 200 connects the power receiving antenna 205 to a load so that the power received is supplied to the load.

These can be realized by controlling the first switch unit 209. Subsequently, the power receiving apparatus 200 reports the second received power value Pr2 to the power transmitting apparatus 100. The power transmitting apparatus 100 receives a signal related to the second received power value Pr2 from the power receiving apparatus 200 and calculates the power loss between the power transmitting apparatus 100 and the power receiving apparatus 200.

The power loss at this time is Pt2-Pr2 (=Ploss2). It is possible to generate a CP 1001 which indicates the correspondence between the Pt2 and the Pr2.

The power transmitting apparatus 100 executes a linear interpolation process between the CP 1000 and the CP 1001 to generate a line segment 1002. The line segment 1002 shows a relationship of the transmitted power and the received power in a state in which it is detected that a foreign object is not present in the vicinity of the power transmitting apparatus 100 and the power receiving apparatus 200 (hereinafter referred to as a "first detection state").

When the power transmitting apparatus 100 transmits power at a predetermined transmitted power in the first detection state on the basis of the line segment 1002, the power receiving apparatus 200 can estimate a value of power received. For example, it is assumed that the power transmitting apparatus 100 transmits power at the third transmitted power value Pt3. In this case, the power transmitting apparatus 100 can estimate the third received power value Pr3 received by the power receiving apparatus 200 from the point 1003 on the line segment 1002 which corresponds to the Pt3.

As described above, it is possible to acquire the power loss between the power transmitting apparatus 100 and the power receiving apparatus 200 according to the load on the basis of a plurality of combinations of the transmitted power value of the power transmitting apparatus 100 and the received power value of the power receiving apparatus 200 measured while changing the load.

Furthermore, it is possible to estimate the power loss between the power transmitting apparatus 100 and the power receiving apparatus 200 according to all loads through an interpolation process in which a plurality of combinations of the transmitted power value and the received power value are used. In this way, the calibration process executed by the power transmitting apparatus 100 and the power receiving apparatus 200 in order for the power transmitting apparatus 100 to acquire a combination of the transmitted power value and the received power value is referred to as a "Calibration process for a Power Loss method."

Also, the calibration process is abbreviated as a "CAL process." The power transmitting apparatus 100 and the power receiving apparatus 200 can execute the CAL process a plurality of times. After the CAL process has been executed once, the CAL process which is executed again is hereinafter referred to as a "ReCalibration process for a Power Loss method." The ReCalibration process is also abbreviated as a "RECAL process."

It is assumed that, after the CAL process for the Power Loss method, the power transmitting apparatus 100 actually transmits power to the power receiving apparatus 200 at the third transmitted power value Pt3 and the power transmitting apparatus 100 receives a signal related to a received power value Pr3 * from the power receiving apparatus 200.

Although a signal related to the received power value Pr3* is a Received Power Data packet (mode 0) defined in the WPC standard, other messages may also be used.

Hereinafter, the Received Power Data packet (mode 0) is represented as RP0. RP0 includes a value of the received power value Pr3*. The power transmitting apparatus 100 subtracts the received power value Pr3* received from the power receiving apparatus 200 from the received power value Pr3 in the first detection state to calculate Pr3-Pr3* (=Ploss_FO).

Ploss_FO can be estimated as the power consumed by a foreign object, that is, the power loss when the foreign object is present in the vicinity of the power transmitting apparatus 100 and the power receiving apparatus 200. Hereinafter, a state in which a foreign object is detected to be present in the vicinity of the power transmitting apparatus 100 and the power receiving apparatus 200 will be referred to as a "second detection state."

In the second detection state, the power transmitting apparatus 100 compares the power loss Ploss_FO which would have been consumed by the foreign object with a predetermined threshold value. If the value of the power loss Ploss_FO exceeds the threshold value, the power transmitting apparatus 100 can assess that a foreign object is present.

Alternatively, the power transmitting apparatus 100 acquires the third received power value Pr3 in the first detection state from the power receiving apparatus 200 and calculates the power loss Pt3-Pr3 (=Ploss3) between the power transmitting apparatus 100 and the power receiving apparatus 200 in advance.

Subsequently, the power transmitting apparatus 100 acquires the received power value Pr3* from the power receiving apparatus 200 in the second detection state and calculates the power loss Pt3-Pr3* (=Ploss3*) between the power transmitting apparatus 100 and the power receiving apparatus 200 in the second detection state.

Also, the power transmitting apparatus 100 can estimate the power loss Ploss_FO using Ploss3*-Ploss3.

As described above, there are two methods for calculating Ploss_FO in the second detection state.

- First method for calculating Ploss_FO from Pr3-Pr3*.
- Second method for calculating Ploss_FO from Ploss3*-Ploss3.

Although the second method is basically described in the embodiment, the details of the embodiment are also applicable to the first method.

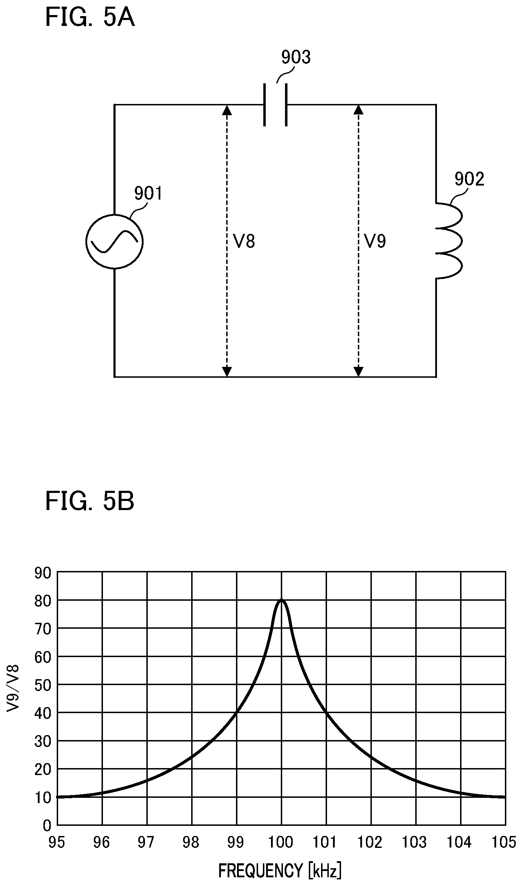

Foreign object detection that is based on the Q value measurement method defined in the WPC standard will be explained below with reference to FIG. 5. FIG. 5(A) is a schematic circuit diagram for explaining a method for measuring the Quality Factor (Q-factor, quality coefficient, Q value) using a Q value measurement method.

An AC power supply 901 is a power supply which outputs the AC power generated by the power-transmitting unit 103 of the TX. A power transmitting antenna 902 corresponds to the power transmitting antenna 105 and a capacitor 903 corresponds to the resonant capacitor 107.

The power transmitting antenna 902 and the capacitor 903 are connected in series. A voltage value V8 is a voltage value of a predetermined frequency for operating the wireless power transfer system which is generated by the power-transmitting unit 103. A voltage value V9 is a voltage value applied to the power transmitting antenna 902.

Here, it is assumed that the TX can change a frequency related to the voltage value. Furthermore, the voltage values V8 and V9 are voltage values that the TX measures when the TX transmits an Analog Ping (hereinafter referred to as an "AP") or a Digital Ping (hereinafter referred to as a "DP") to the RX.

Since the voltage values V8 and V9 are AC voltage values, root mean square (RMS) values thereof may be used.

FIG. 5(B) shows, as an example of a measurement result of V9/V8 with respect to a frequency, characteristics having a peak at 100 kHz. The horizontal axis is a frequency axis and the vertical axis represents a voltage ratio "V9/V8." V9/V8 represents a quality factor related to the power transmitting antenna 902.

Since V9/V8 corresponds to a Quality Factor of the resonant circuit including the power transmitting antenna 902 and the resonant capacitor 903, the value thereof changes if an object is placed in the vicinity of the power transmitting antenna 902.

A change in Quality Factor differs in accordance with when an object is not placed on the TX, when the RX is placed on the TX, when a foreign object (such as a metal piece) is placed on the TX, or when the RX and a foreign object are placed on the TX.

In the Negotiation phase, the TX receives a FOD Status Data packet signal from the RX. The FOD Status Data packet includes a Reference Quality Factor Value and a Reference Resonance Frequency Value.

The Reference Quality Factor Value is a Quality Factor which can be measured at a terminal of a power transmitting antenna of a test TX when an RX is installed in the test TX and a foreign object is not present nearby.

Also, the Reference Resonance Frequency Value is a resonant frequency calculated from an inductance value which can be measured at the terminal of the power transmitting antenna of the test TX when the RX is placed on the test TX and a foreign object is not present nearby.

In the Q value measurement method, a threshold value is set on the basis of the Reference Quality Factor Value. Foreign object detection is executed by comparing this threshold value with a Quality Factor acquired from the measured V9/V8.

Alternatively, a threshold value is set on the basis of the Reference Resonance Frequency Value. Foreign object detection is executed by comparing this threshold value with a resonant frequency acquired by measuring V9/V8.

The RX and the TX of the embodiment execute communication for power transmission and reception control that is based on the WPC standard. The WPC standard specifies a plurality of phases including a Power Transfer phase in which transmitting power is executed and one or more phases before transmitting power is executed.

In each of the phases, communication for the necessary power transmission and reception control is executed. For example, foreign object detection using the Power Loss method is executed in the Power Transfer phase on the basis of the data acquired in the Calibration phase. Furthermore, foreign object detection using the Q value measurement method is executed before transmitting power is executed (before DP transmission and in Negotiation phase or Renegotiation phase).

The phases before transmitting power is executed in the WPC standard include a Selection phase, a Ping phase, and an Identification and Configuration phase (Configuration phase).

Also, there are a Negotiation phase and a Calibration phase. Hereinafter, the Identification and Configuration phase will be referred to as an "I&C phase." The processing of each of the phases will be explained below.

In the selection phase, the TX transmits the AP intermittently and detects that an object has been placed on the charging stand of the TX. For example, the TX detects that an RX, a conductor piece, or the like has been placed on the charging stand. The TX detects a voltage value or a current value or both the voltage value and the current value of the power transmitting antenna 105 when the AP has been transmitted.

When the voltage value falls below a threshold value or when the current value exceeds the threshold value, the TX determines that an object is present and transition to the Ping phase is executed. Alternatively, when the Quality Factor acquired from the voltage value or the current value satisfies a specified condition, the TX determines that an object is present and transition to the Ping phase is executed.

In the Ping phase, the TX transmits a DP with a higher power than the AP. The power of the DP is power which is sufficient to start up the control unit of the RX placed on the TX. The RX reports the power-receiving voltage value to the TX.

In this way, the TX recognizes that the object detected in the Selection phase is the RX by receiving a response from the RX which has received the DP. If the TX receives a report of the power-receiving voltage value from the RX, it transitions to the I&C phase. In addition, the TX measures a Quality Factor related to the power transmitting antenna 105, for example, using the AP, before transmitting the DP.

This measurement result is used when executing a foreign object detection process in which the Q value measurement method is used. Depending on the version of the WPC standard, the above-described Selection phase may be included as a part of the above-described Ping phase and may also be called a "Ping phase" in some cases.

In the I&C phase, the TX identifies the RX and acquires device configuration information (capability information) from the RX. The RX transmits the signals of the ID Data packet and the Configuration Data packet.

The ID Data packet includes identifier information of the RX and the Configuration Data packet includes device configuration information (capability information) of the RX. The TX which has received the ID Data packet and Configuration Data packet signals responds with an acknowledgement (positive response ACK).

Also, the I&C phase ends. Depending on the version of the WPC standard, the I&C phase may also be called the configuration phase in some cases. In the Negotiation phase, the GP value is determined on the basis of the GP value, the power transmission capability of the TX, or the like requested by the RX.

Furthermore, the TX receives a FOD Status Data packet from the RX which includes the Reference Quality Factor Value and the Reference Resonance Frequency Value described above.

In the Q value measurement method, the presence or absence of a foreign object is assessed on the basis of a threshold value that is based on the Reference Quality Factor Value and the Reference Resonance Frequency Value.

The TX executes the foreign object detection process in which the Q value measurement method is used in accordance with the request from the RX. Furthermore, the WPC standard specifies a method for transitioning to the Power Transfer phase once, and then executing the same processing as the Negotiation phase again upon request from the RX. The phase in which these processes are executed after transitioning from the Power Transfer phase is called the Renegotiation phase.

In the calibration phase, the CAL process for the Power Loss method is executed. In addition, the RX reports a predetermined received power value to the TX and the TX makes adjustments to transmit power efficiently.

The predetermined received power value is, for example, a received power value in a light load state (Light Load state) or a load connected state (Connected Load state). The received power value reported to the TX is used for the foreign object detection process using the Power Loss method.

In the Power Transfer phase, the TX and the RX control the start and continuation of power transmission, error processing and stopping of power transmission due to full charge, and the like. The TX and the RX execute communication processing for such power transmission and reception control.

For example, using the power transmitting antenna 105 and the power receiving antenna 205 used at the time of executing wireless power transfer on the basis of the WPC standard, communication is executed by superimposing a signal on the electromagnetic waves transmitted from the power transmitting antenna 105 or the power receiving antenna 205. The range in which communication that is based on the WPC standard between the TX and the RX is possible is the same as the range in which power transmission of the TX is possible.

Depending on the version of the WPC standard, the above-described Calibration phase may also be called the Power Transfer phase as a part of the above-described Power Transfer phase in some cases.

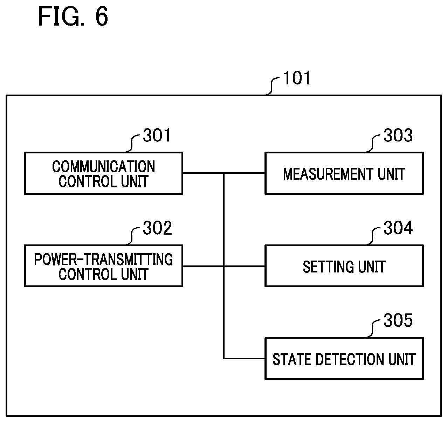

A function of the control unit of the TX will be described with below reference to FIG. 6. FIG. 6 is a block diagram showing an example of a configuration of the function of the control unit 101 of the power transmitting apparatus 100 (TX). The control unit 101 includes a communication control unit 301, a power-transmitting control unit 302, a measurement unit 303, a setting unit 304, and a state detection unit 305. The communication control unit 301 executes communication control between the TX and the RX that is based on the WPC standard via the first communication unit 104 or executes communication control between the TX and the RX via the second communication unit 109.

The power-transmitting control unit 302 controls the power-transmitting unit 103 to control the power transmission to the RX. The measurement unit 303 measures a waveform attenuation rate which will be described later. Furthermore, the measurement unit 303 measures the power transferred to the RX via the power-transmitting unit 103 and measures an average transmitted power per unit time.

Also, the measurement unit 303 measures a Quality Factor related to the power transmitting antenna 105. Furthermore, the measurement unit 303 measures temperature using temperature sensors disposed at a plurality of locations on the power transmitting apparatus 100. In addition, the measurement unit 303 measures a quantity (for example, a coupling coefficient) which represents an electromagnetic coupling state of the power transmitting antenna 105 and the power receiving antenna 205.

The setting unit 304 calculates and sets a threshold value for foreign object detection in the Q value measurement method and a threshold value for foreign object detection in the Power Loss method using the above-described method. Moreover, the setting unit 304 sets a threshold value for foreign object detection in the waveform decay method using a method which will be described later.

Furthermore, the setting unit 304 calculates and sets a threshold value for foreign object detection or a threshold value for positional deviation detection between the TX and the RX, for example, on the basis of the coupling coefficient between the power transmitting antenna 105 and the power receiving antenna 205 measured using the measurement unit 303.

In addition, the setting unit 304 calculates and sets a threshold value for foreign object detection or a threshold value for positional deviation detection between the TX and the RX, for example, on the basis of the temperature of the power transmitting apparatus measured using the measurement unit 303. In addition, the setting unit 304 calculates and sets a threshold value for foreign object detection or a threshold value for positional deviation detection between the TX and the RX, for example, on the basis of the current value of the power transmitting antenna 105 measured using the measurement unit 303.

The state detection unit 305 executes state detection of the TX and the RX. For example, the state detection unit 305 detects a foreign object present between the TX and the RX and detects a positional deviation between the power transmitting antenna 105 and the power receiving antenna 205.

More specifically, a state detection process that is based on the Power Loss method, the Q value measurement method, and the waveform decay method is possible. Moreover, a state detection process that is based on a temperature measured using the power transmitting apparatus 100, the electromagnetic coupling state (for example, a coupling coefficient) between the power transmitting antenna 105 and the power receiving antenna 205, and the current value of the power transmitting antenna 105 measured using the power transmitting apparatus 100 is possible.

The state detection unit 305 can execute foreign object detection and detection of positional deviation of the power transmitting antenna 105 and the power receiving antenna 205 using other methods. For example, in the TX having an NFC communication function provided therein, the state detection unit 305 executes a state detection process using an opposing device detection function according to the NFC standard.

Also, the state detection unit 305 can detect the presence or absence of a foreign object and the electromagnetic coupling state of the power transmitting antenna and the power receiving antenna, as well as detect state changes on the TX. For example, the state detection unit 305 can detect an increase or decrease in the number of power receiving apparatuss on the TX.

The setting unit 304 sets a threshold value that is a criterion for assessing the presence or absence of a foreign object when the TX performs state detection. State detection is, for example, state detection that is based on the Power Loss method, the Q value measurement method, the waveform decay method or state detection that is based on a temperature measured in the power transmitting apparatus 100.

Furthermore, the state detection is state detection that is based on a coupling coefficient or the like of the power transmitting antenna 105 and the power receiving antenna 205 and state detection that is based on a current value of the power transmitting antenna 105 measured using the power transmitting apparatus 100. The setting unit 304 can set an assessment threshold value required for the state detection process using other methods.

The state detection unit 305 can execute a foreign object detection process and a process for detecting positional deviation between the power transmitting antenna 105 and the power receiving antenna 205 on the basis of the threshold value set using the setting unit 304 and the measurement results using the measurement unit 303.

For example, the state detection unit 305 can acquire data such as the waveform attenuation rate, the transmitted power, and the Quality Factor as measurement results from the measurement unit 303. The state detection unit 305 can acquire data such as the temperature measured in the power transmitting apparatus 100, the coupling coefficient between the power transmitting antenna 105 and the power receiving antenna 205, and the current value of the power transmitting antenna 105 measured in the power transmitting apparatus 100, as measurement results of the measurement unit 303.

The processes executed by the communication control unit 301, the power-transmitting control unit 302, the measurement unit 303, the setting unit 304, and the state detection unit 305 shown in FIG. 6 can be realized using a program executed by a CPU or the like provided in the control unit 101.

The processes are executed in parallel in accordance with an independent program, with synchronization between the programs achieved by event processing, or the like. Here, two or more of these processes may be incorporated into the processing of a single program.

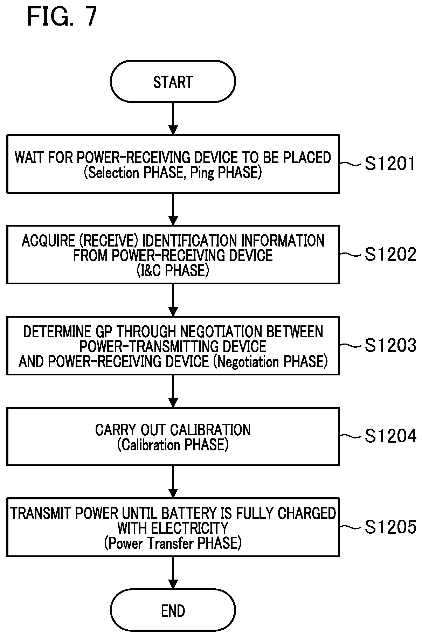

An example of a flow of a process related to power transmission and reception control executed by the TX and the RX will be described below. FIG. 7 is a flowchart for describing an example of processing for power transmission control executed by the TX. This processing is realized, for example, using the control unit 101 of the TX executing a program read from the memory 106.

In addition, this process can be executed when the power supply of the TX is turned on, when a user of the TX inputs an instruction to start a wireless power transfer application or when the TX is connected to a commercial power supply and receives power. Moreover, this process may be started up by some other trigger.

In S1201 of FIG. 7, the TX executes the processes defined as the Selection phase and Ping phase of the WPC standard and waits for the RX to be placed. The TX repeatedly transmits the AP of the WPC standard intermittently and detects objects present within the range in which transmitting power is possible.

For example, the TX can detect that an RX, a conductor piece, or the like is placed on the charging stand 300. When the TX detects that an object is present within the range in which transmitting power is possible, the TX transmits a DP.

When there is a predetermined response to the DP, the TX assesses that the detected object is an RX and that the RX has been placed on the charging stand 300. Here, the "predetermined response" is a Signal Strength (SIG) data Packet transmitted by the RX.

This packet includes a Signal Strength Value which indicates a signal strength of a signal (DP) received by the RX. The Signal Strength Value is calculated from a voltage (rectifier unit output voltage) output by the rectifier unit (rectifier, rectifier circuit) of the power-receiving unit 203 measured by the RX.

Alternatively, the Signal Strength Value is calculated from a voltage of an open circuit (open circuit voltage) including the power receiving antenna 205 measured by the RX, the received power value measured by the RX, or the like. In addition, before transmitting the DP, the TX measures the Quality Factor related to the power transmitting antenna 105. The measurement result is used at the time of executing the foreign object detection process in which the Q value measurement method is used.

After the placement of the RX is detected, in S 1202, the TX acquires identification information from the RX through communication in the I&C phase defined by the WPC standard. In the I&C phase, the RX transmits an Identification Packet (ID Packet) to the TX.

The ID Packet stores the Manufacturer Code and Basic Device ID that are identification information for each individual RX, as well as information which can identify the version of the WPC standard which is supported.

Moreover, the RX transmits a Configuration Data Packet to the TX. The Configuration Data Packet includes the following RX capability information.

- Information in which the RX can identify the version of the WPC standard which is supported.
- Maximum Power Value or Reference Power that is a value which specifies the maximum power which can be supplied to the load by the RX.
- Information indicating whether the RX has a negotiation function of the WPC standard.
- Parameters used in frequency shift keying that is a communication modulation method used when the TX transmits information to the RX.

When the TX receives the above packet from the RX, the TX transmits a positive response ACK to the RX and the I&C phase ends. The TX may acquire the identification information of the RX through a method other than communication in the I&C phase of the WPC standard.

Also, the identification information for each individual of the RX may be a Wireless Power ID. Alternatively, the identification information may be any other identification information capable of identifying an individual RX such as a Bluetooth (registered trademark) Address (hereinafter referred to as "BD_ADDR") unique to the second communication unit 212 of the RX.

BD_ADDR is an 8-byte address used in BLE. BD_ADDR is a public address defined in the BLE standard which indicates, for example, the manufacturer of the RX or the individual identification information of the BLE communication function (the function of the second communication unit 212). BD_ADDR may be a random address.

Subsequently, in S 1203, the TX determines a GP through negotiation between the TX and the RX on the basis of the request from the RX and the power transmission capability of a subject device. In S1203, communication in the Negotiation phase of the WPC standard is executed.

First, the RX reports a requested value of the GP by transmitting a Specific Request to the TX. The TX assesses whether to accept the request on the basis of the power transmission capability of the subject device and other conditions.

When the TX accepts the request, the TX transmits a positive response ACK to the RX and when the TX does not accept the request, the TX transmits a negative response NACK or NAK to the RX. The determined value of the GP is a value requested by the RX when the TX accepts the request from the RX.

When the TX does not accept the request from the RX, the value of the GP is a predetermined value (for example, 5 watts) defined by the WPC standard. Alternatively, when the TX acquires information indicating that the RX does not support the Negotiation phase (for example, S1302 which will be described later), the TX does not perform communication in the Negotiation phase and determines the GP value to be a predetermined value. The predetermined value is, for example, a value (for example, 5 watts) which is defined in advance using the WPC standard.

Also, the TX executes the foreign object detection process using the Q value measurement method in accordance with the request from the RX. The TX receives the FOD Status Data packet from the RX. This packet includes the Reference Quality Factor Value and Reference Resonance Frequency Value described above.

Then, the TX executes foreign object detection using the Q value measurement method. This foreign object detection is executed on the basis of the following information.

- Quality factor and resonant frequency related to the power transmitting antenna 105 measured by the TX before transmitting the DP.
- Threshold value that is based on the Reference Quality Factor Value and the Reference Resonance Frequency Value received by the TX from the RX.

In the foreign object detection process using the Q value measurement method, in response to a request from the RX to the TX, the value of the Quality Factor of the power transmitting antenna 105 measured by the TX before transmitting the DP is compared with the above threshold value and the presence or absence of a foreign object and the possibility of the existence thereof are assessed on the basis of the comparison result.

Subsequently, in S1204, the TX and the RX execute a calibration phase process for the WPC standard (CAL process). In the calibration phase, the TX executes the CAL process for the Power Loss method on the basis of the determined Reference Power value or GP value.

First, the RX transmits a signal having information regarding the received power in the light load state (hereinafter referred to as "first reference received power information") to the TX. The light load state is, for example, a load disconnection state, a load state in which the received power value of the RX is equal to or less than a first threshold value or a load state in which the received power value of the RX is within a predetermined range (hereinafter referred to as a "first range") which has been determined in advance.

In the embodiment, it is assumed that the first reference received power information is information indicating 500 milliwatts. Although the first reference received power information is information included in the Received Power Data packet (mode 1) defined in the WPC standard, other messages may be used.

Hereinafter, Received Power Data packet (mode 1) is represented as RP1. The TX assesses whether to accept the first reference received power information on the basis of a Control Error Value included in a Control Error (CE) data packet received from the RX.

When the TX accepts the first reference received power information, the TX transmits a positive response ACK to the RX. When the TX does not accept the first reference received power information, the TX transmits a negative response NAK to the RX.

Subsequently, the RX executes a process for transmitting, to the TX, a signal having information regarding the received power in the load connected state (hereinafter referred to as second reference received power information). The load connected state is, for example, a maximum load state, a load state in which the transmitted power value is equal to or greater than a second threshold value or a load state in which the power received by the RX is at maximum power.

Here, "maximum power" refers to power of a value which is close to the Reference Power. Alternatively, the load connected state is a load state in which the received power value of the RX is within a predetermined range which has been determined in advance (hereinafter referred to as a "second range"). Here, the second range is a range of power values which is higher than the first range.

In the embodiment, it is assumed that the second reference received power information is information indicating 15 watts. Although the second reference received power information is information included in the Received Power Data packet (mode 2) defined in the WPC standard, other messages may be used.

Hereinafter, Received Power Data packet (mode 2) is represented as RP2. The TX assesses whether to accept the second reference received power information on the basis of the Control Error Value included in the Control Error (CE) data packet received from the RX.

When the TX accepts the second reference received power information, the TX transmits a positive response ACK to the RX. When the TX does not accept the second reference received power information, the TX transmits a negative response NAK to the RX. The TX transmits a positive response ACK in response to the second reference received power information from the RX and completes the CAL process.

Through the CAL process described above, the TX can calculate an amount of power loss between the TX and the RX in the light load state and the load connected state on the basis of the transmitted power value of the TX and the received power value included in the first and second reference received power information.

Also, the TX can calculate an amount of power loss between the TX and the RX in all transmitted power which can be acquired by the TX by executing an interpolation process between a plurality of amounts of power loss. The transmitted power which can be acquired by the TX is, for example, any power within the range in which the received power received by the RX in the embodiment is from 500 milliwatts to 15 watts.

After that, in S 1205, the TX transmits power until the battery 207 of the RX is fully charged with electricity. In S1205, communication is executed in the Power Transfer phase of the WPC standard.

The RX repeatedly transmits a Control Error (CE) data packet (hereinafter referred to as a "CE packet") to the TX at time intervals of t_interval. t_interval is a value defined using the WPC standard and is, for example, 250 milliseconds.

The CE packet includes a request for how much to increase or decrease the transmitted power. The TX adjusts the transmitted power by controlling the current or the voltage of the power transmitting antenna 105 on the basis of the received CE packet.

That is to say, the CE packet includes parameter data for adjusting the transmitted power. By repeatedly executing this process, power can be transferred at an appropriate power in response to a request from the RX in almost real time.

When the battery 207 is fully charged with electricity, the RX transmits an End Power Transfer data Packet (hereinafter referred to as an "EPT packet") to the TX to end the Power Transfer phase.

The RX can transmit an EPT packet for reasons other than full charging. In addition, if the Power Transfer phase ends, the TX stops transmitting power to the RX for charging.

Also, when the TX fails to receive the next CE packet after t_timeout has elapsed since the last CE packet was received, the TX determines that the RX has been removed from the charging stand 300. In this case, the Power Transfer phase ends. t_timeout is a value defined by the WPC standard, for example, 1500 milliseconds.

The RX may transmit packets other than the CE packet to the TX in the Power Transfer phase. For example, there is a Charge Status Data Packet which reports a state of the battery 207 of the RX to the TX.

This packet stores a Charge Status Value which indicates the percentage of charge of the battery 207. If the TX receives the Charge Status Data Packet, the TX reports the charging state to the user, for example, by displaying text or figures on the basis of the Charge Status Value via the UI unit 110.

With regard to the Charge Status Data Packet, the TX may receive the Charge Status Data Packet at any time and may report the Charge Status Data Packet to the user at any time.

In the Power Transfer phase, the TX transmits power to the RX and executes the foreign object detection process using the Power Loss method. For example, through the CAL process, the amount of power loss between the TX and the RX in the first detection state in the course of the power transmission process is calculated from a difference between the transmitted power value and the received power value.

The calculated amount of power loss corresponds to the reference amount of power loss in a state in which a foreign object is not present. Then, when the TX assesses that the difference between the amount of power loss between the TX and the RX measured during power transmission after the CAL process and the reference amount of power loss is equal to or greater than a threshold value, the TX determines that the state is in the second detection state.

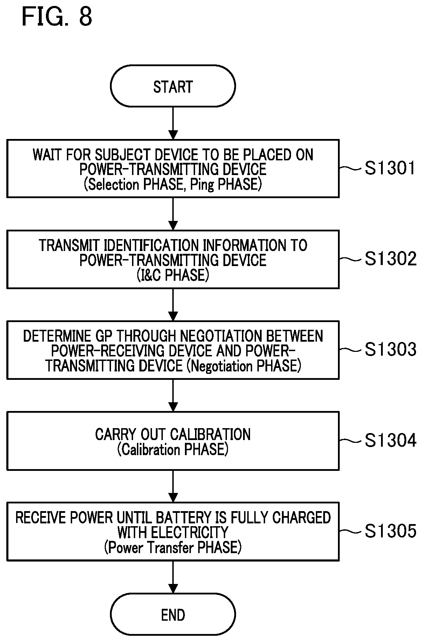

An example of a flow of a process related to power reception control executed by the RX will be described with reference to FIG. 8. This process is realized, for example, using the control unit 201 of the RX executing a program read from the memory 208.

In S1301, the RX executes processes defined as the Selection phase and the Ping phase of the WPC standard and waits for the subject device to be placed on the TX. The RX detects that the subject device has been placed on the TX, for example, by detecting a DP from the TX.

If the RX detects that the subject device has been placed on the TX, in S1302, it transmits a signal including identification information of the subject device to the TX using an ID Packet and a Configuration Data Packet.

The identification information of the RX may be transmitted through a method other than the communication of the I&C phase of the WPC standard. In addition, other identification information such as BD_ADDR may be used as long as it is information which can identify each individual of the RX. In addition, the RX can transmit information other than the identification information to the TX in S1302.

Subsequently, in S1303, the RX transmits a signal including information regarding the GP value requested to the TX and waits for a response from the TX to determine the GP. In S1303, communication in the Negotiation phase of the WPC standard is executed.

The RX transmits a FOD Status Data packet to the TX. This packet includes a Reference Quality Factor Value and a Reference Resonance Frequency Value.

Subsequently, in S1304, the RX and the TX execute the WPC standard calibration phase process (CAL process). The process executed by the RX in this phase is as described above. After that, in S1305, the RX receives power until the battery 207 is fully charged with electricity.

In the Power Transfer phase, the RX and the TX execute a foreign object detection process using the Power Loss method. In S1305, the RX repeatedly transmits a CE packet at intervals of t_interval and finally transmits an EPT packet to the TX to complete the process.

As described above, the Power Loss method is a method for detecting foreign objects on the basis of the measurement results of the amount of power loss during power transmission from the TX to the RX. While this method has the disadvantage that the accuracy of foreign object detection decreases when the TX is transmitting a large power, the method has the advantage that the foreign object detection process can be executed while continuing to transmit power, thereby maintaining high transmission efficiency.

Incidentally, through only the foreign object detection using the Power Loss method in the Power Transfer phase, there may be a possibility of erroneous detection occurrence of a foreign object or a possibility of an erroneous assessment occurrence that it is assessed that a "foreign object is not present" even though a foreign object is present.

For example, it is assumed that a foreign object is present in the vicinity of the TX and the RX during power transmission in the Power Transfer phase. In this case, there is a possibility that heat generated from the foreign object may increase. Thus, it is necessary to improve the accuracy of foreign object detection in the Power Transfer phase.

Thus, a foreign object detection method in which the waveform decay method is used will be described. With this method, the TX can execute foreign object detection on the basis of the decay state of the power transmission waveform (voltage waveform or current waveform) related to the power transmission to the RX. That is to say, foreign object detection is possible without using a newly defined foreign object detection signal or the like.

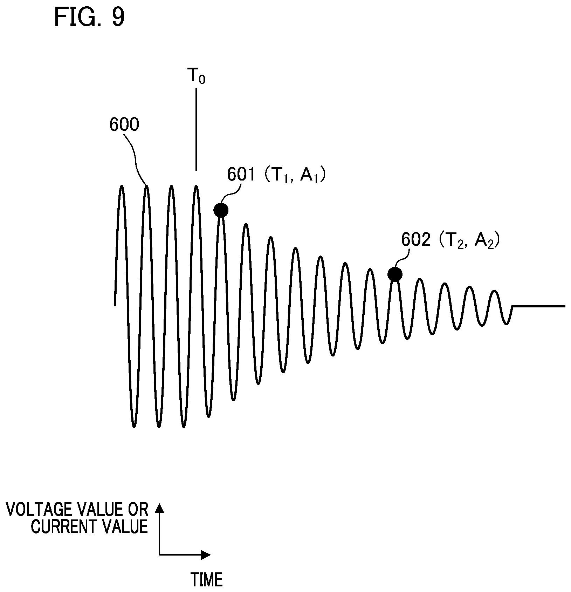

FIG. 9 is a diagram for explaining the principle of foreign object detection through the waveform decay method. An example of foreign object detection using a power transmission waveform related to power transmission from the power transmitting apparatus 100 (TX) to the power receiving apparatus 200 (RX) is shown. In FIG. 9, the horizontal axis represents the time axis and the vertical axis represents the voltage value or the current value.

A waveform 600 shown in FIG. 9 shows, for example, a change over time in the voltage value of the high-frequency voltage applied to the power transmitting antenna 105 of the TX. Alternatively, FIG. 9 shows the change over time of the high frequency voltage value or the current value observed in a circuit including the power transmitting antenna 105 and the resonant capacitor 107 of the TX.

The TX which transmits power to the RX via the power transmitting antenna 105 stops transmitting power at time $T_0$. At time $T_0$, the power supply for power transmission from the power supply unit 102 is stopped and the power supply for power transmission to the power transmitting antenna 105 is stopped.

A frequency $f_1$ of a power transmission waveform before the power transmission is stopped at time $T_0$ is, for example, a fixed frequency which is between 87 kHz and 205 kHz used in the WPC standard. A point 601 on the waveform 600 is a point on an envelope of a high frequency voltage and $(T_1, A_1)$ indicates that a voltage value at time $T_1$ is $A_1$.

A point 602 on the waveform 600 is a point on the envelope of the high frequency voltage and $(T_2, A_2)$ indicates that a voltage value at time $T_2$ is $A_2$.

The Quality Factor (Q-factor, Q value) of the resonant circuit including the power transmitting antenna 105 and the resonant capacitor 107 can be acquired on the basis of a change in voltage value over time after time $T_0$.

For example, based on the time at points 601 and 602 on the envelope at a high frequency voltage, the voltage value, and a frequency $f_2$ of a high frequency voltage after transmitting power is stopped at time $T_0$, the TX calculates the Quality Factor using Equation 1.

$$Q = \pi \cdot f_2 \cdot (T_2 - T_1) / \ln(A_1/A_2) \text{ (Equation 1)}$$

In Equation 1, ln represents a natural logarithm function. The frequency $(f_1)$ of the power transmission waveform when the TX is transmitting power to the RX may differ from the frequency $(f_2)$ of the power transmission waveform when the TX stops transmitting power to the RX.

Although the value of the Quality Factor decreases when a foreign object is present in the vicinity of the TX and the RX, the reason is that foreign objects cause energy loss. Thus, when focusing on the slope of the attenuation of the voltage value, the slope of the line connecting points 601 and 602 is greater when a foreign object is present than when a foreign object is not present.

When energy loss occurs due to a foreign object, a decay rate of an amplitude of the waveform 600 increases. For example, in the waveform decay method, the presence or absence of a foreign object can be assessed on the basis of a decay state of a voltage value between the points 601 and 602.

In order to actually assess whether a foreign object is present, it is possible to make an assessment by comparing some kind of numerical value which represents the decay state. For example, when making an assessment using a Quality Factor, a Quality Factor value lower than a reference value means that a waveform decay rate (a degree of decrease in waveform amplitude per unit time) is higher.

As another example, there is a method for making an assessment using the slope of the line connecting the points 601 and 602 which is calculated by $(A_1-A_2)/(T_2-T_1)$. Furthermore, when the times ($T_1$ and $T_2$) at which the decay state of the voltage value is measured are fixed, the presence or absence of a foreign object can be assessed using a difference in voltage values ($A_1-A_2$) or a ratio of voltage values ($A_1/A_2$).

Alternatively, when it is assumed that the voltage value $A_1$ immediately after the transmitting of power is stopped is constant, the presence or absence of a foreign object can be assessed using the voltage value $A_2$ after a predetermined time has elapsed. Alternatively, the presence or absence of a foreign object can be assessed using the time ($T_2-T_1$) which elapses until the voltage value $A_1$ reaches a predetermined voltage value $A_2$.

In the waveform decay method, it is possible to assess the presence or absence of a foreign object using a decay state of a waveform during a power transmission stop period. **In** the present disclosure, indices such as a Quality Factor which represent the decay state of a power transmission waveform are collectively referred to as a "waveform attenuation rate."

Also, although the vertical axis of FIG. 9 has been described as an axis of a voltage value of a high frequency voltage applied to the power transmitting antenna 105 of the TX, the vertical axis of FIG. 9 may represent a current value flowing through the power transmitting antenna 105. As in the case of the voltage value, the decay state of the current value during the power transmission stop period changes in accordance with the presence or absence of a foreign object.

When a foreign object is present, a waveform decay rate is higher than when a foreign object is not present. Thus, foreign objects can be detected by applying the same method described above to the time change of the current value flowing through the power transmitting antenna 105.

That is to say, the quality factor calculated from the current waveform, the slope of the attenuation of the current value, the difference between the current values, the ratio of the current values, the absolute value of the current values, the time until the current value, or the like reaches a predetermined value can be used as a waveform attenuation rate to assess the presence or absence of a foreign object and foreign object detection can be executed.

Also, there is a method that is based on both the decay state of the voltage value and the decay state of the current value. In this method, the presence or absence of a foreign object can be assessed using an evaluation value calculated from the waveform attenuation rate of the voltage value and the waveform attenuation rate of the current value.

An example of the measurement of the waveform attenuation rate during a period in which the TX temporarily stops transmitting power is not limited. The waveform attenuation rate may be measured during a period in which the TX temporarily reduces the power supplied from the power supply unit 102 from a predetermined power level to an power level lower than the predetermined power level.

That is to say, the waveform attenuation rate may be measured during a period in which the transmitted power to the power transmitting antenna 105 is temporarily reduced from a predetermined power level to a lower power level. Furthermore, the power-transmitting unit 103 may limit the power transmission to the power transmitting antenna 105 described above (stopping the transmitting of power or reducing the transmitted power) on the basis of an instruction signal of the control unit 101.

Also, although the voltage value or the current value is measured at two points in time during the period in which the TX limits the power transmission in the above example, the voltage value or the current value may be measured at three or more points in time and the waveform attenuation rate may be calculated using these values.

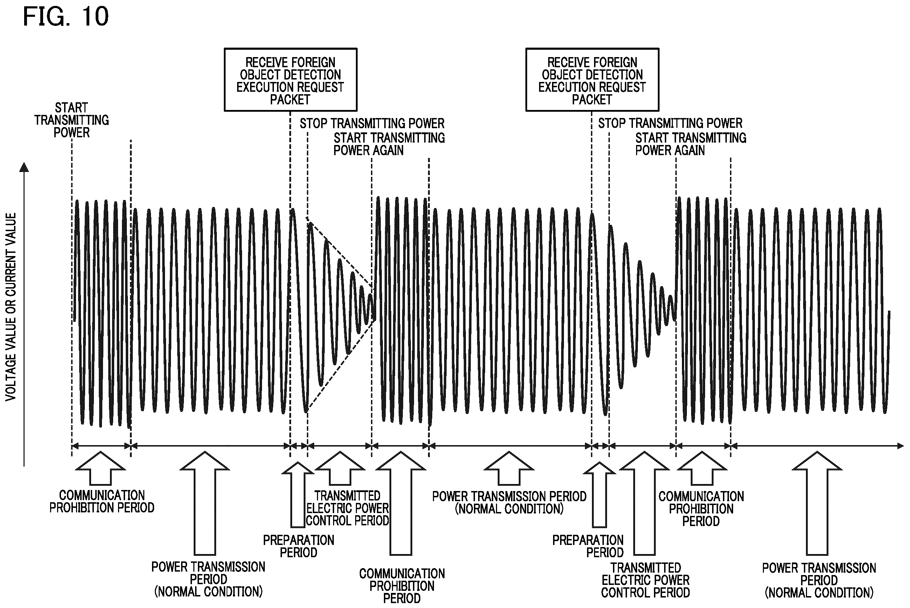

A foreign object detection method that is based on a power transmission waveform using the waveform decay method will be described with reference to FIG. 10. The power transmission waveform shown in FIG. 10 is a power transmission waveform at the time of executing foreign object detection using the waveform decay method, the horizontal axis represents time, and the vertical axis represents a voltage value or a current value of the power transmitting antenna 105.

During the transient response period immediately after the TX starts transmitting power, the power transmission waveform is not stable. Thus, during this transient response period, the RX controls the TX so that is does not execute communication with the TX (communication using amplitude modulation or load modulation).

Also, the TX controls the RX so that it does not execute communication with the RX (communication using the frequency shift keying). Hereinafter, this period is called a communication prohibition period. Here, during the communication prohibition period, the TX transmits power to the RX.

Also, after the communication prohibition period has elapsed, the TX transmits power to the RX. After that, this period is called a power transmission period. When the TX receives a request (packet, command) to execute a foreign object detection operation from the RX, the TX temporarily stops transmitting power after a predetermined period has elapsed or temporarily reduces the transmitted power.

After that, this predetermined period will be referred to as a "preparation period." During the preparation period, the RX controls the TX so that it does not execute communication with the TX through amplitude modulation or load modulation. Furthermore, the TX controls the RX so that it does not execute communication with the RX through frequency shift keying.

By executing control so that communication is not carried during the preparation period, disturbance of the power transmission waveform is suppressed and the TX is able to calculate the waveform attenuation rate of the power transmission waveform which will be described later with higher accuracy. A request to execute a foreign object detection operation (packet, command) may be RP0, RP1, or RP2.

When the TX receives the execution request, the power-transmitting unit 103 temporarily stops transmitting power or temporarily reduces the transmitted power so that the amplitude of the power transmission waveform is attenuated. A period to a point in time at which transmitting power is started again or a point in time at which transmitted power starts to return from a point in time at which transmitting power is temporarily stopped or a point in time at which transmitted power is temporarily reduced is called a transmitted power control period.

Here, "starting transmitting power again" means that the TX increases the transmitted power to a predetermined value. Alternatively, a period from a point in time at which the TX temporarily sets a value of an inverter input voltage input to an inverter possessed by the power-transmitting unit 103 to 0 volts to a point in time at which the TX increases the value of the inverter input voltage to a predetermined value is called a transmitted power control period.

Alternatively, a period from a point in time at which the TX temporarily reduces a value of the inverter input voltage to a predetermined first voltage value to a point in time at which the TX increases the value of the inverter input voltage to a predetermined second voltage value is called a transmitted power control period.

Alternatively, a period from a point in time at which the TX temporarily sets a value of an inverter output voltage output by an inverter possessed by the power-transmitting unit 103 to 0 volts to a point in time at which the TX increases the value of the inverter output voltage to a predetermined voltage value is called a transmitted power control period.

Alternatively, a period from a point in time at which the TX temporarily reduces a value of the inverter output voltage to a predetermined first voltage value to a point in time at which the TX increases the value of the inverter output voltage to a predetermined second voltage value is called a transmitted power control period.

Also, control in which the TX temporarily stops transmitting power or temporarily reduces transmitted power is called transmitted power control. Furthermore, control in which the TX temporarily sets an input voltage or an output voltage of an inverter possessed by the power-transmitting unit 103 to 0 volts or temporarily reduces the input voltage or the output voltage thereof to a predetermined value is called transmitted power control.

The TX calculates a waveform attenuation rate that is based on the attenuation waveform and compares the calculated waveform attenuation rate with a threshold value to assess whether a foreign object is present or the possibility that a foreign object is present (probability of presence) (hereinafter also referred to as "foreign object assessment").

During the transmitted power control period, the RX controls the TX so that the RX does not communicate with the TX using amplitude modulation or load modulation. Furthermore, the TX controls the RX so that the TX does not communicate with the RX using frequency shift keying.

By executing control not to execute communication during the transmitted power control period, the disturbance of the power transmission waveform is suppressed and the TX can calculate the waveform attenuation rate of the power transmission waveform with higher accuracy. In addition, the foreign object assessment can be executed during the transmitted power control period, the communication prohibition period, or the power transmission period.

When a foreign object is not detected after the transmitted power control period has elapsed, the TX controls the starting of power transmission again or the restoration of transmitted power. In the transient response period immediately after the start of the control, the power transmission waveform is not stable so the period is a communication prohibition period. After that, the period transitions to a power transmission period in which stable power transmission is executed from the TX to the RX.

As described above, the TX repeatedly executes control of the starting of transmitting power, the communication prohibition period, the power transmission period, the preparation period, and the transmitted power control period. The TX calculates a waveform attenuation rate that is based on the attenuation waveform at predetermined timing and executes foreign object assessment on the basis of the result of comparing the calculated waveform attenuation rate with a threshold value.

That is to say, a foreign object assessment can be executed on the basis of voltage values or current values at two or more points in time during a predetermined period during which transmitting power is limited (including the stopping of the transmitting of power). In addition, during the preparation period, the transmitted power control period, and the communication prohibition period, the RX controls the TX so that the RX does not communicate with the TX through amplitude modulation or load modulation.

Also, the TX controls the RX so that the TX does not communicate with the RX through frequency shift keying. That is to say, the TX controls the RX so that the TX does not communicate with the RX during a predetermined period (first period) after receiving an execution request (packet, command) from the RX.

The WPC standard specifies a period during which the TX cannot transmit a packet to the RX (transmission of a packet is prohibited) after the TX has received a packet other than an execution request from the RX in the Power Transfer phase.

A first period is a period longer than the period. In addition, the RX executes control not to communicate with the TX during a predetermined period (second period) after transmitting an execution request (packet, command) to the TX.

The WPC standard specifies a period during which the RX cannot transmit a packet to the TX (transmission of a packet is prohibited) after the RX transmits a packet other than an execution request to the TX in the Power Transfer phase. The second period is a period longer than the period.

Incidentally, during the transmitted power control period, if elements such as the power-receiving unit 203, the charging unit 206, and the battery 207 are connected to the power receiving antenna 205 and the resonant capacitor 211 of the power receiving apparatus 200, the waveform attenuation rate is affected by the load due to these elements.

That is to say, a value of the waveform attenuation rate changes in accordance with the states of the power-receiving unit 203, the charging unit 206, and the battery 207. As a result, even if the value of the waveform attenuation rate is large, it becomes difficult to distinguish whether this is due to the influence of a foreign object or a change in the state of the power-receiving unit 203, the charging unit 206, the battery 207, or the like.

Thus, when measuring the waveform attenuation rate and executing foreign object detection, the control unit 201 of the RX turns off the first switch unit 209 during the preparation period. The RX transmits an execution request (packet, command) to the TX and executes the above process during the preparation period.

Alternatively, the RX executes the above process at the same time as transmitting an execution request packet (command) to the TX. Thus, it possible to suppress the influence due to the battery 207.

Also, instead of turning off the first switch unit 209, the same effect can be obtained by setting the first switch unit 209 to a Light Load state (light load state). Furthermore, instead of turning off the first switch unit 209, the same effect can be obtained even when the RX executes load control so that the power received is minimum power.

Alternatively, instead of turning off the first switch unit 209, the same effect can be obtained even when the RX executes load control so that the power received is within a predetermined range which has been determined in advance or is power which is equal to or less than a threshold value.

Here, in "power within a predetermined range which has been determined in advance" or "power which is equal to or less than a threshold value," "power" refers to an power which is approximately 10% of the Reference Power. Alternatively, instead of turning off the first switch unit 209, the RX may control a load so that predetermined power is supplied to the load.

These can be realized by controlling the first switch unit 209. It is assumed that the above-described operations are also included as operations in the Light Load state. The RX maintains the above-described control even during the transmitted power control period.

Also, at a timing after the transmitting of power is started again, the RX releases the above-described control and executes control to return to the original state. Alternatively, it is assumed that the control unit 201 turns on the second switch unit 210 to short-circuit the circuit, allowing a current to flow through a closed loop formed of the power receiving antenna 205, the resonant capacitor 211, and the second switch unit 210.

Thus, it is possible to suppress the influence of the power-receiving unit 203, the charging unit 206, and the battery 207. The RX transmits a foreign object detection execution request (packet, command) to the TX and the above process is performed during the preparation period.

Alternatively, the RX executes the above process at the same time as transmitting an execution request (packet, command) to the TX. The RX maintains the above-described control during the transmitted power control period. Furthermore, the RX releases the above-described control at a timing after the transmitting of power is started again and executes control to return to the original state.

More accurate foreign object detection is possible by obtaining a waveform attenuation rate that is based on the power transmission waveform measured with the first switch unit 209 turned off or with the second switch unit 210 turned on and short-circuited (connected). Alternatively, by executing both turning off the first switch unit 209 and short-circuiting (connecting) the second switch unit 210, more accurate foreign object detection is possible.

Alternatively, during the preparation period, the RX may transition to a low power consumption mode or control may be executed so that power consumption is constant, with the first switch unit 209 turned on to short circuit and the second switch unit 210 turned off to disconnect.

The RX transmits an execution request (packet, command) to the TX and executes the above process during the preparation period. Alternatively, the RX transmits an execution request (packet, command) to the TX and executes the above process at the same time.

The RX maintains the above-described control even during the transmitted power control period. Furthermore, at a timing after the transmitting of power is started again, the RX releases the above-described control and executes control to return to the original state. When the power consumption in the RX is not constant or when a large amount of power is consumed, the value of the waveform attenuation rate that is based on the attenuation waveform is affected by the fluctuation of the power consumption.

In order to suppress this effect, it is effective to limit or stop the operation of software applications which run on the RX or to set the hardware function blocks included in the RX to a low power consumption mode or an operation stop mode.

More accurate foreign object detection is possible by executing foreign object detection using a waveform attenuation rate that is based on a power transmission waveform measured with power consumption of the RX suppressed.

Also, similarly, even in the TX, when the waveform attenuation rate is measured, if elements such as the power-transmitting unit 103, the first communication unit 104, and the power supply unit 102 are connected to the power transmitting antenna 105 and the resonant capacitor 107 of the power transmitting apparatus 100, the waveform decay rate is affected by these elements.

That is to say, the value of the waveform attenuation rate changes in accordance with the states of the power-transmitting unit 103, the first communication unit 104, and the power supply unit 102. As a result, for example, even when the value of the waveform attenuation rate is large, it becomes difficult to distinguish whether the effect is due to a foreign object or the effects is due to the power-transmitting unit 103, the first communication unit 104, and the power supply unit 102.

Thus, when the TX receives an execution request (packet, command) for a foreign object detection operation from the RX, the control unit 101 turns on the switch unit 108 during the preparation period. That is to say, the control unit 101 sets a state in which a current flows into a closed loop circuit formed of the power transmitting antenna 105, the resonant capacitor 107, and the switch unit 108.

Thus, at the time of measuring the waveform attenuation rate in the TX, it is possible to suppress the effects due to the power-transmitting unit 103, the first communication unit 104, and the power supply unit 102.

Alternatively, by providing a switch (not shown) between the power transmitting antenna 105 and the power-transmitting unit 103 and turning off the switch during the preparation period, it is possible to suppress the effects due to the power supply unit 102, the power-transmitting unit 103, and the first communication unit 104.

The TX maintains the above-described control even during the transmitted power control period. Furthermore, at a timing after the transmitting of power is started again, the TX releases the above-described control and executes control to return to the original state. Alternatively, a switch may be provided between the power-transmitting unit 103 and a closed loop circuit formed of the power transmitting antenna 105, the resonant capacitor 107, and the switch unit 108.

When the TX measures the waveform attenuation rate and executes foreign object detection, it is possible to suppress the above-described effects by controlling the switch to disconnect the closed loop circuit and the power-transmitting unit.

As described above, at least one of the following states: a short-circuit (connected) state in which the switch unit 108 is turned on, a disconnected state using a switch between the power transmitting antenna 105 and the power-transmitting unit 103, and a disconnected state using a switch associated with a closed loop circuit and the power-transmitting unit 103 is realized. This enables more accurate foreign object detection.

A method for setting a threshold value for a waveform attenuation rate for state detection and foreign object assessment of the TX and the RX that is based on the waveform decay method will be described below. The measurement value of the waveform attenuation rate is compared with a threshold value and foreign object assessment is possible on the basis of the comparison result.

The first threshold value setting method is a method in which the TX holds, as a threshold value, a predetermined value that is a common value which does not depend on the RX to which power is transmitted. This threshold value is a fixed value or a variable value that the TX determines in accordance with the situation.

The power transmission waveform during the transmitted power control period has a high waveform decay rate if a foreign object is present. Thus, the value of the waveform attenuation rate obtained in a state in which a foreign object is not present is held in advance and this value is set as a threshold value.

By comparing the measurement value of the waveform attenuation rate with the threshold value, it is possible to assess whether a "foreign object is present" or "there is a high possibility that a foreign object is present." For example, when Quality Factor is adopted as the waveform attenuation rate, the TX compares the measurement value of Quality Factor with a predetermined threshold value.

The threshold value is set on the basis of the measurement value in the first detection state or a value obtained by taking a measurement error into account in the measurement value. When the measurement value of the Quality Factor is smaller than the threshold value, it is assessed that a "foreign object is present" or "there is a high possibility that a foreign object is present."

When the measurement value of the Quality Factor is equal to or greater than the threshold value, it is assessed that a "foreign object is not present" or that the "possibility of a foreign object being present is low."

The second threshold value setting method is a method in which the TX adjusts and determines the threshold value on the basis of information transmitted from the RX. Note that the second threshold value setting method and the first threshold value setting method differ in that, in the second threshold value setting method, the value of the waveform attenuation rate is likely to differ in accordance with the RX which is placed on the TX and to which power is transmitted.

The reason is that the electrical characteristics of the RX which is electromagnetically coupled via the power transmitting antenna of the TX affect the value of the waveform attenuation rate. For example, when a Quality Factor is adopted as the waveform attenuation rate, the Quality Factor measured by the TX when a foreign object is not present is likely to differ in accordance with the RX placed on the TX.

Thus, the RX holds the Quality Factor information for each TX when a foreign object is placed on the TX in a state in which a foreign object is not present and reports the Quality Factor information to the TX. The TX adjusts and determines the threshold value for each RX on the basis of the Quality Factor information received from the RX.

More specifically, in the Negotiation phase, the TX receives the FOD Status Data Packet including information regarding the Reference Quality Factor Value and adjusts and determines a threshold value in the Q value measurement method.

The Reference Quality Factor Value is a Quality Factor which can be measured at a terminal of a power transmitting antenna of a test TX when the RX is placed on the test TX and a foreign object is not present nearby.

The TX considers this Reference Quality Factor Value to be equivalent to "Q value information when the RX is placed on the TX in a state in which a foreign object is not present" and uses it to determine a threshold value. That is to say, the TX can adjust and determine a threshold value for foreign object assessment using the waveform decay method on the basis of the Reference Quality Factor Value.

The Reference Quality Factor Value transmitted from the RX to the TX in the Negotiation phase is information used for foreign object detection in the Q value measurement method which originally measures the Quality Factor in the frequency domain.

Here, when the value of the Quality Factor is used as the waveform attenuation rate, the method for deriving the Quality Factor is different, but the Quality Factor can also be acquired, for example, from the waveform in FIG. 9 through the above Equation 1 even using the waveform decay method which measures the Quality Factor in the time domain.

For this reason, it is possible to set a threshold value for the Q value of the waveform decay method on the basis of the Reference Quality Factor Value. The value of the waveform attenuation rate obtained by taking a predetermined value (a value corresponding to the measurement error) for the Reference Quality Factor Value into account may be set as a threshold value for foreign object assessment.

In this way, the TX sets a threshold value for the Quality Factor of the waveform decay method on the basis of the information which has already been transmitted from the RX to the TX in the Negotiation phase, eliminating the need to execute new measurements or other processes to set the threshold value. As a result, it is possible to set the threshold value in a shorter time. The foreign object assessment that is based on the set threshold value and the measurement value of the Quality Factor is as described above.

A third threshold value setting method is a method in which the TX measures the waveform attenuation rate in a state in which a foreign object is not present and adjusts and determines a threshold value on the basis of the information of the measurement results. A timing at which a waveform decay rate is measured in advance in a state in which a foreign object is not present will be described below.

In the Negotiation phase of the WPC standard, if foreign object detection is executed using the Q value measurement method, and as a result, it is assessed that a foreign object is not present, the phase proceeds to the Calibration phase and the Power Transfer phase. That is to say, the fact that the phase has proceeded to a phase later than the Negotiation phase means that, as the result of foreign object detection using the Q value measurement method, it is assessed that a foreign object is not present.

It is highly likely that the waveform attenuation rate in a state in which a foreign object is not present can be measured in any one of the Negotiation phase, the Calibration phase, or the Power Transfer phase. Thus, a timing at which the waveform attenuation rate in a state in which a foreign object is not present is measured may be any one of the Negotiation phase, the Calibration phase, and the Power Transfer phase.

For example, it is assumed that the waveform attenuation rate is measured in the Power Transfer phase. A timing at which the waveform attenuation rate in a state in which a foreign object is not present is measured is set to a first stage of the Power Transfer phase.

The reason is that the more time that has passed since the Q value measurement method assessed that a foreign object was not present, the higher the probability that a foreign object will be present in the vicinity of the TX and the RX. The timing is specified by the RX or the TX and the TX measures the waveform attenuation rate at that time and sets the value of the waveform attenuation rate as the threshold value.

When the RX (or the TX) specifies the timing, the RX (or the TX) reports a timing by transmitting a predetermined packet to the TX (or the RX). A value obtained by taking a predetermined value (a value corresponding to a measurement error) into account in the waveform attenuation rate may be set as a threshold value for foreign object assessment.

A fourth threshold value setting method is a method in which the TX adjusts and determines a threshold value in accordance with the transmitted power. The value of the waveform attenuation rate is likely to vary in accordance with the transmitted power of the TX. This is because an amount of heat generated, the change in characteristics of the electric circuit of the TX, and the like change in accordance with an amount of the transmitted power of the TX, which affects the value of the waveform attenuation rate.

The TX measures the waveform attenuation rate for each transmitted power and adjusts and determines a threshold value on the basis of the measurement results, thereby enabling more accurate foreign object assessment.

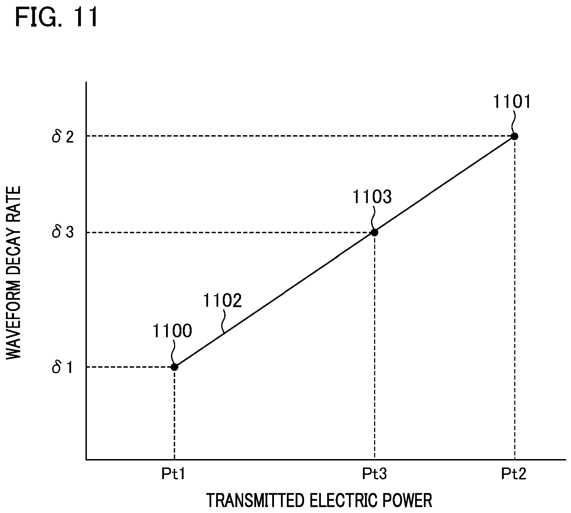

FIG. 11 is a diagram for explaining a threshold value setting method for foreign object assessment for each transmitted power of the TX in the waveform decay method. In FIG. 11, the horizontal axis represents transmitted power of the power transmitting apparatus 100 and the vertical axis represents a waveform attenuation rate (waveform decay rate) of the voltage waveform or the current waveform.

On a graph line indicated by straight line segment 1102, a point 1100 corresponds to a transmitted power value Pt1 and a waveform attenuation rate $\delta1$ and a point 1101 corresponds to a transmitted power value Pt2 and a waveform attenuation rate $\delta2$. On the graph line, a point 1103 corresponds to the transmitted power value Pt3 and a waveform attenuation rate $\delta3$.

First, when power is transmitted from the TX, the RX controls a load so that the RX is in a light load state. The light load state is a state in which power is not supplied to the load of the RX or only power less than a threshold value is supplied or power within a predetermined range (hereinafter referred to as a "third range") is supplied.

The transmitted power value of the TX in this state is set to Pt1. Furthermore, the RX transmit, to the TX, a packet which indicates requesting the execution of measurement of the waveform attenuation rate. In addition, if the TX receives the packet, the TX stops transmitting power while the load of the RX is controlled to a light load state or reduces the transmitted power and measures a waveform attenuation rate $\delta1$.

At this time, the TX recognizes the transmitted power value Pt1 and stores, in a memory, the CP 1100 that is a calibration point in which the transmitted power value Pt1 is associated with the waveform attenuation rate $\delta1$.

Subsequently, the RX executes control of the load connected state. The load connected state is a state in which, when power is transmitted from the TX, the maximum power is supplied to the load of the RX, power which is equal to or greater than a threshold value is supplied, or power within a predetermined range (hereinafter referred to as a "fourth range") is supplied.

Here, the "fourth range" is a range of power which is more than the "third range." The transmitted power value of the TX in this state is set to Pt2. Furthermore, the RX transmits a packet to the TX which indicates requesting the execution of measurement of the waveform attenuation rate.

Also, if the TX receives the packet, the TX stops transmitting power while the load of the RX is controlled to a load connected state or reduces the transmitted power and measures a waveform attenuation rate $\delta2$.

At this time, the TX stores, in a memory, the CP 1101 in which the transmitted power value Pt2 is associated with the waveform attenuation rate $\delta2$. Subsequently, the TX generates a line segment 1102 by linearly interpolating between the CP 1100 and the CP 1101.

The line segment 1102 shows a relationship between the transmitted power and the waveform attenuation rate of the waveform observed using the power transmitting antenna 105 in the first detection state in which a foreign object is not present in the vicinity of the TX and the RX. Thus, based on the line segment 1102, the TX can estimate the waveform attenuation rate of the waveform observed using the power transmitting antenna 105 for each transmitted power value in the first detection state.

For example, in the case of the transmitted power value Pt3, the waveform attenuation rate is estimated to be $\delta3$ from the point 1103 on a line segment 1102 corresponding to the Pt3. Based on the estimation results, the TX can calculate a threshold value used for assessing the presence or absence of a foreign object for each transmitted power value.

For example, a waveform attenuation rate which is larger than the estimated result of the waveform attenuation rate in the first detection state at a certain transmitted power value by a predetermined value (a value corresponding to a measurement error) can be set as a threshold value for foreign object assessment.

In order for the power transmitting apparatus 100 to obtain a combination of a transmitted power value and a waveform attenuation rate, the CAL process executed by the power transmitting apparatus 100 and the power receiving apparatus 200 is hereinafter referred to as a "CAL process for a waveform decay method."

Also, the power transmitting apparatus 100 and the power receiving apparatus 200 can execute the CAL process for the waveform decay method a plurality of times. Hereinafter, the CAL process for the waveform decay method executed again after the CAL process for the waveform decay method has been executed once will be referred to as a "Recalibration process for a waveform decay method."

Also, the Recalibration process is abbreviated as a "RECAL process." In the above example, measurements are executed at two points that are the transmitted power values Pt1 and Pt2. Here, in order to further improve accuracy, measurements may be executed at a plurality of (three or more) points to calculate the waveform attenuation rate of each transmitted power.

The RX may execute control of the light load state and control of the load connected state after reporting to the TX that the RX will execute the controls using a predetermined packet. In addition, the two controls may be executed in any order.

A process for calculating a threshold value used in the foreign object assessment for each load (or each transmitted power value) described in the embodiment may be executed in the calibration phase. As described above, in the calibration phase, the TX acquires data required when foreign object detection is executed using the Power Loss method.

At this time, the TX acquires data related to the received power value and power loss of each of the RXs when the load state of the RX is the light load state and when the load state of the RX is the load connected state. Thus, measurements of the CP 1100 and the CP 1101 in FIG. 11 may be executed together with measurements of power loss in the Calibration phase when the RX is in a light load state and when the RX is in a load connected state.

For example, when the TX receives a signal having first reference received power information from the RX, the TX executes measurement of the CP 1100 in addition to the predetermined process to be executed in the Calibration phase. Although this first reference received power information is RP1 information defined in the WPC standard, other messages may be used.

Also, when the TX receives a signal having second reference received power information from the RX, the TX executes measurement of the CP 1101 in addition to the predetermined process to be executed in the Calibration phase. Although this second reference received power information is RP2 information defined in the WPC standard, other messages may also be used.

Since there is no need to set aside a separate period for measuring the CP 1100 and the CP 1101, the measurements of the CP 1100 and the CP 1101 can be executed in a shorter time.

In this way, based on the information of the waveform attenuation rate measured using the TX at each transmitted power, the TX adjusts and sets the threshold value of the waveform attenuation rate of each transmitted power. For example, when the Quality Factor is used as the waveform attenuation rate, the TX compares the measurement value of the Quality Factor with the threshold value determined through the above method.

When the measurement value of the Q value is smaller than the threshold value, it is assessed that a "foreign object is present" or "there is a possibility that a foreign object is present." When the measurement value of the Quality Factor is equal to or greater than the threshold value, it is assessed that a foreign object is not present or that the possibility of a foreign object being present is low. As described above, the threshold value is set for each transmitted power of the TX, enabling more accurate foreign object assessment.

There may be more than one threshold value for foreign object assessment set through the above method. A plurality of threshold values can be set in stages. For example, a first threshold value is set as an assessment threshold value for "state abnormality presence," a second threshold value is set as an assessment threshold value for "high possibility of state abnormality," a third threshold value is set as an assessment threshold value for "low possibility of state abnormality," and a fourth threshold value is set as an assessment threshold value for "state abnormality absence."

Also, only a single run of the foreign object detection process is unlikely to be accurate in some cases. For example, when foreign object detection of the waveform decay method is executed, if transmitted power control is performed once and foreign object assessment is executed from the waveform attenuation rate at that time, there is a possibility that disturbances will occur in the amplitude and the phase of the power transmission waveform during the transmitted power control period in some cases.

Noise mixed during the transmitted power control period, positional deviations of the RX placed on the TX, or the like may occur. In this case, when the value of the waveform attenuation rate obtained from the power transmission waveform during one transmitted power control period is not accurate, there is a possibility that an erroneous assessment will occur in the foreign object assessment in some cases.

Thus, the TX executes transmitted power control a plurality of times, measures the waveform attenuation rate from the power transmission waveform during a plurality of transmitted power control periods, and is able to execute more accurate foreign object assessment on the basis of the results of the plurality of measurements.

As a coupling-state-indicator measurement method of the power transmitting antenna and the power receiving antenna, a first measurement method will be explained below. The measurement executed in the first measurement method is hereinafter referred to as "first measurement." In wireless power transfer, power is transmitted by electromagnetically coupling the power transmitting antenna 105 and the power receiving antenna 205.

A voltage is induced in the power receiving antenna 205 by flowing an alternating current (AC) current through the power transmitting antenna 105 and changing the magnetic flux passing through the power receiving antenna 205. A coupling coefficient (denoted by k and a value thereof called a k value) that is an index which represents a coupling state of the power transmitting antenna and the power receiving antenna satisfies "k=1" when, for example, all (100%) of the magnetic flux generated using the power transmitting antenna passes through the power receiving antenna.

Also, when 70% of the magnetic flux generated using the power transmitting antenna passes through the power receiving antenna, "k=0.7" is satisfied. In this case, the remaining magnetic flux (30%) generated using the power transmitting antenna is called leakage magnetic flux (leakage flux).

This is magnetic flux of magnetic flux generated using the power transmitting antenna which did not pass through the power receiving antenna. Thus, when the coupling state of the power transmitting antenna and the power receiving antenna is excellent and a k value is large, the transmission efficiency of power transferred from the TX to the RX is high. On the other hand, when the coupling state is not satisfied and a k value is small, the transmission efficiency of the power transferred from the TX to the RX is low.

Factors which decrease the k value include a foreign object (such as a metal piece) which enters between the power transmitting antenna and the power receiving antenna and positional deviation of the power transmitting antenna and the power receiving antenna. Another reason is that a distance between the power transmitting antenna and the power receiving antenna becomes larger.

When a foreign object enters between the power transmitting antenna and the power receiving antenna, heat is likely to be generated in the foreign object. Furthermore, if positional deviation or separation of the power transmitting antenna and the power receiving antenna occurs, since leakage magnetic flux (leakage flux) increases, a large amount of noise is likely to be generated in the surrounding region.

When the k value is small, appropriate control is required to achieve safer and higher quality wireless power transfer. In the embodiment, in order to improve the detection accuracy of a foreign object and the detection accuracy when the positional deviation or the distance is large, a detection process for a coupling state index (including a coupling coefficient) between the power transmitting antenna and the power receiving antenna is executed.

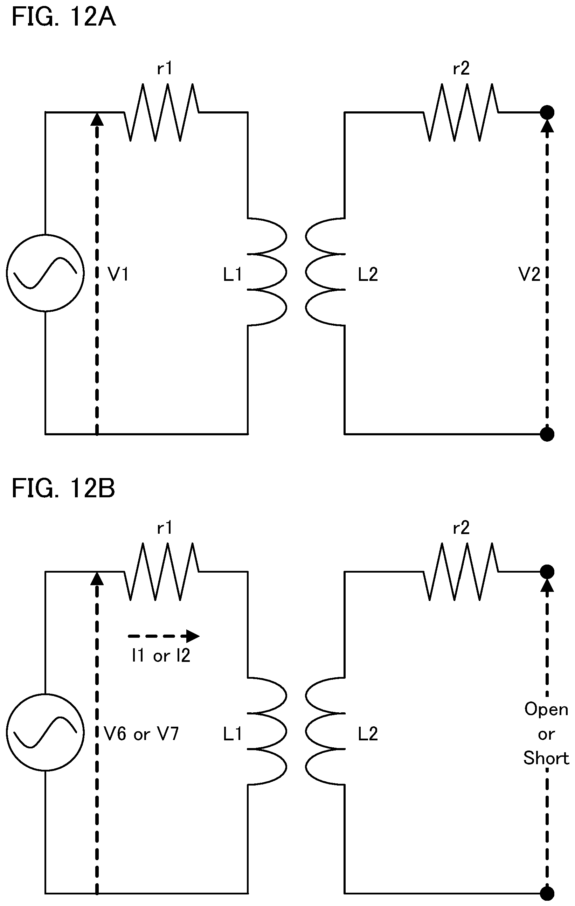

The coupling-state-indicator measurement method for the power transmitting antenna and the power receiving antenna will be described with reference to FIG. 12. FIG. 12(A) is an equivalent circuit diagram for explaining the first measurement method. The definitions of the quantities related to the power transmitting antenna (power transmitting coil) on a primary side (TX) will be shown below.

- r1: Winding resistance of power transmitting antenna.
- L1: Self-inductance of power transmitting antenna.
- V1: Power-transmitting voltage (input voltage) applied to power transmitting antenna measured by TX.

Also, the definitions of the quantities related to the power receiving antenna (power receiving coil) on a secondary side (RX) will be shown below.

- r2: Winding resistance of power receiving antenna.
- L2: Self-inductance of power receiving antenna.
- V2: Power-receiving voltage (output voltage) applied to power receiving antenna measured by RX

A coupling coefficient (k) of the power transmitting antenna and the power receiving antenna can be calculated by the following Equation 2.

$$K = (V2/V1) \cdot \sqrt{(L1/L2)} \qquad \text{(Equation 2)}$$

When the TX calculates the coupling coefficient k, the RX reports, to the TX, the measured power-receiving voltage V2 and the value of the self-inductance L2 of the power receiving antenna that the RX holds in advance. The TX calculates the k value using the measured power-transmitting voltage V1, the previously held value of the self-inductance L1 of the power transmitting antenna, and the values of the power-receiving voltage V2 and self-inductance L2 received from the RX.

Alternatively, the RX can report, to the TX, V2 and a constant calculated using either or both of the L1 and the L2 and the TX can calculate a k value using the constant and V2 received from the RX and a power-transmitting voltage V1 measured by the TX.

On the other hand, when the RX calculates a coupling coefficient k, the TX reports, to the RX, the measured power-transmitting voltage V1 and the value of the self-inductance L1 of the power transmitting antenna that the TX holds in advance. The RX calculates a k value using the measured power-receiving voltage V2, the previously held value of the self-inductance L2 of the power receiving antenna, and the values of the power-transmitting voltage V1 and self-inductance L1 received from the TX.

Alternatively, the TX can report, to the RX, V1 and a constant calculated using either or both of the L1 and the L2 and the RX can calculate a k value using the constant and V1 received from the TX and the power-receiving voltage V2 measured by the RX.

The power-transmitting voltage V1 is calculated by the TX by actually measuring a voltage applied to the power transmitting antenna or by the TX from a set value of the transmitted power. Alternatively, the power-transmitting voltage V1 may be set as the set value of the power-transmitting voltage during power transmission.

Also, a power-transmitting voltage V1 applied to the power transmitting antenna can be acquired from a power-transmitting voltage (denoted by V3) applied to a circuit (for example, an inverter) possessed by the power-transmitting unit 103 of the TX and a voltage applied to both ends of the resonant capacitor 107.

Here, a power-transmitting voltage V3 is, for example, an inverter input voltage input to an inverter possessed by the power-transmitting unit 103 of the TX or an inverter output voltage output by the inverter. In this case, the power-transmitting voltage V3 may also be calculated by the TX from the set value of the transmitted power.

Alternatively, the TX may actually measure the power-transmitting voltage V3 and the voltage applied to both ends of the resonant capacitor 107 and use them to acquire a power-transmitting voltage V1. Alternatively, the TX may transmit, to the RX, the measured power-transmitting voltage V3 and the voltage applied to both ends of the resonant capacitor 107 and the RX may calculate a k value by acquiring the power-transmitting voltage V1.

Also, when the TX or the RX executes the first measurement, the RX may control the third switch unit 213 to be turned off so that a terminal of the power receiving antenna 205 is in an open state. Thus, it is possible to keep both ends of the power receiving antenna open, as shown in FIG. 12(A).

Since the influence due to the resonant capacitor 211, the power-receiving unit 203, the charging unit 206, or the battery 207 is not provided in the first measurement, it is possible to measure the coupling coefficient k with higher accuracy. Furthermore, a power-receiving voltage V2 applied to the power receiving antenna can be acquired from the power-receiving voltage (denoted by V4) applied to a circuit possessed by the power-receiving unit 203 of the RX and the voltage applied to both ends of the resonant capacitor 211.

Here, the power-receiving voltage V4 is, for example, a rectifier unit input voltage input to a rectifier unit possessed by the power-receiving unit 203 of the RX. Alternatively, a power-receiving voltage V2 applied to the power receiving antenna can be acquired from a power-receiving voltage (denoted by V5) applied to a circuit possessed by the power-receiving unit 203 of the RX and a voltage applied to both ends of the resonant capacitor 211.

Here, the power-receiving voltage V5 is, for example, a rectifier unit output voltage output from a rectifier unit possessed by the power-receiving unit 203 of the RX. In this case, the RX may actually measure the power-receiving voltage V4 and the voltage applied to both ends of the resonant capacitor 211 and use them to acquire a power-receiving voltage V2.

Alternatively, the RX may actually measure a power-receiving voltage V5 and a voltage applied to both ends of the resonant capacitor 211 and use them to acquire a power-receiving voltage V2. Alternatively, the RX may transmit, to the TX, the measured values of the power-receiving voltage V4 and the voltage applied to both ends of the resonant capacitor 211 and the TX may calculate a k value by acquiring a power-receiving voltage V2.

Alternatively, the RX may transmit, to the TX, the measured values of the power-receiving voltage V5 and the voltage applied to both ends of the resonant capacitor 211 and the TX may calculate a k value by acquiring a power-receiving voltage V2.

Alternatively, when the TX or the RX executes the first measurement, the RX may be controlled to be in a light load state or in a load connected state. By keeping the load state of the RX constant, it is possible to measure the coupling coefficient k with higher accuracy.

Alternatively, the TX or the RX may be controlled to execute the first measurement in both states when the RX is in a light load state and when the RX is in a load connected state. Alternatively, the TX or the RX may be controlled so that the RX executes the first measurement in each of three or more load states. The coupling state in the load state of a plurality of RXs is measured, and based on the measured coupling state, the coupling state can be assessed with higher accuracy.

In addition to the coupling coefficient, there are a plurality of quantities which can be used as indices which represent the electromagnetic coupling state of the power transmitting antenna and the power receiving antenna. In the present disclosure, these are collectively called a "coupling state index." Each of the coupling state indices has a value corresponding to the electromagnetic coupling state of the power transmitting antenna and the power receiving antenna.

The details of the embodiment can be similarly applied even when using coupling state indexes other than the coupling coefficient.

For example, there is a method for using a power-transmitting voltage V3 applied to a circuit (for example, an inverter) possessed by the power-transmitting unit 103 of the TX and a power-receiving voltage V4 applied to a circuit (for example, a rectifier unit) possessed by the power-receiving unit 203 of the RX, as the coupling state index.

Using these voltage values, the coupling state index of the power transmitting antenna and the power receiving antenna can be calculated. Alternatively, the coupling state index of the power transmitting antenna and the power receiving antenna can be calculated using a power-transmitting voltage V3 applied to a circuit (for example, an inverter) possessed by the power-transmitting unit 103 of the TX and a voltage V5 applied to a circuit (for example, a rectifier unit) possessed by the power-receiving unit 203 of the RX.

Here, the voltage V5 is, for example, a rectifier unit output voltage output from a rectifier unit possessed by the power-receiving unit 203 of the RX or a voltage applied to a load (charging unit, battery). The TX reports, to the RX, the power-transmitting voltage V3 and the RX can calculate the coupling state index using the V4 or the V5 and the reported V3.

At this time, the TX reports, to the RX, a constant calculated using the electrical characteristics (for example, L1) of the power transmitting antenna and the RX can calculate the coupling state index using the constant.

Alternatively, the RX reports, to the TX, the power-receiving voltage V4 or V5 and the TX calculates a value of the coupling state index using V3 and the reported voltage V4 or V5. At this time, the RX reports, to the TX, a constant calculated using the electrical characteristics (for example, L2) of the power receiving antenna and the TX can calculate the coupling state index using the constant.

The TX and the RX transmit and receive information such as the values of the voltages V1 to V5, the values of self-inductances L1 and L2, or constants representing the electrical characteristics of the power transmitting antenna or the power receiving antenna. A timing of measuring a voltage value and a timing of transmitting and receiving each information will be explained below.

The measurement of each voltage value is executed, for example, in the Ping phase. In the Ping phase, the TX transmits a DP to the RX. Thus, a voltage value of any one of the V1, the V2, the V3, the V4, and the V5 which is generated when the DP is transmitted can be used.

In the Ping phase, the TX and the RX measure a value of any one of the V1 to the V5 and store and hold the measured value in the memory 106 or the memory 208.

The TX transmits, to the RX, a predetermined transmission request packet to request the RX to transmit a packet including information regarding a voltage value(s) of any or all of the V2, the V4, and the V5. When the RX receives the transmission request packet, the RX transmits, to the TX, a predetermined packet including information regarding a voltage value(s) of any or all of the V2, the V4, and the V5.

The TX receives a predetermined packet including information regarding a voltage value(s) any or all of the V2, the V4, and the V5 reported from the RX and stores the information in the memory 106. The information included in a predetermined packet may include not only the power-receiving voltage of the RX, but also information such as the received power, the requested received power value, the value of the self-inductance L2, and a constant calculated using the electrical characteristics of the power receiving antenna.

Also, information regarding the temperature of the RX may be included. The TX receives a signal including the information from the RX and can perform more appropriate control using the information and the coupling state index. As the predetermined packet, the Signal Strength Data packet can be used to report, to the TX, the information of the RX.

Alternatively, the predetermined packet may be an Identification Data packet or an Extended Identification Data packet in the I&C phase.

Alternatively, the predetermined packet may be a Configuration Data packet. Alternatively, the predetermined packet may be a packet in the calibration phase or in the Power Transfer phase.

That is to say, the predetermined packet may be RP1, RP2, or RP0. The present invention is not limited to an example in which the TX uses the voltage value generated when the DP is transmitted. The TX may use any one of the voltage values V1 to V5 generated when the AP is transmitted in the Selection phase.

Alternatively, any one of the voltage values V1 to V5 generated when the TX transmits power to the RX in the Power Transfer phase may be used.

The RX transmits, to the TX, a predetermined transmission request packet to request the TX to transmit a packet including information regarding a voltage value(s) of any or all of the V1 and the V3. When the TX receives the transmission request packet, the TX transmits, to the RX, a predetermined packet including information regarding any or all of the voltage values V1 and V3.

The RX receives a predetermined packet including information regarding any or all of the voltage values V1 and V3 reported from the TX and stores the information in the memory 208. The information included in the predetermined packet may include not only the voltage of the TX, but also information such as the transmitted power value, the transmittable power value, the value of self-inductance L1, and a constant calculated using the electrical characteristics of the power transmitting antenna.

Also, alternatively, the information may include foreign object detection results using foreign object detection methods (Power Loss method, Q value measurement method, waveform decay method), information regarding the temperature of the TX, and information regarding the current value of the power transmitting antenna 105.

The RX receives the information from the TX and can execute more appropriate control using the information and the coupling state index. In addition, the RX can report, to the RX, the information of the TX using a Power Transmitter Capabilities (CAP) Data Packet, as a predetermined packet.

Alternatively, the TX can report, to the RX, information using a Power Transmitter Identification (ID) data packet.

The present invention is not limited to an example in which the TX uses the voltage value generated when the DP is transmitted. The TX may use any one of the voltage values V1 to V5 generated when the AP is transmitted in the Selection phase. Alternatively, any one of the voltage values V1 to V5 generated when the TX transmits power to the RX in the Power Transfer phase may be used.

When executing the first measurement, the RX may control the third switch unit 213 between the resonant capacitor 211 and the power-receiving unit 203 to be turned off so that the terminal of the circuit formed of the power receiving antenna 205 and the resonant capacitor 211 is in an open state.

Thus, since the influences due to the power-receiving unit 203, the charging unit 206, and the battery 207 are not provided in executing the first measurement, it becomes possible to measure the coupling state index with higher accuracy. Alternatively, when the RX performs the first measurement method, the RX may control the load to be in the light load state described above.

When the RX performs the first measurement method, the load may be controlled so that the load is in the load connected state. Thus, it becomes possible to measure the coupling state index while keeping the load state in a predetermined state, enabling more accurate state detection.

As another example of the coupling-state-indicator measurement method of the power transmitting antenna and the power receiving antenna, a second measurement method will be explained below. The measurement executed in the second measurement method is hereinafter referred to as "second measurement." FIG. 12(B) is an equivalent circuit diagram for explaining the second measurement method.

r1, r2, L1, and L2 are the same as in FIG. 12(A). The definitions of the quantities related to the power transmitting antenna (coil) on a primary side (TX) will be shown below.

- V6: Input voltage (power-transmitting voltage) of the power transmitting antenna when the power receiving antenna side is in a short state.
- V7: Input voltage (power-transmitting voltage) of the power transmitting antenna when the power receiving antenna side is in an open state.
- I1: Current flowing through the power transmitting antenna when the power receiving antenna side is in a short state.
- I2: Current flowing through the power transmitting antenna when the power receiving antenna side is in an open state.

The coupling coefficient k can be calculated using the following Equation 3.

$$K = \sqrt{(1 - Lsc/Lopen)} \qquad \text{(Equation 3)}$$

In Equation 3, Lsc represents an inductance of the power transmitting antenna when both ends of the power receiving antenna are short-circuited. For example, the control unit 201 sets the third switch unit 213 and the second switch unit 210 to an ON state (short-circuit state).

In this state, an Lsc value can be acquired by measuring an inductance value of the power transmitting antenna. An inductance value of the power transmitting antenna can be acquired from an input voltage V6 and a current I1 of the power transmitting antenna.

In Equation 3, Lopen represents an inductance of the power transmitting antenna when both ends of the power receiving antenna are opened. For example, the control unit 201 sets the third switch unit 213 to an OFF state (open state). In this state, an Lopen value can be acquired by measuring an inductance value of the power transmitting antenna.

An inductance value of the power transmitting antenna can be acquired from an input voltage V7 and a current I2 of the power transmitting antenna. In the second measurement method, the coupling state index (coupling coefficient) can be acquired from the input voltage and current of the power transmitting antenna when both ends of the power receiving antenna are short-circuited and opened.

Also, the TX can calculate a coupling state index on the basis of a power-transmitting voltage and a current applied to a circuit (for example, an inverter) included in the power-transmitting unit 103. **In** this case, input voltages V6 and V7 represent power-transmitting voltages applied to the circuit (for example, an inverter) included in the power-transmitting unit 103.

Here, the power-transmitting voltages V6 and V7 applied to the circuit included in the power-transmitting unit 103 of the TX are, for example, an inverter input voltage or an inverter output voltage. Furthermore, the input voltages V6 and V7 may be voltages applied to both terminals of a series resonant circuit composed of a power transmitting antenna and a resonant capacitor.

Alternatively, a power-transmitting voltage applied to a circuit (for example, an inverter) included in the power-transmitting unit 103 and a voltage applied to both ends of the resonant capacitor 107 may be measured and a voltage applied to the power transmitting antenna may be calculated from the results.

That is to say, the coupling state index can be acquired from the measurement results of the power-transmitting voltage applied to the circuit (for example, an inverter) included in the power-transmitting unit 103 and the voltage applied to both ends of the resonant capacitor 107. The power-transmitting voltage applied to the circuit (for example, an inverter) included in the power-transmitting unit 103 in this case may be calculated by the TX from the set value of the transmitted power.

Also, in FIG. 12(B), the current I1 or I2 is not limited to a current flowing through the power transmitting antenna, but may be a current flowing through the circuit (for example, an inverter) included in the power-transmitting unit 103. Here, the current flowing through the circuit included in the power-transmitting unit 103 of the TX is, for example, an inverter input current or an inverter output current.

With regard to an open state and a short state of the power receiving antenna, an example in which the control unit 201 is realized by controlling the second switch unit 210 and the third switch unit 213 has been explained. These states may be realized using the power-receiving unit 203.

Also, instead of the short state, a Light Load state (a light load state) may be used. Also, instead of the open state, a Connected Load state (a load connected state) may be used.

In the second measurement method, the TX can calculate a coupling state index by measuring the input voltages V6 and V7 and the currents I1 and I2. Thus, since information such as a voltage value measured by the RX or an inductance value of the power receiving antenna is not required, there is no need for the RX to report, to the TX, such information.

Here, when the TX measures the input voltage V6 and the current I1, the RX needs to short (short-circuit) both terminals of the circuit including the power receiving antenna. Furthermore, when the TX measures the input voltage V7 and the current I2, the RX needs to open (open-circuit) both terminals of the circuit including the power receiving antenna.

That is to say, in accordance with the timing at which the TX measures the input voltage and the current, the RX needs to control both terminals of the circuit including the power receiving antenna to a SHORT (short-circuit) state or an OPEN (open-circuit) state.

If the control is completed, the TX executes the measurement. A timing of the measurement is determined by the TX and reported to the RX or determined by the RX and reported to the TX. In addition, the RX provides a report to the TX if control in which both terminals of the circuit including the power receiving antenna are controlled to a SHORT (short-circuit) state or an OPEN (open-circuit) state has been completed.

These reports are provided through communication that is based on the WPC standard executed between the first communication unit 104 of the TX and the first communication unit 204 of the RX or through communication executed between the second communication unit 109 of the TX and the second communication unit 212 of the RX using a standard other than the WPC standard.

The measurement of the input voltages V6 and V7 and the currents I1 and I2 is executed, for example, in the Ping phase. In the Ping phase, the TX transmits a DP to the RX. Thus, the values of the V6 and the V7 and the currents I1 and I2 generated when the DP is transmitted can be used.

In the Pin phase, the TX acquires the values of the V6, the V7, the I1, and the I2, holds them in the memory 106, and calculates a coupling state index. The present invention is not limited to the example in which the TX uses the voltage value and the current value generated when the DP is transmitted.

For example, the values of the V6, the V7, the I1, and the I2 generated when the TX transmits the AP in the Selection phase may be used. Alternatively, the voltage values of the V6, the V7, the I1, and the I2 generated when the TX transmits power to the RX in the Power Transfer phase may be used.

In the present disclosure, both the first and second measurement methods are applicable for the coupling-state-indicator measurement method for the power transmitting antenna and the power receiving antenna. A method for setting a state assessment threshold value for a coupling state index obtained through the first or second measurement method will be explained below.

State assessment includes an assessment related to foreign object detection between a power transmitting antenna and a power receiving antenna, an assessment related to detection of positional deviation of a power transmitting antenna and a power receiving antenna, an assessment related to detection that a power transmitting antenna and a power receiving antenna are separated from each other, and the like.

It is possible to execute a first or second measurement and assess the presence or absence of a state abnormality using a state assessment threshold value. First to fourth threshold value setting methods will be described below.

The first threshold value setting method is a method for setting, as a threshold value, for a coupling state index used for state detection between a power transmitting antenna and a power receiving antenna, a value of a coupling state index in a state in which there is no state abnormality. In state detection, for example, assessment results such as "state abnormality presence," "high possibility of state abnormality," "low possibility of state abnormality," and "state abnormality absence" can be obtained.

It is assumed that an RX is placed on a test TX and there is no state abnormality between the power transmitting antenna and the power receiving antenna. In this case, a value of a coupling state index of the test TX including the power transmitting antenna and the RX including the power receiving antenna can be set as a threshold value.

The RX holds the value (threshold value) of the coupling state index measured in advance in a memory and reports the threshold value to the TX. The TX uses the threshold value to execute an assessment process related to state detection. With regard to this threshold value, the RX may transmit, to the TX, the threshold value included in an FOD Status Data packet defined using the WPC standard.

Alternatively, a value of a coupling state index of the power transmitting antenna and the power receiving antenna at which a predetermined power transmission efficiency is obtained may be set as the threshold value. In state detection, for example, the following assessment results are obtained.

- "Predetermined power transmission efficiency will not be achieved" or "Coupling of the power transmitting antenna and the power receiving antenna is weak."
- "It is highly likely that a predetermined power transmission efficiency will not be achieved" or "Coupling of the power transmitting antenna and the power receiving antenna is likely to be weak."

- "It is highly likely that a predetermined power transmission efficiency will be achieved" or "Coupling of the power transmitting antenna and the power receiving antenna is likely to be excellent."
- "Predetermined power transmission efficiency is achieved" or "Coupling state of the power transmitting antenna and the power receiving antenna is excellent."

Here, it is assumed that an RX is placed on a test TX, there is no state abnormality between the power transmitting antenna and the power receiving antenna, and a predetermined power transmission efficiency is obtained. In this case, a value of a coupling state index of the test TX including the power transmitting antenna and the RX including the power receiving antenna can be set as the threshold value.

The RX holds the value of the coupling state index measured in advance in memory as a threshold value and reports the threshold value to the TX. The TX uses this threshold value to execute an assessment process related to state detection. With regard to this threshold value, the RX may transmit, to the TX, the threshold value included in the FOD Status Data packet defined in the WPC standard.

The second threshold value setting method is a method in which, in a predetermined state, the TX and the RX set a coupling state index measured through the first or second measurement method as a threshold value. The predetermined state is a state in which there is no state abnormality between the power transmitting antenna and the power receiving antenna.

In a method for checking this state, it is possible to utilize state detection of the TX and the RX such as foreign object detection using the Power Loss method, foreign object detection using the waveform decay method, foreign object detection using the Q value measurement method, and foreign object detection that is based on a temperature of the TX or the RX which will be described later.

As a result, when it is determined that there is no state abnormality, it can be confirmed with a high probability that "there is no state abnormality between the power transmitting antenna and the power receiving antenna." That is to say, this confirmation is executed through methods and means other than the first or second measurement method.

As a result, when the result is assessed to be "state abnormality absence" (or "foreign object absence"), a coupling state index is measured using the first or second measurement method and an appropriate threshold value is set on the basis of the measurement result.

For example, in the WPC standard, a foreign object detection process in which the Q value measurement method is used is executed in the Negotiation phase or the Renegotiation phase. As the results of the foreign object detection process, when it is assessed to be "state abnormality absence" (or "foreign object absence"), the coupling state index is measured using the first or second measurement method after the Negotiation phase or the Renegotiation phase.

It is possible to set a more appropriate threshold value on the basis of the measurement results. Furthermore, the foreign object detection process using the Power Loss method is executed in the Power Transfer phase. After the foreign object detection process is executed, the coupling state index is measured using the first or second measurement method and a more appropriate threshold value can be set on the basis of the measurement result.

Alternatively, the TX can execute the foreign object detection process using the AP or the DP transmitted by the TX in the Selection phase or the Ping phase, the Quality Factor measured through the waveform decay method, or the like.

In this case, the coupling state index is measured using the first or second measurement method after the phase in which the foreign object detection process is executed and an appropriate threshold value can be set on the basis of the measurement results.

Alternatively, the foreign object detection process in which the waveform decay method described above is used is executed in the Power Transfer phase. After the foreign object detection process is executed, the coupling state index is measured using the first or second measurement method and a more appropriate threshold value can be set on the basis of the measurement result.

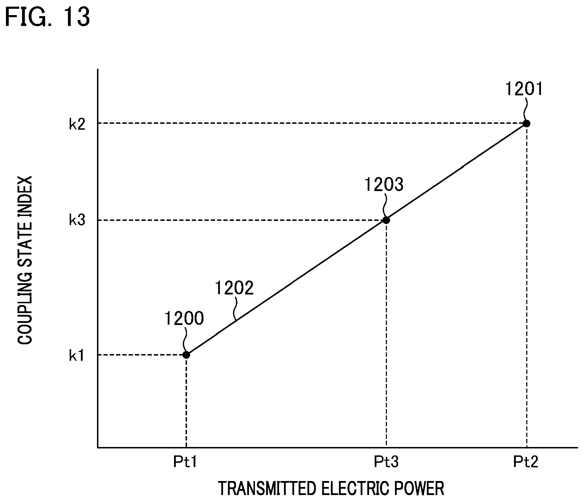

The third threshold value setting method will be described below with reference to FIG. 13. FIG. 13 is a diagram for explaining a threshold value setting method in state detection using the coupling state index. In FIG. 13, the horizontal axis represents transmitted power and the vertical axis represents a coupling state index.

On a graph line indicated by straight line segment 1202, a point 1200 corresponds to a transmitted power value Pt1 and a coupling state index value k1 and a point 1201 corresponds to a transmitted power value Pt2 and a coupling state index value k2.

On the graph line, a point 1203 corresponds to a transmitted power value Pt3 and a coupling state index value k3. In calculating each coupling state index value, the first measurement method or the second measurement method described above can be used.

As shown in FIG. 3, since the charging unit 206 and the battery 207 are connected as loads to the power-receiving unit 203 of the RX, the calculated coupling state index value changes in accordance with a state of each of the loads. In order to assess the presence or absence of state abnormalities in accordance with the state of the load, it is necessary to set a threshold value for the coupling state index.

First, when power is transmitted from the TX, the RX controls the load so that the load is in a light load state. The light load state is a state in which power is not supplied to the load of the RX or a state in which only power of the threshold value or less is supplied.

Alternatively, the light load state is a load state in which a received power value of the RX falls within a predetermined range which has been determined in advance (hereinafter referred to as a "fifth range"). The transmitted power value of the TX in this state is set to the Pt1. Furthermore, the RX transmits, to the TX, a packet which indicates requesting the execution of measurement of the coupling state index.

Alternatively, the TX may transmit, to the RX, a packet which indicates the execution of measurement of the coupling state index. In this state, the TX and the RX measure the power-transmitting voltage on the TX side and the power-receiving voltage on the RX side.

The TX and the RX exchange information such as the values of the V1 to the V7, the values of the self-inductance L1 and L2, or constants calculated using the electrical characteristics of the power transmitting antenna and the power receiving antenna and the TX or the RX calculates the coupling state index value k1.

When the RX calculates the coupling state index value k1, the RX reports the result to the TX. When the TX calculates the coupling state index value k1, the TX reports the result and the Pt1 to the RX. At this time, the TX recognizes the transmitted power value Pt1 and stores, in a memory, a CP 1200 which associates the Pt1 with k1.

Also, alternatively, the RX stores, in a memory, the CP 1200 which associates the Pt1 with the k1. Subsequently, when power is transmitted from the TX, the RX controls the load of the RX so that the RX is in a load connected state. The load connected state is a state in which maximum power is supplied to the load of the RX and a state in which power which is equal to or greater than a threshold value is supplied.

Here, "maximum power" refers to power whose value is close to the Reference Power. Alternatively, the load state is a load state in which the received power value of the RX falls within a predetermined range which has been determined in advance (hereinafter referred to as a "sixth range").

Here, the sixth range is a range of power values higher than the fifth range. The transmitted power value of the TX in this state is set to the Pt2. Furthermore, the RX transmits, to the TX, a packet which indicates requesting the execution of the measurement of the coupling state index. Alternatively, the TX transmits, to the RX, a packet which indicates requesting the execution of the measurement of the coupling state index.

In this state, the TX and the RX measure the power-transmitting voltage on the TX side and the power-receiving voltage on the RX side. The TX and the RX exchange information such as the values of the V1 to the V7, the values of the self-inductance L1 and L2, or a constant calculated using the electrical characteristics of the power transmitting antenna and the power receiving antenna and the TX or the RX calculates the coupling state index value k2.

When the RX calculates the coupling state index value k2, the RX reports the result to the TX. When the TX calculates the coupling state index value k2, the TX reports the result and Pt2 to the RX. The TX stores, in a memory, a CP 1201 which associates the Pt2 with the k2.

Also, alternatively, the RX stores, in a memory, the CP 1201 which associates the Pt2 with the k2. Subsequently, the TX executes linear interpolation between the CP 1200 and the CP 1201 to generate a line segment 1202.

The line segment 1202 shows a relationship of the transmitted power and the coupling state index in a state in which there is no state abnormality around the TX and the RX. Using the line segment 1202, the TX can estimate a coupling state index value for each transmitted power value in a state in which there is no state abnormality around the TX and the RX.

For example, it is assumed that a transmitted power value is Pt3. In this case, a coupling state index value k3 can be estimated from a point 1203 on the line segment 1202 which corresponds to the transmitted power value Pt3. Based on the estimation results, the TX can calculate a threshold value used for assessing whether a state abnormality exists for each transmitted power value.

For example, a coupling state index value obtained by taking a predetermined value (a value corresponding to a measurement error) into account in the estimation result of the coupling state index value in the case of the state abnormality absence at a certain transmitted power value can be set as an assessment threshold value.

In this way, the Calibration process executed by the power transmitting apparatus 100 and the power receiving apparatus 200 in order for the power transmitting apparatus 100 to obtain a combination of the transmitted power value and the coupling state index value is referred to as a "CAL process for a coupling-state-indicator measurement method." Furthermore, the power transmitting apparatus 100 and the power receiving apparatus 200 can execute the CAL process for the coupling-state-indicator measurement method a plurality of times.

The CAL process for the coupling-state-indicator measurement method which is executed again after the CAL process for the coupling-state-indicator measurement method has been executed once is hereinafter referred to as a "ReCalibration process for a coupling-state-indicator measurement method."

Also, the ReCalibration process is abbreviated as a RECAL process. The RX may control the load to enter a light load state and a load connected state after reporting, to the TX, that the control will be executed. Furthermore, any one of these two controls may be executed first.

In the embodiment, an operation for calculating an assessment threshold value of state detection for each load (or for each transmitted power value) is executed in, for example, a Calibration phase. In this phase, the TX acquires the data required when executing foreign object detection using the Power Loss method.

At this time, the TX acquires data regarding an amount of power loss when the load state of the RX is in a light load state and when the load state of the RX is in a load connected state. Thus, the measurements of the CP 1200 and the CP 1201 in FIG. 13 can be executed together with the measurement of power loss when the RX is in a light load state and in a load connected state in the Calibration phase.

That is to say, when the TX receives the first reference received power information from the RX, in addition to a predetermined process which needs to be executed in the Calibration phase, the TX measures the CP 1200. Although the first reference received power information is information according to RP1 defined in the WPC standard, other messages may also be used.

Also, when the TX receives the second reference received power information from the RX, in addition to the predetermined process which needs to be executed in the Calibration phase, the TX measures the CP 1201. Although the second reference received power information is information according to RP2 defined in the WPC standard, other messages may also be used. In this way, since there is no need to provide a separate period during which the CP 1200 and the CP 1201 are measured, it is possible to measure the CP 1200 and the CP 1201 in a shorter time.

The fourth threshold value setting method is a method in which the TX or the RX sets a threshold value in advance for a coupling state index whose value falls within a predetermined range. With regard to this threshold value, a predetermined value which has been determined in advance is held by the TX or the RX as a common value which does not depend on the RX to which power is transmitted.

The threshold value may be a fixed value which does not depend on the situation or may be a variable value which is determined by the TX or the RX in accordance with the situation. For example, if the coupling state index is defined as a coupling coefficient k, a range of the k value satisfies "0≤k≤1."

For example, the TX or the RX determines the state to be "state abnormality presence" when "0≤k<0.2" is satisfied and determines the state to be "high possibility of state abnormality when "0.2≤k<0.5" is satisfied. The TX or the RX determines the state to be "low possibility of state abnormality" when "0.5≤k<0.8" is satisfied and determines the state to be "state abnormality absence" when "0.8≤k≤1" is satisfied.

Data regarding conditions for the k value is held in advance in a memory and the determination process is executed on the basis of this data.

Alternatively, the TX or the RX may determine that, for example, when "0≤k<0.2" is satisfied, "predetermined power transmission efficiency is not obtained" or the "coupling between the power transmitting antenna and the power receiving antenna is weak."

The TX or the RX determines that, when "0.2≤k<0.5" is satisfied, "there is a high possibility that a predetermined power transmission efficiency will not be obtained" or the "coupling between the power transmitting antenna and the power receiving antenna is likely to be weak."

The TX or the RX determines that, when "0.5≤k<0.8" is satisfied, a "predetermined power transmission efficiency is likely to be achieved" or the "coupling state of the power transmitting antenna and the power receiving antenna is likely to be excellent."

The TX or the RX determines that, when "0.8≤k≤1" is satisfied, a "predetermined power transmission efficiency is achieved" or the "coupling state of the power transmitting antenna and the power receiving antenna is excellent." Data regarding conditions for the k value is held in advance in a memory and the determination process is executed on the basis of this data.

Also, even in setting the assessment threshold value for state detection using the coupling state index, a value obtained by taking a predetermined value (a value corresponding to a measurement error) into account in the coupling state index value calculated on the basis of the measurement results or the reception information can be set as an assessment threshold value. As described above, the threshold value is not limited to one, but a plurality of threshold values can be set in stages.

A timing of calculating a coupling state of the power transmitting antenna and the power receiving antenna using the first or second measurement method will be described below. The calculation (measurement) of the coupling state index is executed by the RX which transmits a predetermined packet to the TX.

Here, the predetermined packet is a Signal Strength Data packet that the RX transmits to the TX. Alternatively, the predetermined packet may be an Identification Data packet, an Extended Identification Data packet, or a Configuration Data packet in the I&C phase.

Alternatively, the predetermined packet may be a packet in the Calibration phase or the Power Transfer phase. That is to say, the predetermined packet may be RP1, RP2, or RP0.

When the TX receives a predetermined packet from the RX, the TX calculates a coupling state index of the power transmitting antenna and the power receiving antenna. Furthermore, the TX makes an assessment by comparing the assessment threshold value set through the above method with the calculated coupling state index.

When it is assessed to be "state abnormality absence," the TX transmits, to the RX, a positive response ACK with respect to the RX or state information indicating "state abnormality absence." When it is assessed to be "low possibility of state abnormality" and when it is assessed to be "high possibility of state abnormality," the TX transmits, to the RX, state information indicating each of the assessment results.

When it is assessed to be "state abnormality presence," the TX transmits, to the RX, a negative response NAK with respect to the RX or state information indicating "state abnormality presence."

Alternatively, when it is assessed that a "predetermined power transmission efficiency is achieved" or the "coupling state of the power transmitting antenna and the power receiving antenna is excellent," the TX transmits, to the RX, a positive response ACK or transmits, to the RX, state information indicating the assessment results.

When it is assessed that "it is highly likely that a predetermined power transmission efficiency will be achieved" or the "coupling state of the power transmitting antenna and the power receiving antenna which is likely to be excellent," the TX transmits, to the RX, state information indicating the assessment results.

When it is assessed that "it is highly likely that a predetermined power transmission efficiency will not be achieved" or the "coupling of the power transmitting antenna and the power receiving antenna is likely to be weak," the TX transmits, to the RX, state information indicating the assessment results.

When it is assessed that a "predetermined power transmission efficiency is not achieved" or the "coupling of the power transmitting antenna and the power receiving antenna is weak," the TX transmits, to the RX, a negative response NAK or transmits, to the RX, state information indicating the assessment results.

The state information is, for example, numerical value information according to the state as follows.

- State information "0" corresponding to the assessment result of "state abnormality absence," a "predetermined power transmission efficiency which is achieved," or the "coupling state of the power transmitting antenna and power receiving antenna which is excellent."
- State information "1" corresponding to the assessment result of "low possibility of state abnormality," a "predetermined power transmission efficiency which is highly likely to be achieved," or the "coupling state of the power transmitting antenna and the power receiving antenna which is likely to be excellent."
- State information "2" corresponding to the assessment result of "high possibility of state abnormality," the "fact that it is highly likely that a predetermined power transmission efficiency cannot be achieved," or the "coupling of the power transmitting antenna and the power receiving antenna which is likely to be weak."
- State information "3" corresponding to the assessment result of "state abnormality presence," a "predetermined power transmission efficiency which cannot be achieved," or the "coupling of the power transmitting antenna and the power receiving antenna is weak."

Alternatively, the calculation (measurement) of the coupling state index is executed by the TX which transmits a predetermined packet to the RX. The predetermined packet is a Power Transmitter Capabilities (CAP) Data Packet that the TX transmits to the RX.

Alternatively, the predetermined packet is a Power Transmitter Identification (ID) data packet. When the RX receives a predetermined packet from the TX, the RX calculates a coupling state index of the power transmitting antenna and the power receiving antenna.

Also, the RX assesses a state by comparing the assessment threshold value set through the above method with the calculated coupling state index. When it is assessed to be "state abnormality absence," the RX transmits, to the TX, a predetermined packet including state information indicating the assessment result.

When it is assessed to be "low possibility of state abnormality" and when it is assessed to be "high possibility of state abnormality," the RX transmits, to the TX, a predetermined packet including state information indicating each of the assessment results. When it is assessed to be "state abnormality presence," the RX transmits, to the TX, a predetermined packet including state information indicating the assessment result.

Alternatively, when it is assessed that a "predetermined power transmission efficiency is achieved" or the "coupling state of the power transmitting antenna and the power receiving antenna is excellent," the RX transmits, to the TX, state information indicating the assessment result.

When it is assessed that a "predetermined power transmission efficiency is highly likely to be achieved" or the "coupling state of the power transmitting antenna and the power receiving antenna is likely to be excellent," the RX transmits, to the TX, state information indicating the assessment result.

When it is assessed that a "fact that it is highly likely that a predetermined power transmission efficiency cannot be achieved" or the "coupling of the power transmitting antenna and the power receiving antenna is likely to be weak," the RX transmits, to the TX, state information indicating the assessment result.

When it is assessed that a "predetermined power transmission efficiency cannot be achieved" or the "coupling of the power transmitting antenna and the power receiving antenna is weak," the RX transmits, to the TX, state information indicating the assessment result. Examples of state information are as described above.

A foreign object detection method that is based on a temperature of the TX or the RX will be described below. It is assumed that each of the TX and the RX has temperature sensors at a plurality of locations. Particularly, the power transmitting antenna 105, the charging stand 300, and the power receiving antenna 205 have temperature sensors disposed at a higher density than other locations.

It becomes possible to detect a foreign object existing between the TX and the RX with higher accuracy. The TX or the RX executes a foreign object detection process that is based on a detection temperature. The TX acquires a detection value of each of the temperature sensors at a predetermined timing.

The predetermined timing occurs for each predetermined period which has been determined in advance or when the TX receives a predetermined packet from the RX. When the detection value of the temperature sensor is greater than a threshold value, the TX assesses that a foreign object is highly likely to be present.

Also, the TX calculates a temperature rise rate on the basis of a plurality of temperature detection values acquired at the predetermined timing. If the temperature rise rate is greater than a threshold value, the TX assesses that a foreign object is highly likely to be present.

The assessment result is reported to the RX using a predetermined packet. Alternatively, when the assessment result is acquired, the TX executes the control to limit the power transmission described above (stopping of the transmitting of power or reducing the transmitted power).

A foreign object detection process that is based on a temperature of the RX will be explained below. The RX acquires a detection value of each of the temperature sensors at a predetermined timing. The predetermined timing occurs for each predetermined period which has been determined in advance or when the RX receives a predetermined packet from the TX.

When the detection value of the temperature sensor is greater than a threshold value, the RX assesses that a foreign object is highly likely to be present. Furthermore, the RX calculates a temperature rise rate on the basis of a plurality of temperature detection values acquired at a predetermined timing.

When the temperature rise rate is greater than the threshold value, the RX assesses that a foreign object is highly likely to be present. The RX reports the assessment result to the TX using a predetermined packet. Alternatively, when the assessment result is acquired, the RX executes a process for transmitting, to the TX, a predetermined packet to request a limit on power transmission (stopping transmitting power or reducing transmitted power).

A foreign object detection method that is based on a current value related to a current flowing through the power transmitting antenna of the TX (hereinafter referred to as a "first current value") and a current value related to a current flowing through the power receiving antenna of the RX (hereinafter referred to as a "second current value") will be described below.

The TX or the RX executes a foreign object detection process on the basis of the detected first or second current value. The TX acquires the first current value at a predetermined timing. The predetermined timing occurs for each predetermined period which has been determined in advance or when the TX receives a predetermined packet from the RX.

When the first current value is greater than the threshold value, the TX assesses that a foreign object is highly likely to be present. Furthermore, the TX calculates a rate of increase of a current value on the basis of the first current value obtained at a predetermined timing.

When the rate of increase of the current value is greater than the threshold value, the TX assesses that a foreign object is highly likely to be present. The assessment result is reported to the RX using a predetermined packet. Alternatively, when the assessment result is acquired, the TX executes control to limit transmitting power (stopping transmitting power or reducing the transmitted power).

A foreign object detection process that is based on a second current value in the RX will be explained below. The RX acquires the second current value at a predetermined timing. The predetermined timing occurs for each predetermined period which has been determined in advance or when the RX receives a predetermined packet from the TX.

When the second current value is greater than a threshold value, the RX assesses that a foreign object is highly likely to be present. Furthermore, the RX calculates a rate of increase of a current value on the basis of the second current value acquired at the predetermined timing. When the rate of increase of the current value is greater than the threshold value, the RX assesses that a foreign object is highly likely to be present.

The assessment result is reported to the TX using a predetermined packet. Alternatively, when the assessment result is acquired, the RX executes a process for transmitting, to the TX, a predetermined packet to request a limit on transmitting power (stopping transmitting power or reducing transmitted power). As described above, by measuring the first or second current value, more accurate foreign object detection is possible on the basis of the measurement results.

When detecting a state abnormality of the TX or the RX, the TX and the RX may execute the detection through a combination of a plurality of foreign object detection processes. That is to say, the Q value measurement method, the Power Loss method, the waveform decay method, the coupling-state-indicator measurement method, a foreign object detection process that is based on a temperature, and a foreign object detection process that is based on a current flowing through the power transmitting antenna or the power receiving antenna may be combined.

The foreign object detection process that is based on the coupling-state-indicator measurement method is referred to as the first foreign object detection process, the foreign object detection process that is based on the temperature of the TX is referred to as the second foreign object detection process, and the foreign object detection process that is based on the current flowing through the power transmitting antenna is referred to as the third foreign object detection process.

It is assumed that a main object which executes the first to third foreign object detection processes is the TX. In this case, the TX executes a foreign object detection process selected from the first to third foreign object detection processes and reports the foreign object assessment result to the RX. When the foreign object assessment result is a "foreign object which is highly likely to be present" or a "foreign object which is present," the RX reports, to the TX, a packet to request the execution of a predetermined foreign object detection process.

The predetermined foreign object detection process is a foreign object detection process that is based on one or more of the Q value measurement method, the Power Loss method, and the waveform decay method. The TX executes a predetermined foreign object detection process in accordance with an execution request from the RX and reports the foreign object assessment result to the RX.

When the foreign object assessment result is a "foreign object which is highly likely to be present" or a "foreign object which is present," the RX transmits, to the TX, a packet to request a limit on transmitting power or a packet to request the above-described RECAL process. A packet to request a limit on transmitting power or a packet to request the above-described RECAL process (hereinafter, these packets will be referred to as limit request packets) is, for example, a packet to request that a GP value is set to a lower value or RP1 or RP2 to request the RECAL process for the Power Loss method.

Alternatively, the packet is a packet to request the RECAL process for the waveform decay method or the RECAL process for the coupling-state-indicator measurement method. Alternatively, the packet is an EPT packet to request stopping transmitting power.

Alternatively, the TX executes a foreign object detection process that is based on one or more of the Q value measurement method, the Power Loss method, and the waveform decay method and reports the foreign object assessment result to the RX. When the foreign object assessment result is a "foreign object which is highly likely to be present" or a "foreign object which is present," the RX transmits, to the TX, a packet to request the execution of a foreign object detection process selected from the first to third foreign object detection processes.

The TX executes any one of the first to third foreign object detection processes or a plurality of processes in accordance with the packet and reports the foreign object assessment result to the RX. When the foreign object assessment result is a "foreign object which is highly likely to be present" or a "foreign object which is present," the RX transmits a limit request packet to the TX.

Also, the foreign object detection process that is based on the temperature of the RX is referred to as the fourth foreign object detection process and the foreign object detection process that is based on the current flowing through the power receiving antenna is referred to as the fifth foreign object detection process. It is assumed that a main object which executes the first, fourth, and fifth foreign object detection processes is the RX.

In this case, the RX executes a foreign object detection process selected from the first, fourth, and fifth foreign object detection processes and reports the foreign object assessment result to the TX. When the foreign object assessment result is a "foreign object which is highly likely to be present" or a "foreign object which is present," the RX reports, to the TX, a packet to request the execution of a predetermined foreign object detection process.

The predetermined foreign object detection process is a foreign object detection process that is based on one or more of the Q value measurement method, the Power Loss method, and the waveform decay method. The TX executes the predetermined foreign object detection process in accordance with the request from the RX and reports the foreign object assessment result to the RX.

When the determination result of the foreign object detection process is a "foreign object which is highly likely to be present" or a "foreign object which is present," the RX transmits a limit request packet to the TX.

Alternatively, the TX executes a foreign object detection process that is based on one or more of the Q value measurement method, the Power Loss method, and the waveform decay method and reports the foreign object assessment result to the RX. It is assumed that the foreign object assessment result is a "foreign object which is highly likely to be present" or a "foreign object which is present."

In this case, the RX acquires the coupling state index, the temperature detection value of the RX, or the current value flowing through the power receiving antenna of the RX, executes the foreign object detection process, and reports the foreign object assessment result to the TX. When the foreign object assessment result is a "foreign object which is highly likely to be present" or a "foreign object which is present," the RX transmits a limit request packet to the TX.

In the above example, the TX or the RX executes the first foreign object detection process, the second or fourth foreign object detection process, the third or fifth foreign object detection process, and other foreign object detection processes at different times. The other foreign object detection processes are foreign object detection processes that are based on one or more of the Q value measurement method, the Power Loss method, and the waveform decay method.

Without being limited to this example, the TX or the RX may execute the first foreign object detection process, the second or fourth foreign object detection process, the third or fifth foreign object detection process, and other foreign object detection processes at the same time.

When the RX (or the TX) specifies a timing, the RX (or the TX) reports the timing by transmitting a predetermined packet to the TX (or the RX). For example, when the TX (or the RX) receives a predetermined packet, it executes the second (or fourth) foreign object detection process and the foreign object detection process using the Power Loss method.

Alternatively, when the TX (or the RX) receives a predetermined packet, it executes the second (or fourth) foreign object detection process and the foreign object detection process using the waveform decay method.

Alternatively, when the TX (or the RX) receives a predetermined packet, it executes the second (or fourth) foreign object detection process, the foreign object detection process using the Power Loss method, and the foreign object detection process using the waveform decay method. With regard to the foreign object detection process, any combination is possible and the combination can be changed in accordance with the setting details of predetermined conditions or the like.

Also, in the above example, the limit request packet is defined as a "packet to request a limit on transmitting power or a packet to request the above-described RECAL process." Without being limited to this, the above-described limit request packet may be interpreted as two packets: a "packet to request a limit on transmitting power and a packet to request a RECAL process."

In the embodiment, any one of the plurality of foreign object detection processes described above is executed as a state detection process that is based on a physical quantity measurement process (CAL process) related to the power transmitting apparatus. It is determined whether to limit transmitting power or to execute the RECAL process on the basis of information acquired during the first state detection and information obtained during the second state detection that is based on the measurement process executed after the measurement process executed during the first state detection.

It is assumed that the power transmitting apparatus has determined that the power receiving apparatus needs to request the power transmitting apparatus to execute the RECAL process. In this case, the power transmitting apparatus transmits, to the power receiving apparatus, the detection result related to the first or second state detection and information regarding the execution request of the RECAL process. According to the embodiment, in wireless power transfer from the power transmitting apparatus to the power receiving apparatus, more suitable control can be executed on the basis of a plurality of state detection results.

[Second embodiment]

A second embodiment will be explained below. In the first embodiment, the Q value measurement method, the Power Loss method, the waveform decay method, the coupling-state-indicator measurement method, the foreign object detection method that is based on the temperature, and the foreign object detection method that is based on the current flowing through the power transmitting antenna or the power receiving antenna have been explained.

"State detection methods" of the present disclosure refer to these methods and any one of them may be used. The foreign object detection method is an example of the state detection method. A "foreign object which is present" can be said as "state abnormality which exists."

For example, in the first embodiment, the expression "detect that a foreign object is present" will be described as the expression "detect a state abnormality" below. In the embodiment, the description of the same matters as in the first embodiment will be omitted and the differences will be mainly described. This method of omitting the description will be the same in the embodiment which will be described later.

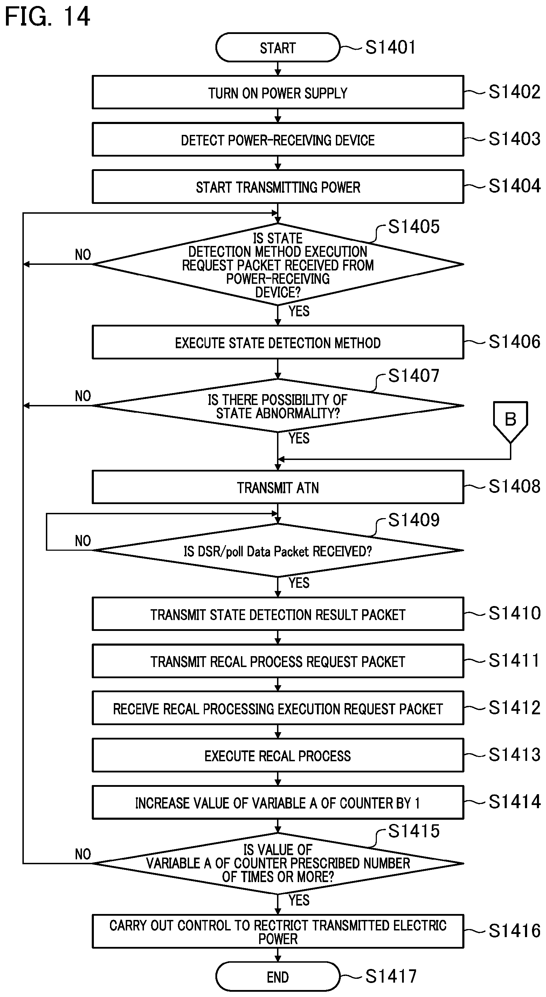

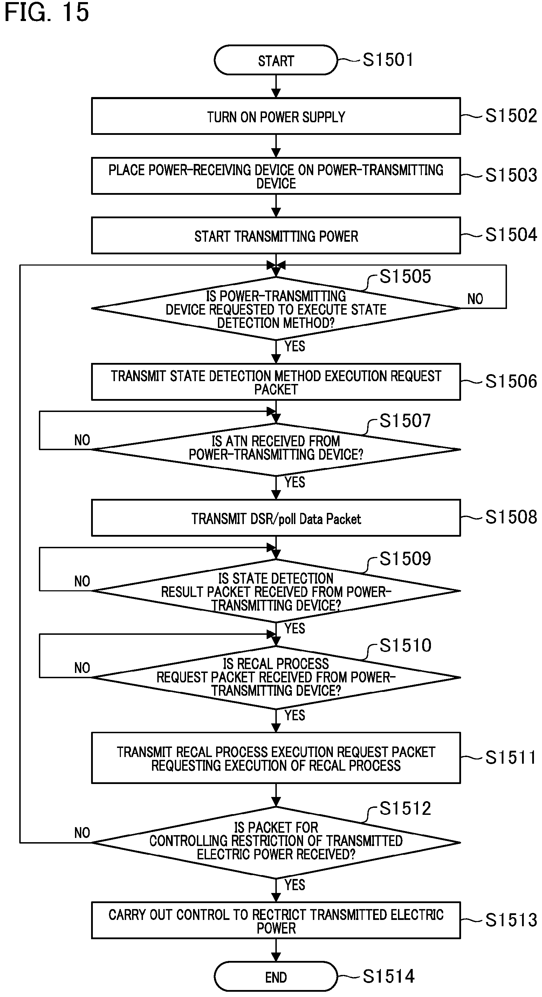

Operations of the TX and the RX when the TX executes the state detection method and a state abnormality is detected are explained. FIG. 14 is a flowchart for explaining the operation of the TX. FIG. 15 is a flowchart for explaining the operation of the RX.

A process starts in S1401 in FIG. 14, and the power supply of the TX is turned on in S1402. After passing through the Selection phase and the Ping phase, the TX detects the RX in S1403. After passing through the I&C phase, the Negotiation phase, and the Calibration phase, in S1404, the TX starts transmitting power to the detected RX in the Power Transfer phase. Subsequently, the process proceeds to the process for S1405.

In S1405, the TX assesses whether an execution request packet of the state detection method (FIG. 15: S1506) has been received from the RX. The execution request packet will be described later. When the TX has not received the execution request packet (No in S1405), the TX continues transmitting power and repeatedly executes the assessment process in S1405. Furthermore, when the TX receives the execution request packet (Yes in S1405), the TX proceeds to the process for S1406.

In S1406, the TX executes the state detection method, measures a physical quantity related to the TX, and compares the measurement results with a threshold value to assess whether a state abnormality exists. For example, when the TX executes the state detection method, the TX assesses the possibility (probability) of state abnormality in stages. The assessment result is shown below.

-    <State 1>: A state in which the physical quantity measured by the TX is significantly lower than the threshold value and the "probability of the state abnormality is very low."

- <State 2>: A state in which the physical quantity measured by the TX is slightly lower than the threshold value and the "probability of the state abnormality is low."
- <State 3>: A state in which the physical quantity measured by the TX is slightly more than the threshold value and the "probability of the state abnormality is high."
- <State 4>: A state in which the physical quantity measured by the TX is significantly more than the threshold value and the "probability of the state abnormality is very high."

In this example, if the physical quantity measured by the TX is more than the threshold value, it is assessed that there is a possibility of a state abnormality.

In another example, if the physical quantity measured by the TX is lower than the threshold value, it is assessed that there is a possibility of a state abnormality. The assessment result is shown below.

- <State 1>: A state in which the physical quantity measured by the TX is significantly more than the threshold value and the "possibility of state abnormality is very low."
- <State 2>: A state in which the physical quantity measured by the TX is slightly more than the threshold value and the "possibility of state abnormality is low."
- <State 3>: A state in which the physical quantity measured by the TX is slightly lower than the threshold value and the "possibility of state abnormality is high."
- <State 4>: A state in which the physical quantity measured by the TX is significantly lower than the threshold value and the "possibility of the state abnormality is very high."

It is assumed that <State 3> and <State 4> in this example are states in which the physical quantity measured by the TX is outside of the range that is based on the threshold value and it is assessed that there is a possibility of a state abnormality, but transmitting power from the TX to the RX is possible.

In S1407 following S1406, the TX assesses whether there is a possibility of a state abnormality as a result of executing the state detection method. When the TX assesses that there is no possibility of state abnormality or that there is a low possibility of state abnormality (No in S 1407), the process for the TX proceeds to the process for S1405 and the TX continues transmitting power to the RX.

For example, a case in which it is assessed to be the "low possibility of state abnormality" is a case in which the above <State 1> or <State 2> is detected. On the other hand, when it is assessed that there is the possibility of state abnormality (Yes in S1407), the TX proceeds to the process for S1408. For example, a case in which it is assessed that there is the "possibility of state abnormality" is a case in which the above <State 3> or <State 4> is detected.

In S1408, the TX transmits, to the RX, a packet to request permission to report information (communicate), or in S 1408, the TX transmits, to the RX, a packet to request attention.

For example, the packet is a response (ATN) defined in the WPC standard. When the RX receives the ATN transmitted by the TX, the RX transmits, to the TX, a packet which allows the transmission of a Data packet.

Alternatively, when the RX receives the ATN transmitted by the TX, the RX transmits, to the TX, a packet to request the transmission of a Data packet. Specifically, the packet is a DSR/poll packet or a DSR/poll Data Packet determined in the WPC standard.

In S 1409, the TX assesses whether the TX has received a DSR/poll Packet or a DSR/poll Data Packet from the RX. When the TX does not receive the packet from the RX (No in S1409), the TX continues transmitting power and repeatedly executes the assessment process for S1409. Furthermore, when the TX receives the packet from the RX (Yes in S1409), the TX proceeds to the process for S1410.

In S1410, the TX transmits a state detection result packet to the RX. The state detection results packet is a packet which includes information indicating the results of the execution of the state detection method by the TX. For example, the TX reports, to the RX, the following first information regarding the state detection method included in the state detection results packet.

- Information indicating which state detection method was executed.
- Information representing the possibility of state abnormality.
- Indicator information which shows the result of comparing the measured physical quantity with the threshold value (for example, any one of <State 1> to <State 4>).

As the state detection method, there are the Q value measurement method, the Power Loss method, the waveform decay method, the coupling-state-indicator measurement method, the foreign object detection method that is based on the temperature, and the foreign object detection method that is based on the current flowing through the power transmitting antenna or the power receiving antenna.

The first information includes information indicating which of these state detection methods was used to execute state detection. Furthermore, as a result of state detection through the state detection method, the indicator information which shows the possibility of state abnormality is included in the first information. It can also be said that the indicator information is information resulting from the comparison of the measured physical quantity and the threshold value.

Subsequently, in S1411, the TX transmits a RECAL process request packet to the RX. The RECAL process request packet is a packet which includes information to request a RECAL process. For example, the TX reports, to the RX, the following second information regarding the RECAL process request included in the RECAL process request packet.

- Information indicating whether to request the execution of the RECAL process for the Power Loss method.
- Information indicating whether to request the execution of the RECAL process for the waveform decay method.
- Information indicating whether to request the execution of the RECAL process for the coupling-state-indicator measurement method.
- Information representing the type of RECAL process which requests the execution of the Power Loss method, the waveform decay method, or the coupling-state-indicator measurement method.

Here, the "type of RECAL process" refers to the following first or second RECAL process.

• First RECAL process

A calibration point which has already existed or a line segment which has been subjected to an interpolation process between calibration points is discarded. The RX transmits RP1 and RP2 to the TX again and the TX creates a new calibration point or creates a line segment which has been subjected to an interpolation between calibration points.

• Second RECAL process

A calibration point which has already existed or a line segment which has been subjected to an interpolation between calibration points is maintained. The RX transmits RP2 to the TX and the TX adds a new calibration point to the calibration point which has already existed or to the line segment which has been subjected to an interpolation between calibration points.

For example, it is assumed that the TX executes the state detection method and assesses that there is the "high possibility of state abnormality" or that there is a "very high possibility of state abnormality."

With regard to the calibration point created in the CAL process executed in a state of the "low possibility of state abnormality" or the line segment which has been subjected to an interpolation between calibration points, deviations are likely to occur due to the occurrence of the state abnormality.

Thus, in accordance with the possibility of state abnormality, the RECAL process may need to be executed in some cases. Thus, the second information includes information regarding whether to request the execution of the RECAL process. Furthermore, the second information includes information indicating which state detection method is used for the RECAL process.

Subsequently, in S1412, the TX receives an execution request packet for the RECAL process from the RX. The execution request packet is, for example, RP1 and RP2. In S1413, the TX executes the RECAL process on the basis of the information in the received execution request packet for the RECAL process.

A variable of a counter which counts the number of times the RECAL process has been executed is denoted by A. In S1414, the TX increases (increments) a value of a variable A by 1. Furthermore, the process proceeds to the process for S1415.

In S1415, the TX assesses whether the value of the variable A of the counter is equal to or greater than a predetermined number of times (threshold value). As the assessment results, when it is assessed that the value of the variable A is equal to or greater than the predetermined number of times (Yes in S1415), the TX proceeds to the process for S1416.

Also, when it is assessed that the value of the variable A is less than the predetermined number of times (No in S1415), the process proceeds to S1405 and the TX continues transmitting power to the RX. In S1416, the TX executes control to restrict the transmitted power (the RX executes control to restrict the power received) and ends the series of processes of S1417.

An operation of the RX will be described below with reference to FIG. 15. The process starts in S1501 and the power supply of the RX is turned on in S1502. If the RX is placed on the TX in S1503, after passing through the Selection phase and the Ping phase, the RX is detected by the TX.

After the I&C phase, the Negotiation phase, and the Calibration phase, in S1504, the RX starts receiving power transferred from the TX in the Power Transfer phase.

Subsequently, in S1505, the RX determines whether to request the TX to execute the state detection method. When the predetermined condition is satisfied (Yes in S1505), the RX determines to request the TX to execute the state detection method and proceeds to the process for S1506.

On the other hand, when the predetermined condition is not satisfied (No in S1505), the RX determines not to request the TX to execute the state detection method, continues receiving power and the process for S1505 is repeatedly executed.

Here, the "predetermined condition" in S1505 will be explained. This condition may include, for example, the TX or the RX which detects one or more of the following.

- Occurrence of an error in the communication between the TX and the RX.

- Observation of a decrease in the transmitted power from the TX to the RX.
- Abnormal value of the acquired calibration data.
- Observation of an increase in temperature in the TX and the RX.
- State abnormality which is highly likely to exist in the state detection method.
- Reception, by the RX from the TX, of information indicating that state abnormality is highly likely to exist in the state detection method.

Alternatively, the "predetermined condition" refers to the following cases.

- Case in which the transmitted power transferred from the TX to the RX is increased or decreases.
- Case in which the information (set value) regarding the transmitted power of the TX or the information (set value) regarding the received power of the RX which are held by the TX or the RX is changed.
- Case in which the measurement process (CAL process) for setting the threshold value used in executing the state detection method is executed.
- Case in which the RX reports, to the TX, the state of the RX (for example, the received power received by the RX or the like).

The above-described "predetermined conditions" are set in advance in the RX. The RX determines to perform state detection when one or more of the set "predetermined conditions" are satisfied. As the "predetermined condition," a condition that is based on matters other than the exemplified matters may be set or an arbitrary condition may be set.

A timing of executing the state detection method may be determined by the TX, not by the RX and the state detection method may be executed at an appropriate time. The TX can execute the state detection method at an appropriate time at which a "predetermined condition" is satisfied.

In S1506, the RX transmits an execution request packet of the state detection method to the TX and proceeds to the process for S1507. Furthermore, in S1507, the RX assesses whether an ATN (FIG. 14: S1408) has been received from the TX.

When the RX receives an ATN from the TX (Yes in S1507), the RX proceeds to the process for S1508. When the RX does not receive an ATN from the TX (No in S1507), the RX continues receiving power and the assessment process in S1507 is repeatedly executed until the ATN is received.

In S1508, the RX transmits, to the TX, a packet (DSR/poll Packet or DSR/poll Data Packet) which allows the TX to transmit a Data Packet.

In S1509, the RX assesses whether the RX has received a state detection result packet (FIG. 14: S1410) from the power transmitting apparatus. When it is assessed in S1509 that the RX has received a state detection result packet from the TX, the RX proceeds to the process for S1510.

When it is assessed that the state detection result packet has not been received, the assessment process for S1509 is repeatedly executed until the packet is received. In S1510, the RX assesses whether the RX has received a RECAL process request packet (FIG. 14: S1411) from the TX.

When it is assessed in S1510 that the RX has received a RECAL process request packet from the TX, the RX proceeds to the process for S1511. When it is assessed that the RECAL process request packet has not been received, the assessment process for S1510 is repeatedly executed until the packet is received.

In S1511, the RX transmits an execution request packet for the RECAL process to the TX. In the next S1512, the RX assesses whether the RX has received a packet for controlling the restriction of the transmitted power from the TX.

As a result of the assessment of the TX, when the RX has received the packet from the TX (Yes in S1512), the RX proceeds to the process of S1513. Furthermore, when the RX has not received the packet from the TX (No in S1512), the RX proceeds to S1505 and continues receiving power.

In S1513, the RX executes control for restricting the transmitted power (control for restricting the power received by the RX) and ends the series of processes of S1514.

In the embodiment, for example, it is assumed that TX transmits a state detection result packet to RX (FIG. 14: S1410), and then transmits an ATN to the RX again (S1408).

In this case, when the RX receives the ATN transmitted by the TX (FIG. 15: Yes in S1507), the RX transmits a DSR/poll Packet or DSR/poll Data Packet to the TX (S1508).

When the TX receives a DSR/poll packet or a DSR/poll Data packet (Yes in S1409), the TX proceeds to the process of S1411. That is to say, the TX transmits a RECAL process request packet to the RX. The same applies to the TX and the RX in the third embodiment which will be described later.

With regard to the information shown in the description related to the first or second information described above, at least one piece of information is transmitted from the TX to the RX. The first or second information is determined on the basis of information which represents the possibility of a state abnormality.

For example, when it is assessed that there is a possibility of a state abnormality (<State 3> or <State 4>), the state detection result packet that the TX transmits to the RX in S1410 of FIG. 14 includes the following information.

• In case of <State 3>

The first information includes information indicating the executed state detection method and information indicating that the state is in a state of the "high possibility of state abnormality."

• In case of <State 4>

The first information includes information indicating the executed state detection method and information indicating that the state is in a state of the "very high probability of state abnormality."

Also, the RECAL process request packet that the TX transmits to the RX in S1411 of FIG. 14 includes the following information.

• In case of <State 3>
• The second information includes information which requests the execution of at least one RECAL process for the RECAL processes of the Power Loss method, the waveform decay method, and the coupling-state-indicator measurement method and information which requests the execution of the second RECAL process.
• In case of <State 4>
• The second information includes information which requests the execution of at least one RECAL process for the RECAL processes of the Power Loss method, the waveform decay method, and the coupling-state-indicator measurement method and information which requests the execution of the first RECAL process.

Alternatively, the TX may transmit the first and second information to the RX using the same packet. Thus, when it is assessed to be "state abnormality presence" or "high possibility of state abnormality", the TX and the RX can quickly and appropriately execute control according to the assessment result.

The control when the TX executes the state detection method a plurality of times, and as a result, an assessment result of <State 3> or <State 4> is acquired a plurality of times will be described below. As a result of the assessment, when the state is detected as "high possibility of state abnormality" or "very high possibility of state abnormality" (hereinafter referred to as a "second detection state"), the RECAL process is executed.

Also, it is assumed that the TX executes the state detection method and assesses that the TX is in the second detection state again. In this case, the TX executes the RECAL process again. Originally, the CAL process is a process which is executed at the time of the first detection state in which a state abnormality is not detected.

The execution of the RECAL process when the state is in the second detection state means that the CP or the line segment that has been subjected to an interpolation between CPs is changed. That is to say, the ideal CP or the line segment which has been subjected to an interpolation between CPs which was created in the CAL process is replaced with the CP or the line segment which has been subjected to an interpolation between CPs in the second detection state.

If the fact that there is a probability of state abnormality is detected a plurality of times, the RECAL process is executed a plurality of times. In this case, each time the RECAL process is executed, the CP in the first detection state or the line segment which has been subjected to an interpolation between CPs will be moved away.

As a result, if the reliability of the CP that is a reference in executing the state detection method or the line segment which has been subjected to an interpolation between CPs decreases, it may become impossible to detect a state abnormality with high accuracy.

Thus, when the TX needs to detect the second detection state a plurality of times and execute the RECAL process (first or second RECAL process) a predetermined number of times or more, the TX and the RX restrict the power transferred by the TX or restrict the power received by the RX. A method for restricting the power transferred by the TX or a method for restricting the power received by the RX is as follows.

The TX requests to execute the RECAL process with the second information and controls the transmitted power of the TX with predetermined information (hereinafter referred to as "third information"). The third information is information for controlling the transmitted power of the TX so that the transmitted power is equal to or less than a predetermined power value.

Alternatively, the TX controls a maximum load power value which can be output (supplied) to the load of the RX so that the maximum load power value is equal to or less than a predetermined power value. Here, the predetermined power value is, for example, 5 (watts). Alternatively, the TX transmits, to the RX, predetermined information (hereinafter referred to as fourth information) for switching the mode of the TX or the RX. The fourth information is, for example, information indicating a request to switch to a mode in which only a maximum of 5 watts of power transmission is allowed.

Alternatively, when the RECAL process needs to be executed a predetermined number of times or more, the TX transmits, to the RX, a packet which requests the transmission of an EPT packet. The RX which receives the packet transmits an EPT packet to the TX and ends the Power Transfer phase.

Alternatively, the TX detects the second detection state a plurality of times and requests the RX to execute the RECAL process a predetermined number of times or more. If the RX is requested to execute the RECAL process a predetermined number of times or more, the RX controls negotiation with the TX so that the value of the GP is equal to or less than a predetermined power value.

Here, the predetermined power value is, for example, 5 (watts). Alternatively, the RX may transmit, to the TX, a predetermined packet including information which requests that the TX or the RX switch a mode thereof to a predetermined mode. The predetermined mode is a Basic Power Profile (BPP) mode specified using the WPC standard in which only power transmission of a maximum of 5 watts is allowed.

Here, the meaning of setting the GP to be equal to or less than 5 watts will be explained. When the TX transmits power to the RX in a state in which a foreign object is present between the TX and the RX, the foreign object is likely to generate heat in some cases.

An amount of heat generated by a foreign object increases as the transmitted power from the TX increases. On the other hand, when the transmitted power of the TX (received power of the RX) is restricted to be equal to or less than a predetermined value, the amount of heat generated can be suppressed within a predetermined range (safe range).

In the WPC standard, even if foreign object detection is executed and there is a possibility that a foreign object is present, there are cases in which power transmission from the TX to the RX is permitted if the GP is equal to or less than 5 watts. Thus, it is possible to execute power transmission control with the above-described predetermined power value set to 5 (watts).

For the same reason, the transmitted power of the TX is controlled to be equal to or less than 5 watts or the maximum load power value in which the TX can execute an output (supply) to the load of the RX is controlled to be equal to or less than 5 watts. Alternatively, when a request is provided to execute the RECAL process a predetermined number of times or more, the RX transmits an EPT packet to the TX and ends the Power Transfer phase.

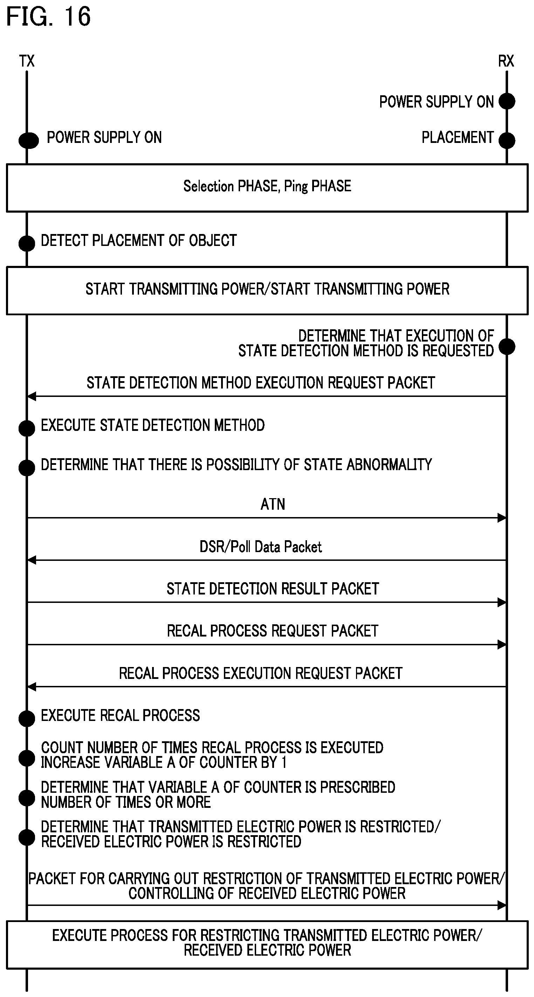

The operations of the TX and the RX described above will be described with reference to FIGS. 14 to 16. FIG. 16 is a sequence diagram showing the operations of the TX and the RX, the operation of the TX is shown on the left, and the operation of the RX is shown on the right.

In the example of FIG. 16, if the power supply of the TX and the RX is turned on and the RX is placed on the TX, the phase transitions to the Selection phase and the Ping phase. The TX detects the placement of the RX and starts transmitting power and the RX starts receiving power.

After executing the measurement process (CAL process) related to state detection, the RX requests the TX to execute the state detection method and the TX executes the state detection method in accordance with the execution request from the RX. When it is assessed that there is a possibility of state abnormality in the TX, the TX transmits a packet including information regarding the state detection results to the RX and transmits a RECAL process request packet.

The RX transmits an execution request packet for the RECAL process to the TX. The TX executes the RECAL process in accordance with the execution request packet.

In S1410 of FIG. 14, the TX transmits a state detection result packet to the RX. When it is assessed in S1509 that the RX has received a state detection result packet from the TX (Yes in S1509), the RX proceeds to the process for S1510.

When the RX receives a RECAL process request packet from the TX (Yes in S1510), the RX recognizes that the TX requests the RX to execute the RECAL process using the second information in the RECAL process request packet.

In S1511, the RX transmits a RECAL process execution request packet (RP1, RP2) to the TX. The TX which receives the execution request packet from the RX executes the RECAL process in S1413 on the basis of the information in the execution request packet.

In S1414, the value of the variable A of the counter is increased by 1. In addition, when it is assessed in S1415 that the value of the variable A is equal to or greater than the predetermined number of times (Yes in S1415), in S1416, the TX executes control to restrict the transmitted power or the power received by the RX.

When it is assessed that the value of the variable A is less than the predetermined number of times (No in S1415), the process proceeds to S1405 and the TX continues transmitting power. When the RX receives a packet for executing control which limits transmitting power from the TX (Yes in S1512), the RX proceeds to S1513 and executes control for restricting the power received by the RX.

In the flowcharts of FIGS. 14 and 15, a function of counting the number of times the RECAL process is executed is realized in S1413 and S1414, but the function may be realized in other processing positions. For example, the processes from S1413 to S1415 may be executed after S1410 or S1411. Furthermore, the processes from S1413 to S1415 may be executed after a positive (Yes) assessment result is obtained in S1407 (before S1408).

The reason is that, even if the processes from S1413 to S1415 are executed at the above-described processing position, the TX can recognize that, at those points, the operation subsequent to those points will cause it to move away from the CP or the line segment which has been subjected to an interpolation between CPs without any state abnormality.

Here, a method for determining a GP related to the transmitted power of the TX or the received power of the RX will be described. A control operation for restricting the transmitted power is executed on the basis of the method. There is a method in which the TX and the RX negotiate to determine a GP in the Negotiation phase or the ReNegotiation phase.

The RX transmits Requested Load Power information to the TX. Requested Load Power is the power that the RX requests the TX to output to the load and is the power consumed by the load of the RX.

The load refers to a system to which power is supplied from the RX or the power-receiving unit of the RX and examples thereof include the charging unit 206 and the battery 207 of the RX. On the other hand, the TX has a value of Potential Load Power or a value of Negotiable Load Power in advance.

Potential Load Power is a maximum load power value (Highest Load Power Level) that the TX can negotiate and provide an output (supply) to the load of the RX.

Also, Negotiable Load Power is a maximum load power value (Highest Load Power Level) that the TX can negotiate and provide an output (supply) to the RX load during a predetermined period or under predetermined conditions.

A negotiation is successful when the value of Requested Load Power is smaller than the value of Negotiable Load Power. The TX and the RX set the value of Requested Load Power as the value of the GP and hold the set value in a memory.

That is to say, when the TX receives the value of Requested Load Power from the RX and the value is smaller than the value of Negotiable Load Power, the TX transmits a positive response ACK to the RX.

The TX and the RX set the value of Requested Load Power as the value of the GP and hold the set value in a memory. Furthermore, when the TX receives the value of Requested Load Power from the RX and the value is more than the value of Negotiable Load Power, the TX transmits a negative response NAK to the RX.

The RX reduces the value of Requested Load Power and again transmits information indicating the value of Requested Load Power to the TX. The RX repeatedly executes this process until the RX receives a positive response ACK from the TX.

If the RX receives a positive response ACK from the TX, the TX and the RX set the value of Requested Load Power as the value of the GP and hold the set value in a memory.

By setting the value of the GP to be equal to or less than a predetermined value, the transmitted power of the TX and the received power of the RX can be reduced. For this reason, the TX sets Potential Load Power or Negotiable Load Power to be equal to or less than a predetermined value.

Alternatively, the RX sets the value of Requested Load Power to be equal to or less than the predetermined value. In the present disclosure, when the TX requests the RX to reduce the transmitted power of the TX or the received power of the RX, the TX or the RX will execute the above operations.

Alternatively, when the RX requests the TX to reduce the transmitted power of the TX or the received power of the RX, the TX or the RX executes the above operations.

Also, by setting the value of the GP to be equal to or greater than a predetermined value, the transmitted power of the TX and the received power of the RX can be increased. For this reason, the TX sets Potential Load Power or Negotiable Load Power to be equal to or greater than a predetermined value.

Alternatively, the RX sets the value of Requested Load Power to the predetermined value or more. In the present disclosure, when the TX requests the RX to increase the transmitted power of the TX or the received power of the RX, the TX or the RX will execute the above operations.

In the state detection method, the Q value measurement method, the waveform decay method, the coupling-state-indicator measurement method, the foreign object detection process that is based on the temperature, and the foreign object detection process that is based on the current flowing through the power transmitting antenna are executed. A method for assessing a possibility (probability) of a state abnormality of the TX in this case will be described.

For example, it is assumed that that the TX executes any one of the state detection methods and assesses that the TX is in <State 3> or <State 4>. In this case, the TX sets a threshold value to be used in the subsequent state detection method. The threshold value is set on the basis of the physical quantity measured when the state detection method is executed and it is recognized that the TX is in <State 3> or <State 4>.

That is to say, the TX makes an assessment regarding <State 1> to <State 4> on the basis of information regarding an amount and a direction (positive direction or negative direction) of deviation from the physical quantity measured when it is assessed that the TX is in <State 3> or <State 4>.

In the embodiment, when the state detection method is executed and it is assessed that there is a "high possibility of state abnormality" or that there is a "very high possibility of state abnormality," the RECAL process is executed. When the RECAL process is executed a predetermined number of times or more, control is executed to restrict the transmitted power of the TX or the received power of the RX.

[Third embodiment]

A third embodiment will be explained below. In the embodiment, when the TX executes the state detection method and assesses at least once that there is a "high possibility of state abnormality" or a "very high possibility of state abnormality," the control explained in the second embodiment is executed.

After that, the TX executes the state detection method again, and the control which is executed when a predetermined condition indicating that the device state has improved is satisfied will be described. The operation of the TX will be described with reference to FIGS. 14, 17, and 18 and the operation of the RX will be described with reference to FIG. 15.

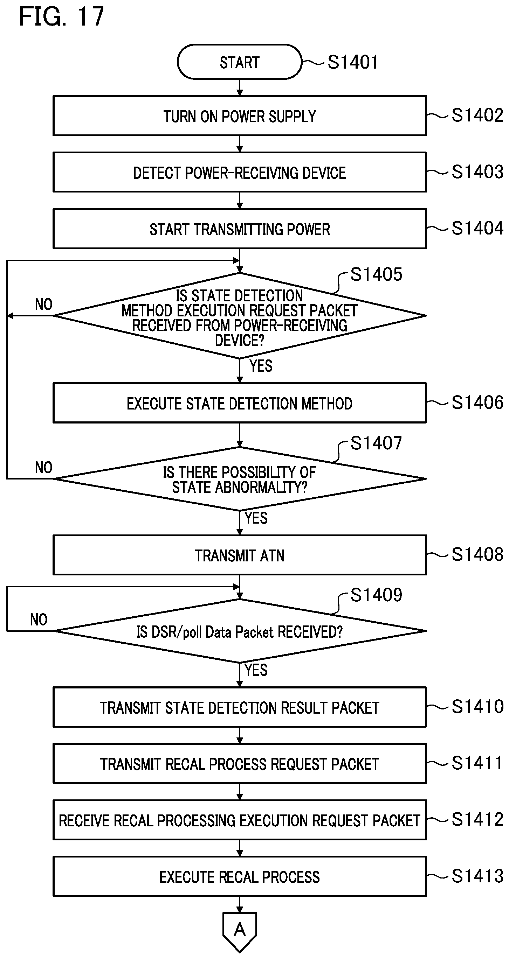

When the TX executes the state detection method and it is assessed that there is a "high possibility of state abnormality" or a "very high possibility of state abnormality," the TX executes the control shown in the second embodiment. The operations so far are the operations which correspond to the processes in S1401 to S1413 in FIG. 17 and a description thereof will be omitted.

In S1505 of FIG. 15, the RX determines whether to request the TX to execute the state detection method. When the predetermined condition is satisfied, the RX determines to request the TX to execute the above-described state detection method (Yes in S1505) and proceeds to S1506.

Also, in S1506, the RX transmits an execution request packet of the state detection method to the TX. On the other hand, when the predetermined condition is not satisfied, the RX determines not to request the TX to execute the state detection method (No in S1505) and continues receiving power. The predetermined condition is as explained in the second embodiment.

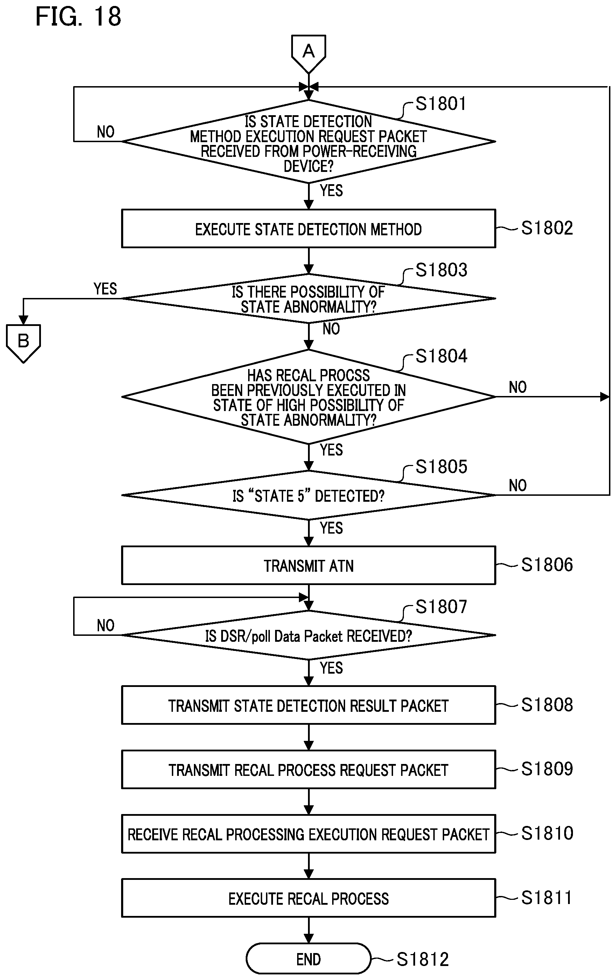

After S1413 in FIG. 17, the TX proceeds to the process for S1801 in FIG. 18 and the TX assesses whether the TX has received an execution request packet of the state detection method from the RX (FIG. 15: S1506). When the TX receives an execution request packet of the state detection method from the RX (Yes in S1801), the TX proceeds to the processing of S1802.

Furthermore, when the TX does not receive an execution request packet of the state detection method from the RX (No in S1801), the TX continues transmitting power and the assessment process for S1801 is repeatedly executed.

In S1802, the TX executes a state detection method. A timing for executing the state detection method may be determined by the TX, not by the RX. If it is assessed that the above-described predetermined condition is satisfied, the TX may execute a state detection method.

The TX measures the physical quantity related to the TX and compares the measurement results with a threshold value to assess whether a state abnormality is present. In the embodiment, it is assumed that, when the TX executes a state detection method, the TX assesses the possibility (probability) of state abnormality in stages.

The assessment of the possibility (probability) of state abnormality is as explained in the second embodiment. After S1802, the process proceeds to the process for S1803.

In S1803, the TX assesses whether there is a possibility of a state abnormality, as a result of executing the state detection method. For example, the assessment result of the fact that "there is a possibility of a state abnormality" corresponds to the case in which <State 3> or <State 4> described above is detected.

If it is assessed that there is a possibility of state abnormality (Yes in S1803), the process transitions to the process for S1408 from node B in FIG. 18 via node B in FIG. 14. Node B in FIG. 14 is a node to be connected after the assessment result in S1407 is Yes.

On the other hand, when it is determined that there is "no possibility of state abnormality" or "low possibility of state abnormality" (No in S1803), the process proceeds to the process for S1804. For example, the assessment result of "low possibility of state abnormality" corresponds to when <State 1> or <State 2> described above is detected or when <State 5> which will be described below is detected.

In S1804, the TX has previously assesses that the TX is in a state of high possibility of state abnormality and assesses whether the TX has executed the RECAL process. When it has previously been assessed in S1804 that the RECAL process has not been executed in a state of high possibility of state abnormality (No in S1804), the TX continues transmitting power and transitions to S1801.

Moreover, when it is assessed that the RECAL process has been executed in a state of high possibility of state abnormality (Yes in S1804), the process proceeds to the process for S1805. In S1805, the TX assesses whether <State 5> which will be described below has been detected.

<State 5> is a state in which predetermined conditions indicating that the device condition has improved are satisfied. As an example, a state in which a foreign object which has been present between the TX and the RX has been removed is provided. When it is assessed in S1805 that <State 5> has not been detected (No in S1805), the TX continues transmitting power and transitions to S1801.

For example, the assessment result of "<State 5> has not been detected" corresponds to a case in which <State 1> or <State 2> described above is detected. Furthermore, when it is assessed that <State 5> has been detected (Yes in S1805), the process proceeds to the process for S1806.

The execution order of the processes of S1804 and S1805 may be reversed. When the RECAL process has been executed in the past in a state of high possibility of state abnormality, a CP or a line segment which has been subjected to an interpolation between CPs is created.

Thus, for example, when it is assessed in S1805 that <State 5> is detected, the RECAL process needs to be executed. The reason is that, if a CP or a line segment which has been subjected to an interpolation between CPs is not created in a state in which the device conditions have been improved (in a state of low possibility of state abnormality), it will no longer be possible to execute highly accurate state detection.

The process subsequent to S1806 is a process for executing the RECAL process. In S1806, the TX transmits an ATN to the RX. In S1507 of FIG. 15, when the RX does not receive the ATN transmitted by the TX (No in S1507), the RX continues receiving power and waits until the RX receives the ATN.

Also, when the RX receives the ATN transmitted by the TX (Yes in S1507), the RX proceeds to the process for S1508. In S1508, the RX transmits, to the TX, a packet which allows the transmission of a Data packet.

The packet is a DSR/poll packet or a DSR/poll Data Packet defined using the WPC standard.

In S1807, the TX assesses whether the TX has received the DSR/poll Packet or the DSR/poll Data Packet transmitted by the RX. When the TX does not receive the packet (No in S1807), the TX continues transmitting power and waits until the TX receives the packet.

Also, when the TX receives the packet from the RX (Yes in S1807), the TX proceeds to the process for S1808. In S1808, the TX transmits, to the RX, a state detection result packet including information indicating the execution result of the state detection method. Subsequently, in S1809, the TX transmits, to the RX, a RECAL process request packet including information requesting a RECAL process.

In the embodiment, when the state abnormality has been assessed to be "high possibility of state abnormality" or "very high possibility of state abnormality" at least once, the control explained in the second embodiment is executed. After that, a condition in which a predetermined condition indicating that the device condition has improved is satisfied is detected.

This state is set to <State 5>. As an example, a state in which a foreign object which has been present between the TX and the RX has been removed is provided. <State 1> and <State 2> are states which may occur even if a foreign object is present between the TX and the RX (because a CP and a line segment which has been subjected to an interpolation between CPs that is an assessment threshold value is created in a state in which a foreign object has been present).

On the other hand, <State 5> corresponds to a state in which a cause which causes a state abnormality no longer exists (a state in which there is no state abnormality or a state of low possibility of state abnormality). A method for detecting <State 5> will be described later.

When <State 5> is detected, the TX transmits, to the RX, a state detection result packet including the following first information.

• The first information includes information indicating the executed state detection method and information indicating that the current state is <State 5>.

Also, when <State 5> is detected, the TX transmits, to the RX, a RECAL process request packet including the following second information.

• The second information includes information requesting the execution of the RECAL process that is based on at least one of the Power Loss method, the waveform decay method, and the coupling-state-indicator measurement method and information requesting the execution of the first or second RECAL process.

Alternatively, when <State 5> is detected, the TX may transmit, to the RX, a state detection result packet including the following first information in S1808 in FIG. 18.

• The first information includes information indicating the executed state detection method and information indicating that the current state is <State 1>.

When <State 5> is detected, the RX can recognize that the RX is in <State 5> by receiving the RECAL process request packet including the above-described predetermined information and the state detection result packet from the TX.

The TX may transmit the above-described first and second information to the RX using the same packet. Thus, when it is assessed to be "state abnormality presence" or "high possibility of state abnormality," the TX and the RX can execute control corresponding thereto promptly and appropriately.

At the stage in which this assessment has been executed, the TX executes the control described in the second embodiment and executes the RECAL process. That is to say, when <State 3> or <State 4> is detected, a CP or a line segment which has been subjected to an interpolation between CPs is created.

After that, when <State 5> is detected, the state is highly likely to be improved or the state abnormality is highly likely to be removed. Thus, the RECAL process is executed due to the change in state.

Since the state detection method can be executed on the basis of a CP or a line segment which has been subjected to an interpolation between CPs in a state in which the state is highly likely to be improved or the state abnormality is highly likely to be eliminated, more accurate state detection is possible.

In FIG. 15, the RX receives a state detection result packet (Yes in S1509) and receives a RECAL process request packet (Yes in S1510) from the TX. The RX recognizes that the execution of RECAL is being requested using the second information in the RECAL process request packet. Furthermore, the RX transmits an execution request packet (RP1, RP2) for the RECAL process to the TX (S1511).

In S1810 of FIG. 18, the TX receives an execution request packet (RP1, RP2) for the RECAL process from the RX. In S1811, the TX executes the RECAL process on the basis of the information in the execution request packet. Furthermore, the series of processes ends in S1812.

A method for detecting <State 5> will be explained below for each state detection method.

• When the state detection method is the Q value measurement method

It is assumed that the TX sets the first threshold value when executing the Q value measurement method.

In this case, the TX sets a new second threshold value for detecting <State 5> in addition to the first threshold value set for detecting a state abnormality.

The TX assesses the state to be <State 5> when the measurement value of the Q value is more than the second threshold value. Alternatively, the TX stores, in a memory, the Q value measured when <State 1> or <State 2> is detected. After that, the TX calculates a difference between the Q value measured when the state detection method is executed and the stored Q value.

If a value of the difference is within a predetermined value, it is assessed that the state is in <State 5> in accordance with the value of the difference. Alternatively, the TX stores, in a memory, the Q value measured when <State 3> or <State 4> is detected.

After that, the TX compares the Q value measured when the state detection method is executed with the stored Q value (stored value). When the measurement value of the Q value is more than the stored value and a difference between the measurement value and the stored value is equal to or greater than a predetermined value, it is assessed that the state is in <State 5> in accordance with a value of the difference.

• When the state detection method is the Power Loss method

At a stage in which it is assessed to be "high possibility of state abnormality" or "very high possibility of state abnormality," the TX executes the control explained in the first embodiment and executes the RECAL process.

That is to say, when <State 3> or <State 4> is detected, a CP or a line segment which has been subjected to an interpolation between CPs is created and the Power Loss method is executed using a threshold value set on the basis of that.

It is assumed that the Power Loss method is executed again under the above-described states and the power loss due to state abnormality (Ploss_FO) calculated by the TX is a first value. It is assumed that the power loss due to the state abnormality calculated by the TX is less than a first threshold value that is based on the power loss derived on the basis of a CP or a line segment which has been subjected to an interpolation between CPs.

In this case, it is assessed to be <State 1> or <State 2>. It is assumed that the TX assesses that there is no state change or that there is a high possibility that the state will not change and does not transmit, to the RX, a packet including the above-described first to third information.

Alternatively, when the TX detects <State 2>, the TX may request the RX to execute a state detection method which is different from the Power Loss method. Furthermore, it is assumed that the Power Loss method is executed again under the above-described conditions and the power loss due to state abnormality (Ploss_FO) calculated by the TX is a second value.

It is assumed that the second value is a positive value (there is power loss). It is assumed that the power loss due to the state abnormality calculated by the TX is more than a first threshold value that is based on the power loss derived on the basis of a CP or a line segment which has been subjected to an interpolation between CPs. In this case, it is assessed to be <State 3> or <State 4> and the same control as in the second embodiment is execute.

On the other hand, when <State 5> is detected, it is assumed that the Power Loss method is executed on the basis of the threshold value set in <State 3> or <State 4>. It is assumed that the Power Loss method is executed again under the above-described conditions and the power loss due to state abnormality (Ploss _FO) calculated by the TX is a third value.

In this case, the threshold value using the Power Loss method has already been set in <State 3> or <State 4>. The TX executes the Power Loss method to calculate an power loss due to the state abnormality. When the current state is <State 5>, for example, the third value is likely to be a negative value.

The reason is that the threshold value which has already been set is the threshold value in <State 3> or <State 4>. That is to say, the reason is because, if the Power Loss method is executed in <State 5>, the power loss due to the state abnormalities calculated by the TX will decrease due to the state abnormality which are eliminated.

Thus, in order to detect <State 5>, the TX sets a second threshold value using a CP or a line segment which has been subjected to an interpolation between CPs. The second threshold value is different from the first threshold value and the second threshold value is smaller than the first threshold value. When the value of the power loss due to state abnormality calculated by the TX is smaller than the second threshold value, it is assessed to be <State 5>.

As another method, there is a method for comparing the first value with the third value and making an assessment from the comparison result. The first value is a value of power loss due to the state abnormality calculated by the TX when it is assessed to be <State 1> or <State 2>.

On the other hand, the third value is a value of power loss due to the state abnormality calculated by the TX when it is assessed to be <State 5>. The third value is smaller than the first value. When a difference which is equal to or greater than a predetermined value occurs between the third value and the first value, it is assessed that the state is in <State 5> in accordance with the value of the difference.

That is to say, when the TX stores the first value in advance, the power loss (Ploss_FO) due to the state abnormality calculated when the state detection method is executed is smaller than the first value, and the difference which is equal to or greater than the predetermined value occurs, the TX assesses that the TX is in <State 5> in accordance with the value of the difference.

Alternatively, when the power loss (Ploss _FO) due to the state abnormality is smaller than the first value and the value is a negative value, the TX assesses that the TX is in <State 5> in accordance with the value of the difference.

Alternatively, when the power loss (Ploss _FO) due to the state abnormality is smaller than the first value, the difference which is equal to or greater than the predetermined value occurs, and the value is a negative value, the TX assesses that the TX is in <State 5> in accordance with the value of the difference.

• When the state detection method is the waveform decay method

It is assumed that the TX sets the threshold value on the basis of the fourth threshold value setting method when executing the waveform decay method. That is to say, the threshold value is determined on the basis of the results of the CAL process for the waveform decay method.

In this case, the same procedure can be executed as in the case of the Power Loss method described above. The TX sets the threshold value for detecting <State 5> using a CP or a line segment which has been subjected to an interpolation between CPs.

When the value of the waveform attenuation rate (set to a Q value) calculated by the TX is greater than the threshold value, it is assessed to be <State 5>. Alternatively, the TX stores, in a memory, the value of the waveform attenuation rate calculated when it is assessed to be <State 1> or <State 2>.

After that, it is assumed that the value of the waveform attenuation rate calculated by the TX when the state detection method is executed is greater than the stored value of the waveform attenuation rate. When the difference between these values of the waveform attenuation rates are equal to or greater than a predetermined value, it can be assessed that the state is in <State 5> in accordance with the value of the difference.

Alternatively, it is assumed that, when executing the waveform decay method, the TX sets the threshold value on the basis of the first threshold value setting method, the second threshold value setting method, or the third threshold value setting method. The TX sets a new second threshold value for detecting <State 5>, in addition to the first threshold value set on the basis of the first threshold value setting method, the second threshold value setting method, or the third threshold value setting method.

Also, when the value of the waveform attenuation rate (set to a Q value) calculated by the TX is greater than the second threshold value, it is assessed to be <State 5>. Alternatively, the TX stores, in a memory, the value of the waveform attenuation rate calculated when it is assessed to be <State 1> or <State 2>.

After that, it is assumed that the value of the waveform attenuation rate calculated by the TX when the state detection method is executed is greater than the stored value of the waveform attenuation rate. When the difference between these values of the waveform attenuation rates is equal to or greater than a predetermined value, it can be assessed that the state is in <State 5> in accordance with the value of the difference.

• When the state detection method is a coupling-state-indicator measurement method

It is assumed that the TX sets the threshold value on the basis of the third threshold value setting method when executing the coupling-state-indicator measurement method.

This threshold value is determined on the basis of the results of the CAL process for the coupling-state-indicator measurement method. In this case, the same procedure can be used as in the case of the Power Loss method described above. The TX sets the threshold value for detecting <State 5> using a CP or a line segment which has been subjected to an interpolation between CPs.

When the value of the coupling state index (set to a coupling coefficient) is greater than the threshold value, the TX assesses the state to be <State 5>. Alternatively, the TX stores, in a memory, the value of the coupling state index calculated by the TX when it is assessed to be <State 1> or <State 2>.

After that, it is assumed that the value of the coupling state index calculated by the TX when the state detection method is executed is greater than the stored coupling state index value. When the difference between these values of the coupling state indexes is equal to or greater than a predetermined value, it can be assessed that the state is in <State 5> in accordance with the value of the difference.

Alternatively, when executing the coupling-state-indicator measurement method, it is assumed that the TX sets the threshold value on the basis of the first threshold value setting method, the second threshold value setting method, or the fourth threshold value setting method. The TX sets a new second threshold value for detecting <State 5>, in addition to the first threshold value set on the basis of the first, second, or fourth threshold value setting method.

When the value of the coupling state index (set to a coupling coefficient) calculated by the TX is greater than the second threshold value, it is assessed to be <State 5>. Alternatively, the TX stores, in a memory, the coupling state index value (set to a k value) calculated when it is assessed to be <State 1> or <State 2>.

After that, it is assumed that the value of the coupling state index calculated by the TX when the state detection method is executed is greater than the stored value of the coupling state index. When the difference between these values of the coupling state indexes is equal to or greater than a predetermined value, it can be assessed that the state is in <State 5> in accordance with the value of the difference.

• When the state detection method is the foreign object detection process that is based on the temperature

It is assumed that the TX sets the first threshold value when executing the foreign object detection process that is based on the temperature. The TX sets a new second threshold value for detecting <State 5>, in addition to the first threshold value set for detecting the state abnormality.

When the measured value of the temperature is smaller than the second threshold value, the TX assesses that the TX is in <State 5>. Alternatively, the TX stores, in a memory, the measurement value of the temperature when it is determined to be <State 1> or <State 2>.

After that, it is assumed that the difference between the measurement value of the temperature and the stored value of the temperature when the TX executes the state detection method is within a predetermined value. In this case, it can be assessed that the state is in <State 5> in accordance with the value of the difference.

Alternatively, the TX stores, in a memory, the measurement value of the temperature when it is assessed to be <State 3> or <State 4>. After that, it is assumed that the measurement value of the temperature when the TX executes the state detection method is smaller than the stored value of the temperature.

In this case, when the difference between these values of the temperatures is equal to or greater than a predetermined value, it can be assessed that the state is in <State 5> in accordance with the value of that difference.

• When the state detection method is the foreign object detection process that is based on the current flowing through the power transmitting antenna

It is assumed that the TX sets the first threshold value when performing the foreign object detection process that is based on the current flowing through the power transmitting antenna.

The TX sets a new second threshold value for detecting <State 5> in addition to the first threshold value set for detecting the state abnormality. When the value of the current flowing through the power transmitting antenna measured by the TX is smaller than the second threshold value, it is assessed to be <State 5>.

Alternatively, the TX stores, in a memory, the value of the current flowing through the power transmitting antenna measured by the TX when it is assessed to be <State 1> or <State 2>. After that, it is assumed that the difference between the value of the current flowing through the power transmitting antenna measured by the TX when the state detection method is executed and the stored value of the current is within a predetermined value.

In this case, the TX assesses that the TX is in <State 5> in accordance with the value of the difference. Alternatively, the TX stores, in a memory, the value of the current flowing through the power transmitting antenna measured by the TX when it is assessed to be <State 3> or <State 4>.

After that, it is assumed that the value of the current flowing through the power transmitting antenna measured by the TX when the state detection method is executed is smaller than the stored value of the current. When the difference between these values of the currents is equal to or greater than a predetermined value, the TX assesses that the TX is in <State 5> in accordance with the value of the difference.

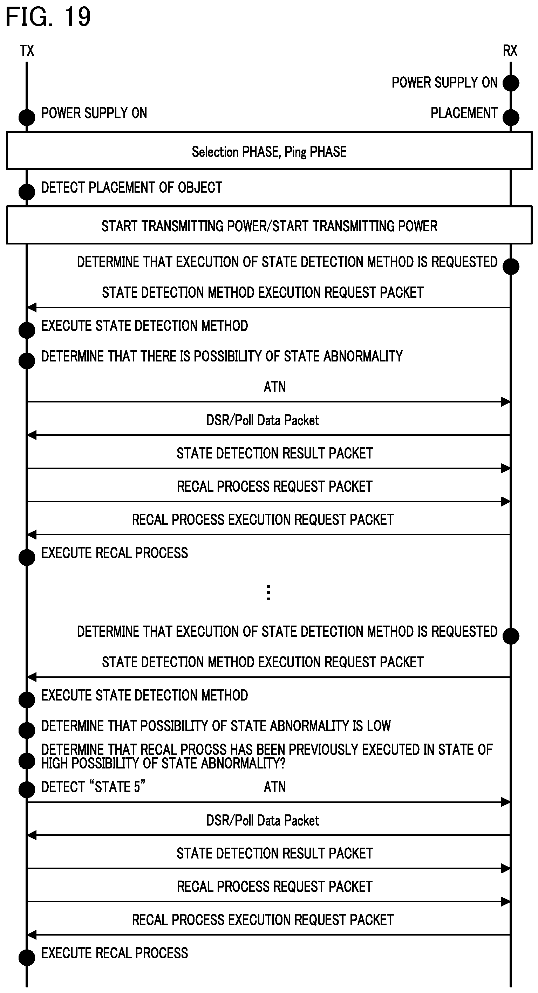

FIG. 19 is a sequence diagram showing the operations of the power transmitting apparatus and the power receiving apparatus in the embodiment. Differences between FIG. 19 and FIG. 16 will be explained. The TX executes the initial RECAL process, and then the RX determines to request the TX to execute a state detection method. The RX transmits, to the TX, an execution request packet of the state detection method.

The TX which receives the execution request packet executes the state detection method specified from the RX. It is assumed that the TX assesses that the possibility of state abnormality is low. The TX assesses that the RECAL process has been executed in a state of high possibility of state abnormality before the present time.

The TX assesses that <State 5> is detected. Furthermore, the TX transmits an ATN to the RX and the RX transmits a DSR/poll Packet or a DSR/poll Data Packet to the TX.

The TX transmits a state detection result packet and a RECAL process request packet to the RX. The RX transmits an execution request packet for the RECAL process to the TX and the TX which receives the execution request packet executes the RECAL process.

In the embodiment, it is assessed to be "high possibility of state abnormality" or "very high possibility of state abnormality," the control shown in the second embodiment is executed, and then appropriate control can be executed when it is detected that the device condition has been improved.

[Fields of application of present disclosure]

Some (or in some cases, all) of the constituent elements in the embodiment may be replaced with other constituent elements performing other similar functions or may be omitted or another constituent element may be added. Furthermore, the present disclosure is not limited to the WPC standard and can be applied to various standards.

Also, the power transmitting apparatus and the power receiving apparatus may be, for example, an image capture device (such as a still camera or a video camera) or an image input device such as a scanner and may be an image output device such as a printer, a copier, or a projector.

Furthermore, the device may be a storage device such as a hard disk device or a memory device or may be an information processing device such as a personal computer (PC), a smartphone, or a tablet device.

In addition, the power receiving apparatus of the present disclosure may be an information terminal device. For example, an information terminal device has a display unit (display) to which power received from a power receiving antenna is supplied and which displays information to a user.

The power received from the power receiving antenna is accumulated in a power storage unit (battery) and the power is supplied to the display unit from the battery. In this case, the power receiving apparatus may have a communication unit that communicates with another device which is different from the power transmitting apparatus. The communication unit may be compatible with communication standards such as NFC communication and the fifth generation (5G) mobile communication system.

Moreover, the power receiving apparatus of the present disclosure may be a vehicle such as a car. For example, a car that is a power receiving apparatus may receive power from a charger (power transmitting apparatus) via a power transmitting antenna installed in a parking lot. In addition, a car that is a power receiving apparatus may receive power from a charger (power transmitting apparatus) via a power transmitting antenna embedded in the road.

Such a car supplies the received power to a battery. The power of the battery may be supplied to a driving part (motor, electric part) which drives the wheels and may be used for driving sensors used for driving assistance or for driving a communication unit which communicates with an external device.

That is to say, in this case, the power receiving apparatus may include, in addition to the wheels, a battery, a motor or a sensor which is driven using the received power, and even a communication unit which communicates with devices other than the power transmitting apparatus. In addition, the power receiving apparatus may have a housing for housing a person.

For example, as sensors, there are sensors and the like which are used for measuring a distance between cars and a distance between a car and another obstacle. The communication unit may be compatible with, for example, the Global Positioning System (Global Positioning Satellite, GPS).

Also, the communication unit may be compatible with communication standards such as the fifth generation (5G) mobile communication system. In addition, the vehicle may be a bicycle or a motorcycle.

Moreover, the power receiving apparatus of the present disclosure may be a power tool, a household appliance, or the like. In addition to a battery, these devices that are the power receiving apparatuss may also have a motor which is driven using the received power accumulated in the battery.

Furthermore, these devices may have a reporting means for reporting the remaining amount of the battery or the like. In addition, these devices may have a communication unit which communicates with other devices which is different from the power transmitting apparatus. The communication unit may be compatible with communication standards such as NFC and the fifth generation (5G) mobile communication system.

Moreover, the power transmitting apparatus of the present disclosure may be an in-vehicle charger which transmits power to a mobile information terminal device such as a smartphone or a tablet which supports wirelessly transmitting power in the vehicle such as a car. Such an in-vehicle charger may be installed anywhere in the car.

For example, the in-vehicle charger may be installed in the console of the car or may be installed in the instrument panel (dashboard), in a position between the passenger seats, in the ceiling, or in the door. Here, it is best not to install the in-vehicle charger in a location which would interfere with driving.

Also, although the power transmitting apparatus has been described using an in-vehicle charger as an example, such chargers are not limited to those installed in vehicles and may be installed in transportation vehicles such as trains, airplanes, and ships. The charger in this case may also be installed between the passenger seats, in the ceiling, or in the door.

Furthermore, a vehicle such as a car including an in-vehicle charger may be a power transmitting apparatus. In this case, the power transmitting apparatus has a wheel and a battery and uses power of the battery to supply power to the power receiving apparatus using a power transmission circuit unit or a power transmitting antenna.

[Other embodiments]

The present disclosure can also be realized using a process for supplying a program which realizes one or more functions of the above-described embodiments to a system or a device via a network or a storage medium and reading and executing the program by one or more processors in a computer of the system or the device.

Also, the present disclosure can be realized using a circuit (for example, an ASIC) which realizes one or more functions. In addition, a part of the processes described with reference to the flowcharts in the present disclosure may be realized using hardware.

For example, a predetermined compiler may be used to automatically generate dedicated circuits on an FPGA from a program for realizing each step. Moreover, a Gate Array circuit may be formed in the same manner as an FPGA and realized as hardware.

According to the embodiment, the power transmitting apparatus determines appropriate control on the basis of a plurality of state detection results and reports a plurality of information regarding that control to the power receiving apparatus, allowing the power transmitting apparatus and the power receiving apparatus to execute more appropriate control.

This application claims the benefit of Japanese Patent Application No. 2022-191548, filed on November 30, 2022. The contents of the above-mentioned Japanese patent application are incorporated herein by reference in their entirety.

**Claims**

1. A power transmitting apparatus comprising:

   a power transmitting means for wirelessly transferring power to a power receiving apparatus using a power transmitting antenna;
   a communication means for communicating with the power receiving apparatus;
   a detection means for executing a measurement process for a physical quantity related to the power transmitting apparatus and for executing state detection of the power transmitting apparatus; and
   a control means for controlling the power transmitting means and for executing control related to the measurement process,
   wherein the control means executes, in a case where the power receiving apparatus determines to request the power transmitting apparatus to execute a measurement process again from information acquired when first state detection that is based on the measurement process is executed and information acquired when second state detection that is based on the measurement process which is executed after the measurement process is executed, using the communication means, control to transmit to the power receiving apparatus of a signal including information regarding state detection results related to the first or second state detection and a signal including information related to a request to execute the measurement process again.

2. The power transmitting apparatus according to claim 1, wherein the control means controls to transmit to the power receiving apparatus of a signal including first information indicating state detection results and a signal including second information for the power receiving apparatus to request the power transmitting apparatus to execute the measurement process again, in a case where it is determined that there is a possibility of a state abnormality related to the power transmitting apparatus when the state detection is executed, using the communication means, and controls to execute the measurement process again, in a ca where the communication means receives an execution request requesting the execution of the measurement process again from the power receiving apparatus,.

3. The power transmitting apparatus according to claim 2, wherein the control means counts the number of times the execution of the measurement process again is executed, and in a case where the number of times is equal to or greater than a threshold value, control to limit power transmission using the power transmission means.

4. The power transmitting apparatus according to claim 3, wherein, in the control to limit power transmission using the power transmitting means, the control means controls the transmitted power of the power transmitting apparatus or the received power of the power receiving apparatus to be equal to or less than a predetermined value or transmits a signal requesting the power receiving apparatus to transmit a request to stop power transmission to the power transmitting apparatus.

5. The power transmitting apparatus according to any one of claims 1 to 4, wherein the control means controls to transmit to the power receiving apparatus of a signal including information requesting that the power receiving apparatus transmits to the power transmitting apparatus an execution request for requesting execution of the measurement process again, using the communication means, in a case where it is determined that there is a possibility of a state abnormality related to the power transmitting apparatus by comparing a physical quantity measured using the detection means with a threshold value.

6. The power transmitting apparatus according to any one of claims 1 to 4, wherein the control means control to transmit to the power receiving apparatus of a signal including information requesting that the power receiving apparatus transmits, to the power transmitting apparatus, an execution request for requesting execution of the measurement process again, using the communication means, in a case where, by comparing a physical quantity measured using the detection means with a threshold value, it is determined to be a state of low possibility of state abnormality related to the power transmitting apparatus or it is determined that a state in which there is a possibility of state abnormality related to the power transmitting apparatus transitions to a state in which there is little or no possibility of state abnormality, and in a case where the execution of the measurement process again has been executed in a state of high possibility of state abnormality related to the power transmitting apparatus.

7. The power transmitting apparatus according to claim 1, wherein the detection means executes a plurality of state detection methods among a state detection method that is based on a quality factor related to the power transmitting antenna, a state detection method that is based on a difference between a transmitted power value and a received power value, a state detection method that is based on an index representing attenuation of a power transmission waveform by the power transmitting means, a state detection method that is based on an index representing an electromagnetic coupling state of the power transmitting antenna and a power receiving antenna possessed by the power receiving apparatus, a state detection method that is based on a temperature of the power transmitting apparatus or the power receiving apparatus, and a state detection method that is based on a current flowing through the power transmitting antenna or the power receiving antenna.

8. The power transmitting apparatus according to claim 7, wherein the control means controls transmit to the power receiving apparatus of a signal including information requesting that the power receiving apparatus transmits, to the power transmitting apparatus, an execution request for requesting execution of the measurement process again, using the communication means, after executing any one of the state detection methods and transmitting, using the communication means, a signal including information regarding the state detection results to the power receiving apparatus.

9. A power receiving apparatus comprising:

   a power receiving means for wirelessly receiving power from the power transmitting apparatus according to claim 1 using a power receiving antenna;
   a communication means for communicating with the power transmitting apparatus; and
   a control means for controlling the power receiving means.

10. The power receiving apparatus according to claim 9, wherein the control means controls to transmit to the power transmitting apparatus of an execution request requesting the power transmitting apparatus to execute the measurement process again, using the communication means,, in a case where the communication means receives a signal including information regarding the state detection results and a signal including information regarding an execution request of the measurement process again.

11. A wireless power transfer system including a power transmitting apparatus and a power receiving apparatus, wherein

   the power transmitting apparatus includes:

      a power transmitting means for wirelessly transferring power to the power receiving apparatus using a power transmitting antenna;
      a first communication means for communicating with the power receiving apparatus;
      a detection means for executing a measurement process for a physical quantity related to the power transmitting apparatus and executing state detection of the power transmitting apparatus; and
      a first control means for controlling the power transmitting means and executing control related to the measurement process,
      the power receiving apparatus includes:

      a power receiving means for wirelessly receiving power from the power transmitting apparatus using a power receiving antenna;
      a second communication means for communicating with the power transmitting apparatus; and
      a second control means for controlling the power receiving means,
      the first control means executes, in a case where the power receiving apparatus determines to request the power transmitting apparatus to execute a measurement process again from information acquired when first state detection that is based on the measurement process is executed and information acquired when second state detection that is based on the measurement process which is executed after the measurement process is executed, using the first communication means, control to transmit to the power receiving apparatus of a signal including information regarding state detection results related to the first or second state detection and a signal including information related to a request to execute the measurement process again, and

the second control means executes, in a case where the communication means receives a signal including information regarding the state detection results and a signal including information regarding an execution request of the measurement process again, using the second communication means, control to transmit to the power transmitting apparatus of an execution request requesting the power transmitting apparatus to execute the measurement process again.

12. A control method executed in a power transmitting apparatus which wirelessly transfers power to a power receiving apparatus, the control method for the power transmitting apparatus, comprising:

a step of wirelessly transferring, by a power transmitting means, power to the power receiving apparatus using a power transmitting antenna;
a step of communicating, by a communication means, with the power receiving apparatus;
a detection step of executing a measurement process for a physical quantity related to the power transmitting apparatus and executing, by a detection means, state detection of the power transmitting apparatus; and
a control step of executing, by a control means, control of the power transmitting means and control related to the measurement process,
wherein, in the control step, the control means controls, in a case wherethe power receiving apparatus determines to request the power transmitting apparatus to execute a measurement process again from information acquired when first state detection that is based on the measurement process is executed and information acquired when second state detection that is based on the measurement process which is executed after the measurement process is executed, using the communication means, transmission to the power receiving apparatus of a signal including information regarding state detection results related to the first or second state detection and transmission to the power receiving apparatus of a signal including information related to a request to execute the measurement process again.

13. A storage medium which stores a computer program configured to cause a computer of a power transmitting apparatus which wirelessly transfers power to a power receiving apparatus to execute each of the following steps, the steps comprising:

a step of wirelessly transferring, by a power transmitting means, power to the power receiving apparatus using a power transmitting antenna;
a step of communicating, by a communication means, with the power receiving apparatus;
a detection step of executing a measurement process for a physical quantity related to the power transmitting apparatus and executing, by a detection means, state detection of the power transmitting apparatus; and
a control step of executing, by a control means, control of the power transmitting means and control related to the measurement process,
wherein, in the control step, the control is executed so that, in a case the power receiving apparatus determines to request the power transmitting apparatus to execute a measurement process again from information acquired when first state detection that is based on the measurement process is executed and information acquired when second state detection that is based on the measurement process which is executed after the measurement process is executed, using the communication means, transmission to the power receiving apparatus of a signal including information regarding state detection results related to the first or second state detection and transmission to the power receiving apparatus of a signal including information related to a request to execute the measurement process again are executed.

# FIG. 1

POWER-RECEIVING DEVICE — 200

400

CHARGING STAND — 300

POWER-TRANSMITTING DEVICE — 100

FIG. 2

POWER-TRANSMITTING DEVICE  100

POWER SUPPLY UNIT  102

POWER-TRANSMITTING UNIT  103

107

105

108

MEMORY  106

CONTROL UNIT  101

FIRST COMMUNICATION UNIT  104

UI UNIT  110

SECOND COMMUNICATION UNIT  109

FIG. 3

EP 4 629 480 A1

## FIG. 4

FIG. 5A

FIG. 5B

FIG. 6

## FIG. 7

START

WAIT FOR POWER-RECEIVING DEVICE TO BE PLACED
(Selection PHASE, Ping PHASE) ~S1201

ACQUIRE (RECEIVE) IDENTIFICATION INFORMATION
FROM POWER-RECEIVING DEVICE
(I&C PHASE) ~S1202

DETERMINE GP THROUGH NEGOTIATION BETWEEN
POWER-TRANSMITTING DEVICE
AND POWER-RECEIVING DEVICE (Negotiation PHASE) ~S1203

CARRY OUT CALIBRATION
(Calibration PHASE) ~S1204

TRANSMIT POWER UNTIL BATTERY IS FULLY CHARGED
WITH ELECTRICITY
(Power Transfer PHASE) ~S1205

END

# FIG. 8

START

WAIT FOR SUBJECT DEVICE TO BE PLACED ON
POWER-TRANSMITTING DEVICE
(Selection PHASE, Ping PHASE) — S1301

TRANSMIT IDENTIFICATION INFORMATION TO
POWER-TRANSMITTING DEVICE
(I&C PHASE) — S1302

DETERMINE GP THROUGH NEGOTIATION BETWEEN
POWER-RECEIVING DEVICE AND POWER-
TRANSMITTING DEVICE (Negotiation PHASE) — S1303

CARRY OUT CALIBRATION
(Calibration PHASE) — S1304

RECEIVE POWER UNTIL BATTERY IS FULLY CHARGED
WITH ELECTRICITY
(Power Transfer PHASE) — S1305

END

FIG. 9

$T_0$

600

601 $(T_1, A_1)$

602 $(T_2, A_2)$

VOLTAGE VALUE OR
CURRENT VALUE

TIME

# FIG. 10

START TRANSMITTING POWER

RECEIVE FOREIGN OBJECT DETECTION EXECUTION REQUEST PACKET

STOP TRANSMITTING POWER
START TRANSMITTING POWER AGAIN

RECEIVE FOREIGN OBJECT DETECTION EXECUTION REQUEST PACKET

STOP TRANSMITTING POWER
START TRANSMITTING POWER AGAIN

VOLTAGE VALUE OR CURRENT VALUE

COMMUNICATION PROHIBITION PERIOD

POWER TRANSMISSION PERIOD (NORMAL CONDITION)

PREPARATION PERIOD

TRANSMITTED ELECTRIC POWER CONTROL PERIOD

COMMUNICATION PROHIBITION PERIOD

POWER TRANSMISSION PERIOD (NORMAL CONDITION)

PREPARATION PERIOD

TRANSMITTED ELECTRIC POWER CONTROL PERIOD

COMMUNICATION PROHIBITION PERIOD

POWER TRANSMISSION PERIOD (NORMAL CONDITION)

**FIG. 11**

FIG. 12A

FIG. 12B

FIG. 13

# FIG. 14

START — S1401

TURN ON POWER SUPPLY — S1402

DETECT POWER-RECEIVING DEVICE — S1403

START TRANSMITTING POWER — S1404

S1405 IS STATE DETECTION METHOD EXECUTION REQUEST PACKET RECEIVED FROM POWER-RECEIVING DEVICE? — NO

YES

EXECUTE STATE DETECTION METHOD — S1406

S1407 IS THERE POSSIBILITY OF STATE ABNORMALITY? — NO

YES

B

TRANSMIT ATN — S1408

S1409 IS DSR/poll Data Packet RECEIVED? — NO

YES

TRANSMIT STATE DETECTION RESULT PACKET — S1410

TRANSMIT RECAL PROCESS REQUEST PACKET — S1411

RECEIVE RECAL PROCESSING EXECUTION REQUEST PACKET — S1412

EXECUTE RECAL PROCESS — S1413

INCREASE VALUE OF VARIABLE A OF COUNTER BY 1 — S1414

S1415 IS VALUE OF VARIABLE A OF COUNTER PRESCRIBED NUMBER OF TIMES OR MORE? — NO

YES

CARRY OUT CONTROL TO RECTRICT TRANSMITTED ELECTRIC POWER — S1416

END — S1417

FIG. 15

START —— S1501

TURN ON POWER SUPPLY —— S1502

PLACE POWER-RECEIVING DEVICE ON POWER-TRANSMITTING DEVICE —— S1503

START TRANSMITTING POWER —— S1504

IS POWER-TRANSMITTING DEVICE REQUESTED TO EXECUTE STATE DETECTION METHOD? —— S1505 — NO

YES

TRANSMIT STATE DETECTION METHOD EXECUTION REQUEST PACKET —— S1506

IS ATN RECEIVED FROM POWER-TRANSMITTING DEVICE? —— S1507 — NO

YES

TRANSMIT DSR/poll Data Packet —— S1508

IS STATE DETECTION RESULT PACKET RECEIVED FROM POWER-TRANSMITTING DEVICE? —— S1509 — NO

YES

IS RECAL PROCESS REQUEST PACKET RECEIVED FROM POWER-TRANSMITTING DEVICE? —— S1510 — NO

YES

TRANSMIT RECAL PROCESS EXECUTION REQUEST PACKET REQUESTING EXECUTION OF RECAL PROCESS —— S1511

IS PACKET FOR CONTROLLING RESTRICTION OF TRANSMITTED ELECTRIC POWER RECEIVED? —— S1512 — NO

YES

CARRY OUT CONTROL TO RECTRICT TRANSMITTED ELECTRIC POWER —— S1513

END —— S1514

## FIG. 16

TX                                      RX

POWER SUPPLY ON ●

POWER SUPPLY ON ●                                PLACEMENT ●

| Selection PHASE, Ping PHASE |
|---|

● DETECT PLACEMENT OF OBJECT

| START TRANSMITTING POWER/START TRANSMITTING POWER |
|---|

DETERMINE THAT EXECUTION OF
STATE DETECTION METHOD IS REQUESTED ●

STATE DETECTION METHOD EXECUTION REQUEST PACKET

● EXECUTE STATE DETECTION METHOD

● DETERMINE THAT THERE IS POSSIBILITY OF STATE ABNORMALITY

ATN

DSR/Poll Data Packet

STATE DETECTION RESULT PACKET

RECAL PROCESS REQUEST PACKET

RECAL PROCESS EXECUTION REQUEST PACKET

● EXECUTE RECAL PROCESS

● COUNT NUMBER OF TIMES RECAL PROCESS IS EXECUTED
INCREASE VARIABLE A OF COUNTER BY 1

● DETERMINE THAT VARIABLE A OF COUNTER IS PRESCRIBED
NUMBER OF TIMES OR MORE

● DETERMINE THAT TRANSMITTED ELECTRIC POWER IS RESTRICTED/
RECEIVED ELECTRIC POWER IS RESTRICTED

PACKET FOR CARRYING OUT RESTRICTION OF TRANSMITTED ELECTRIC POWER/
CONTROLLING OF RECEIVED ELECTRIC POWER

| EXECUTE PROCESS FOR RESTRICTING TRANSMITTED ELECTRIC POWER/<br>RECEIVED ELECTRIC POWER |
|---|

# FIG. 17

START — S1401

TURN ON POWER SUPPLY — S1402

DETECT POWER-RECEIVING DEVICE — S1403

START TRANSMITTING POWER — S1404

IS STATE DETECTION METHOD EXECUTION REQUEST PACKET RECEIVED FROM POWER-RECEIVING DEVICE? — S1405

NO

YES

EXECUTE STATE DETECTION METHOD — S1406

IS THERE POSSIBILITY OF STATE ABNORMALITY? — S1407

NO

YES

TRANSMIT ATN — S1408

IS DSR/poll Data Packet RECEIVED? — S1409

NO

YES

TRANSMIT STATE DETECTION RESULT PACKET — S1410

TRANSMIT RECAL PROCESS REQUEST PACKET — S1411

RECEIVE RECAL PROCESSING EXECUTION REQUEST PACKET — S1412

EXECUTE RECAL PROCESS — S1413

A

# FIG. 18

```
                              ┌───┐
                              │ A │
                              └─┬─┘
                                ▼
        ┌──────────────────────────────────────────────────┐
        │                    ╱◆◆╲      ╭─S1801               │
        │   NO         ╱  IS STATE DETECTION  ╲              │
        ├◄───────────◄   METHOD EXECUTION REQUEST PACKET ╲   │
        │              ╲  RECEIVED FROM POWER-RECEIVING ╱    │
        │               ╲      DEVICE?    ╱                  │
        │                    ╲◆◆╱                            │
        │                      │ YES                         │
        │                      ▼                             │
        │          ┌──────────────────────────┐  ╭─S1802     │
        │          │ EXECUTE STATE DETECTION METHOD │        │
        │          └──────────────────────────┘             │
        │                      │                             │
        │                      ▼                             │
        │    YES             ╱◆◆╲      ╭─S1803               │
        ◄──────────────◄  IS THERE POSSIBILITY OF  ╲         │
  ┌───┐               ╲  STATE ABNORMALITY?   ╱               │
  │ B │                    ╲◆◆╱                              │
  └───┘                      │ NO                            │
        │                      ▼                             │
        │                    ╱◆◆╲      ╭─S1804               │
        │              ╱  HAS RECAL PROCSS   ╲     NO        │
        │             ╱ BEEN PREVIOUSLY EXECUTED IN ╲────────┤
        │             ╲ STATE OF HIGH POSSIBILITY OF╱        │
        │              ╲   STATE ABNORMALITY? ╱              │
        │                    ╲◆◆╱                            │
        │                      │ YES                         │
        │                      ▼                             │
        │                    ╱◆◆╲      ╭─S1805     NO        │
        │              ╱  IS "STATE 5" DETECTED? ╲───────────┤
        │                    ╲◆◆╱                            │
        │                      │ YES                         │
        │                      ▼                             │
        │          ┌──────────────────────────┐  ╭─S1806     │
        │          │       TRANSMIT ATN        │             │
        │          └──────────────────────────┘             │
```

## FIG. 19

TX                                                                    RX

                                                POWER SUPPLY ON ●

POWER SUPPLY ON ●                               PLACEMENT ●

| Selection PHASE, Ping PHASE |
|---|

DETECT PLACEMENT OF OBJECT ●

| START TRANSMITTING POWER/START TRANSMITTING POWER |
|---|

DETERMINE THAT EXECUTION OF STATE DETECTION METHOD IS REQUESTED ●

STATE DETECTION METHOD EXECUTION REQUEST PACKET

● EXECUTE STATE DETECTION METHOD

● DETERMINE THAT THERE IS POSSIBILITY OF STATE ABNORMALITY

ATN

DSR/Poll Data Packet

STATE DETECTION RESULT PACKET

RECAL PROCESS REQUEST PACKET

RECAL PROCESS EXECUTION REQUEST PACKET

● EXECUTE RECAL PROCESS

⋮

DETERMINE THAT EXECUTION OF STATE DETECTION METHOD IS REQUESTED ●

STATE DETECTION METHOD EXECUTION REQUEST PACKET

● EXECUTE STATE DETECTION METHOD

● DETERMINE THAT POSSIBILITY OF STATE ABNORMALITY IS LOW

● DETERMINE THAT RECAL PROCSS HAS BEEN PREVIOUSLY EXECUTED IN STATE OF HIGH POSSIBILITY OF STATE ABNORMALITY?

● DETECT "STATE 5"                    ATN

DSR/Poll Data Packet

STATE DETECTION RESULT PACKET

RECAL PROCESS REQUEST PACKET

RECAL PROCESS EXECUTION REQUEST PACKET

● EXECUTE RECAL PROCESS

## INTERNATIONAL SEARCH REPORT

| International application No. |
| --- |
| **PCT/JP2023/040995** |

| A. | CLASSIFICATION OF SUBJECT MATTER |
| --- | --- |

*H02J 50/60*(2016.01)i; *H02J 50/12*(2016.01)i; *H02J 50/80*(2016.01)i
FI:  H02J50/60; H02J50/12; H02J50/80

According to International Patent Classification (IPC) or to both national classification and IPC

| B. | FIELDS SEARCHED |
| --- | --- |

Minimum documentation searched (classification system followed by classification symbols)

H02J50/60; H02J50/12; H02J50/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-164282 A (CANON KK) 11 October 2021 (2021-10-11) paragraphs [0010]-[0055], fig. 1-7 | 1-13 |
| A | JP 2014-007838 A (SONY CORP) 16 January 2014 (2014-01-16) paragraphs [0147]-[0226], fig. 5-8 | 1-13 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 January 2024** | **06 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/040995**

| Patent document cited in search report | | | Publication date (day/month/year) | Patent family member(s) | | | Publication date (day/month/year) |
|---|---|---|---|---|---|---|---|
| JP | 2021-164282 | A | 11 October 2021 | US | 2023/0015212 | A1 | |
| | | | | paragraphs [0023]-[0079], fig. 1-7 | | | |
| | | | | EP | 4131722 | A1 | |
| | | | | CN | 115398773 | A | |
| | | | | KR | 10-2022-0154756 | A | |
| JP | 2014-007838 | A | 16 January 2014 | US | 2015/0171633 | A1 | |
| | | | | paragraphs [0181]-[0261], fig. 5-8 | | | |
| | | | | CN | 104365028 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017038509 A
- JP 2022191548 A